(19) Europäisches Patentamt
European Patent Office
Office européen des brevets

(11) **EP 2 797 327 A1**

(12) **EUROPEAN PATENT APPLICATION**
published in accordance with Art. 153(4) EPC

(43) Date of publication:
**29.10.2014 Bulletin 2014/44**

(51) Int Cl.:
***H04N 13/00*** (2006.01)   ***H04N 7/32*** (0000.00)

(21) Application number: **12849923.3**

(22) Date of filing: **05.10.2012**

(86) International application number:
**PCT/JP2012/076045**

(87) International publication number:
**WO 2013/073316 (23.05.2013 Gazette 2013/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2011   JP 2011248176**

(71) Applicant: **National Institute of Information and Communications Technology
Koganei-shi,
Tokyo 184-8795 (JP)**

(72) Inventors:
• **SENOH, Takanori
  Koganei-shi
  Tokyo 184-8795 (JP)**
• **ICHIHASHI, Yasuyuki
  Koganei-shi
  Tokyo 184-8795 (JP)**

• **SASAKI, Hisayuki
  Koganei-shi
  Tokyo 184-8795 (JP)**
• **YAMAMOTO, Kenji
  Koganei-shi
  Tokyo 184-8795 (JP)**
• **OI, Ryutaro
  Koganei-shi
  Tokyo 184-8795 (JP)**
• **KURITA, Taiichiro
  Shibuya-ku
  Tokyo 150-0047 (JP)**

(74) Representative: **Reichert & Lindner
Partnerschaft Patentanwälte
Bismarckplatz 8
93047 Regensburg (DE)**

(54) **STEREOSCOPIC VIDEO CODING DEVICE, STEREOSCOPIC VIDEO DECODING DEVICE, STEREOSCOPIC VIDEO CODING METHOD, STEREOSCOPIC VIDEO DECODING METHOD, STEREOSCOPIC VIDEO CODING PROGRAM, AND STEREOSCOPIC VIDEO DECODING PROGRAM**

(57)   A stereoscopic video coding device (1) inputs therein a reference viewpoint video (C) and a left viewpoint video (L), as well as a reference viewpoint depth map (Cd) and a left viewpoint depth map (Ld) which are maps showing information on depth values of the respective viewpoint videos. A depth map synthesis unit (12) of the stereoscopic video coding device (1) creates a left synthesized depth map (Md) at an intermediate viewpoint from the two depth maps. A projected video prediction unit (15) of the stereoscopic video coding device extracts, from the left viewpoint video (L), a pixel in a pixel area to constitute an occlusion hole when the reference viewpoint video is projected to another viewpoint and creates a left residual video (Lv). The stereoscopic video coding device encodes and transmits each of the reference viewpoint video (C), the left synthesized depth map (Md), and the left residual video (Lv).

FIG.2

**Description**

TECHNICAL FIELD

The present invention relates to: a stereoscopic video encoding device, a stereoscopic video encoding method, and a stereoscopic video encoding program, each of which encodes a stereoscopic video; and a stereoscopic video decoding device, a stereoscopic video decoding method, and a stereoscopic video decoding program, each of which decodes the encoded stereoscopic video.

BACKGROUND ART

Stereoscopic televisions and movies with binocular vision have become popular these years. Such televisions and movies, however, realize not all of factors required for stereoscopy. Viewers may feel uncomfortable due to absence of motion parallax or may have eyestrain or the like because of wearing special glasses. There is thus a need for putting into practical use a stereoscopic video with naked eye vision closer to natural vision.

The naked-eye stereoscopic video can be realized by a multi-view video. The multi-view video requires, however, transmitting and storing a large number of viewpoint videos, resulting in large quantity of data, which makes it difficult to put into practical use. Thus, a method of restoring a multi-view video by interpolating thinned-out viewpoint videos has been known in which: the number of viewpoints of a viewpoint video is thinned out by adding, as information on a depth of an object, a depth map which is a map of parallax between a pixel of a video at one viewpoint and that at another viewpoint of a multi-view video (an amount of displacement of positions of a pixel for the same object point in different viewpoint videos); and a limited number of viewpoint videos obtained are transmitted, stored, and projected using the depth map.

The above-described method of restoring a multi-view video using small numbers of the viewpoint videos and depth maps is disclosed in, for example, Japanese Laid-Open Patent Application, Publication No. 2010-157821 (to be referred to as Patent Document 1 hereinafter). Patent Document 1 discloses a method of encoding and decoding a multi-view video (an image signal) and a depth map corresponding thereto (a depth signal). An image encoding apparatus disclosed in Patent Document 1 is herein described with reference to FIG. 35. As illustrated in FIG. 35, the image encoding apparatus of Patent Document 1 includes an encoding management unit 101, an image signal encoding unit 107, a depth signal encoding unit 108, a unitization portion 109, and a parameter information encoding unit 110. In the image encoding apparatus, the image signal encoding unit 107 performs a predictive encoding between viewpoint videos (image signals), and the depth signal encoding unit 108 similarly performs a predictive encoding between one or more viewpoint depth maps (depth signals).

RELATED ART DOCUMENT

PATENT DOCUMENT

Patent Document 1: Japanese Laid-Open Patent Application, Publication No. 2010-157821

SUMMARY OF THE INVENTION

PROBLEM TO BE SOLVED BY THE INVENTION

In the method described in Patent Document 1, all the encoded viewpoint videos each have a size same as that of an original one. A multi-view stereoscopic display currently being put into practical use, however, uses a display having the number of pixels same as that of a conventionally widely available display, and a viewpoint video is displayed with the number of pixels thinned to one out of the total number of viewpoints thereof so as to hold down manufacturing cost. This means that a large part of encoded and transmitted pixel data is discarded, resulting in a low encoding efficiency. Patent Document 1 also describes a method of synthesizing thinned-out viewpoint videos using depth maps corresponding to the transmitted viewpoint videos. This requires, however, encoding and transmitting depth maps as many as the number of viewpoints, still resulting in a low encoding efficiency.

In a method disclosed in Patent Document 1, a multi-view video and a depth map are individually subjected to predictive encoding between different viewpoints. In a conventional method of predictive encoding between different viewpoints, however: positions of a pair of pixels corresponding to each other in different viewpoint videos are searched for; an amount of displacement between the pixel positions is extracted as a parallax vector; and the predictive encoding and decoding between the viewpoints is performed using the extracted parallax vector. This takes long time to search for the parallax vector and decreases accuracy of prediction along with a slow rate of encoding and decoding.

The present invention has been made in light of the above-described problems and in an attempt to provide: a stereoscopic video encoding device, a stereoscopic video encoding method, and a stereoscopic video encoding program, each of which efficiently encodes and transmits a stereoscopic video; and a stereoscopic video decoding device, a stereoscopic video decoding method, and a stereoscopic video decoding program, each of which decodes the encoded stereoscopic video.

MEANS FOR SOLVING THE PROBLEM

A stereoscopic video encoding device according to a first aspect of the invention encodes a multi-view video and a depth map which is a map showing information on a depth value for each pixel, in which the depth value represents a parallax between different viewpoints of the multi-view video. The stereoscopic video encoding device is configured to include a reference viewpoint video encoding unit, an intermediate viewpoint depth map synthesis unit, a depth map encoding unit, a depth map decoding unit, a projected video prediction unit, and a residual video encoding unit. The projected video prediction unit includes an occlusion hole detection unit and a residual video segmentation unit.

With this configuration, the reference viewpoint video encoding unit of the stereoscopic video encoding device encodes a reference viewpoint video which is a video at a reference viewpoint of the multi-view video and outputs the encoded reference viewpoint video as a reference viewpoint video bit stream. The intermediate viewpoint depth map synthesis unit of the stereoscopic video encoding device creates an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint. The depth map encoding unit of the stereoscopic video encoding device encodes the intermediate viewpoint depth map and outputs the encoded intermediate viewpoint depth map as a depth map bit stream.

This reduces an amount of data on a depth map encoded by half in a case where two original depth maps are present.

The depth map decoding unit of the stereoscopic video encoding device creates a decoded intermediate viewpoint depth map by decoding the encoded intermediate viewpoint depth map. The projected video prediction unit of the stereoscopic video encoding device creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map. Herein, so as to create a residual video, an occlusion hole detection unit of the stereoscopic video encoding device detects a pixel to become an occlusion hole when the reference viewpoint video is projected to the auxiliary viewpoint, using the decoded intermediate viewpoint depth map, and a residual video segmentation unit of the stereoscopic video encoding device creates the residual video by segmenting, from the auxiliary viewpoint video, the pixel to become an occlusion hole detected by the occlusion hole detection unit. Herein, what the stereoscopic video encoding device uses is not an intermediate viewpoint depth map before subjected to encoding but an intermediate viewpoint depth map already having been encoded and decoded. If a depth map is encoded at a high compression ratio, in particular, the depth map after subjected to decoding may contain not a few errors compared to those in its original depth map. Therefore, a depth map used herein is configured to be the same as a depth map at an intermediate viewpoint which is used when a multi-view video is created by decoding the above-described bit stream by the stereoscopic video decoding device. This makes it possible to accurately detect a pixel to become an occlusion hole. The residual video encoding unit of the stereoscopic video encoding device then encodes the residual video and outputs the encoded residual video as a residual video bit stream.

This reduces an amount of data encoded, because only data segmented as a residual video of all data on the auxiliary viewpoint video is subjected to encoding.

A stereoscopic video encoding device according to a second aspect of the invention is configured that, in the stereoscopic video encoding device according to the first aspect, the occlusion hole detection unit includes an auxiliary viewpoint projection unit and a hole pixel detection unit.

With this configuration, the auxiliary viewpoint projection unit of the stereoscopic video encoding device creates an auxiliary viewpoint projected depth map which is a depth map at the auxiliary viewpoint by projecting the decoded intermediate viewpoint depth map to the auxiliary viewpoint. The hole pixel detection unit of the stereoscopic video encoding device compares, for each pixel of the auxiliary viewpoint projected depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest as a pixel to become an occlusion hole. That is, the stereoscopic video encoding device detects a pixel to become an occlusion hole using a depth map at an auxiliary viewpoint far away from the reference viewpoint.

This makes it possible for the stereoscopic video encoding device to detect a pixel area which is predicted to become the occlusion hole, with less overlooking.

A stereoscopic video encoding device according to a third aspect of the invention is configured that, in the stereoscopic video encoding device according to the second aspect, the occlusion hole detection unit includes a hole mask expansion unit of that expands a hole mask indicating a position of a pixel constituting the occlusion hole.

With this configuration, the occlusion hole detection unit expands a hole mask which indicates a position of the pixel detected by the hole pixel detection unit, by a prescribed number of pixels. The residual video segmentation unit of the stereoscopic video encoding device creates the residual video by segmenting a pixel contained in the hole mask (a first hole mask) expanded by the hole mask expansion unit, from the auxiliary viewpoint video.

This makes it possible for the stereoscopic video encoding device to absorb overlooking of a pixel to become an occlusion hole due to not a few errors in a decoded depth map compared to those in its original depth map, which may be contained especially when the depth map is encoded using an encoding method at a high compression ratio.

A stereoscopic video encoding device according to a fourth aspect of the invention is configured that, in the stereoscopic video encoding device according to the second or third aspect, the occlusion hole detection unit further includes a second hole pixel detection unit, a second auxiliary viewpoint projection unit that projects a detected hole position to an auxiliary viewpoint, and a hole mask synthesis unit that synthesizes a plurality of created hole masks.

With this configuration, the second hole pixel detection unit of the stereoscopic video encoding device compares, for each pixel of the decoded intermediate viewpoint depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest as a pixel to become an occlusion hole, to thereby create a hole mask. The second auxiliary viewpoint projection unit of the stereoscopic video encoding device then projects the hole mask created by the second hole pixel detection unit and thereby creates a hole mask (a second hole mask). The hole mask synthesis unit of the stereoscopic video encoding device then determines a logical add of a result detected by the hole pixel detection unit and the result detected by the second hole pixel detection unit obtained by projection by the second auxiliary viewpoint projection unit, as a result detected by the occlusion hole detection unit.

That is, the stereoscopic video encoding device detects an occlusion hole using an intermediate viewpoint depth map which is a depth map at the intermediate viewpoint, in addition to the detection of an occlusion hole using a depth map at the auxiliary viewpoint, and thus detects a pixel to become an occlusion hole more appropriately.

A stereoscopic video encoding device according to a fifth aspect of the invention is configured that, in the stereoscopic video encoding device according to the fourth aspect, the occlusion hole detection unit further includes a specified viewpoint projection unit, a third hole pixel detection unit, and a third auxiliary viewpoint projection unit.

With this configuration, the specified viewpoint projection unit of the stereoscopic video encoding device creates a specified viewpoint depth map which is a depth map at an arbitrary specified viewpoint by projecting the decoded intermediate viewpoint depth map to the specified viewpoint position. The third hole pixel detection unit of the stereoscopic video encoding device compares, for each pixel of the specified viewpoint depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest, as a pixel to become an occlusion hole, to thereby creates a hole mask. The third auxiliary viewpoint projection unit of the stereoscopic video encoding device then projects the hole mask created by the third hole pixel detection unit and creates a hole mask (a third hole mask). The hole mask synthesis unit of the stereoscopic video encoding device determines a logical add of the result detected by the hole pixel detection unit, the result detected by the second hole pixel detection unit obtained by the projection by the second auxiliary viewpoint projection unit, and the result detected by the third hole pixel detection unit obtained by the projection by the third auxiliary viewpoint projection unit, as a result of detected by the occlusion detection by the detection unit.

That is, the stereoscopic video encoding device detects an occlusion hole using a depth map at a specified viewpoint when the multi-view video is created by decoding a decoded data on a decoding side, in addition of the detection of an occlusion hole using the depth map at the auxiliary viewpoint, and thereby detects an occlusion hole more appropriately.

A stereoscopic video encoding device according to a sixth aspect of the invention is configured that the stereoscopic video encoding device according to any one of the first to fifth aspects further includes a depth map framing unit, a depth map separation unit, and a residual video framing unit.

With this configuration, the depth map framing unit of the stereoscopic video encoding device creates a framed depth map by reducing and joining a plurality of the intermediate viewpoint depth maps between the reference viewpoint and a plurality of the auxiliary viewpoints of the multi-view video, and framing the reduced and joined depth maps into a single framed image. The depth map separation unit of the stereoscopic video encoding device creates a plurality of the intermediate viewpoint depth maps each having a size same as that of the reference viewpoint video by separating a plurality of the framed reduced intermediate viewpoint depth maps from the framed depth map. The residual video framing unit of the stereoscopic video encoding device creates a framed residual video by reducing and joining a plurality of the residual videos from the reference viewpoint video and a plurality of the auxiliary viewpoints of the multi-view video, and framing the reduced and joined residual videos into a single framed image.

Herein, the intermediate viewpoint depth map synthesis unit of the stereoscopic video encoding device creates a plurality of the intermediate viewpoint depth maps at respective intermediate viewpoints between the reference viewpoint and each of a plurality of the auxiliary viewpoints. The depth map framing unit of the stereoscopic video encoding device creates the framed depth map by reducing and joining a plurality of the intermediate viewpoint depth maps created by the intermediate viewpoint depth map synthesis unit. The depth map encoding unit of the stereoscopic video encoding device encodes the framed depth map and outputs the encoded framed depth map as the depth map bit stream.

This makes it possible for the stereoscopic video encoding device to perform encoding with a reduced amount of data on a plurality of the intermediate viewpoint depth maps created between a plurality of pairs of viewpoints.

The depth map decoding unit of the stereoscopic video encoding device creates a decoded framed depth map by decoding the framed depth map encoded by the depth map encoding unit. The depth map separation unit of the stereoscopic video encoding device creates the decoded intermediate viewpoint depth maps each having a size same as that of the reference viewpoint video, by separating a plurality of the reduced intermediate viewpoint depth maps from the decoded framed depth map. The projected video prediction unit of the stereoscopic video encoding device that creates the residual video from the auxiliary viewpoint video at the auxiliary viewpoint, using the decoded intermediate viewpoint depth map created by the depth map separation unit. The residual video framing unit of the stereoscopic video encoding device creates the framed residual video by reducing and joining a plurality of the residual videos created by the projected video prediction unit. The residual video encoding unit of the stereoscopic video encoding device encodes the framed residual video and outputs the encoded framed residual video as the residual video bit stream.

This makes it possible for the stereoscopic video encoding device to perform encoding with a reduced amount of data on a plurality of the residual videos created between a plurality of pairs of viewpoints.

The stereoscopic video decoding device according to a seventh aspect of the invention recreates a multi-view video by decoding a bit stream in which the multi-view video and a depth map which is a map showing information on a depth value for each pixel have been encoded, the depth value representing a parallax between different viewpoints of the multi-view video. The stereoscopic video decoding device is configured to include a reference viewpoint video decoding unit, a depth map decoding unit, a residual video decoding unit, a depth map projection unit, and a projected video synthesis unit. The projected video synthesis unit includes a reference viewpoint video projection unit and a residual video projection unit.

With this configuration, the reference viewpoint video decoding unit of the stereoscopic video decoding device creates a decoded reference viewpoint video by decoding a reference viewpoint video bit stream in which a reference viewpoint video which is a video constituting the multi-view video at a reference viewpoint is encoded. The depth map decoding unit of the stereoscopic video decoding device creates a decoded intermediate viewpoint depth map by decoding a depth map bit stream in which an intermediate viewpoint depth map is encoded, the intermediate viewpoint depth map being a depth map at an intermediate viewpoint between the reference viewpoint and an auxiliary viewpoint which is away from the reference viewpoint. The residual video decoding unit of the stereoscopic video decoding device creates a decoded residual video by decoding a residual video bit stream in which a residual video is encoded, the residual video being, when the reference viewpoint video is projected to a viewpoint other than the reference viewpoint, created by segmenting, from the auxiliary viewpoint video, a pixel to become an occlusion hole which constitutes a pixel area in which the pixel is not projectable. The depth map projection unit of the stereoscopic video decoding device creates a specified viewpoint depth map which is a depth map at a specified viewpoint which is a viewpoint specified as one of the viewpoints of the multi-view video from outside by projecting the decoded intermediate viewpoint depth map to the specified viewpoint. The projected video synthesis unit of the stereoscopic video decoding device creates a specified viewpoint video which is a video at the specified viewpoint by synthesizing the decoded reference viewpoint video and a video in which the decoded residual video projected to the specified viewpoint, using the specified viewpoint depth map. The reference viewpoint video projection unit of the stereoscopic video decoding device detects a pixel to become an occlusion hole which constitutes a pixel area in which, when the decoded reference viewpoint video is projected to the specified viewpoint, the pixel is not projectable, using the specified viewpoint depth map, and, on the other hand, sets a pixel not to become the occlusion hole, as a pixel of the specified viewpoint video, when the decoded reference viewpoint video is projected to the specified viewpoint, using the specified viewpoint depth map. The residual video projection unit of the stereoscopic video decoding device sets the pixel to become the occlusion hole, as a pixel of the specified viewpoint video, by projecting the decoded residual video to the specified viewpoint using the specified viewpoint depth map.

This makes it possible for the stereoscopic video decoding device to create a video at an arbitrary viewpoint using the reference viewpoint video, a depth map at an intermediate viewpoint between the reference viewpoint and the auxiliary viewpoint, and a residual video segmented from the auxiliary viewpoint video.

The stereoscopic video decoding device according to an eighth aspect of the invention is configured that, in the stereoscopic video decoding device according to the seventh aspect, the reference viewpoint video projection unit includes a hole pixel detection unit.

With this configuration, the hole pixel detection unit of the stereoscopic video decoding device compares, for each pixel of the specified viewpoint depth map, a depth value of a pixel of interest as a target to be determined whether or not the pixel becomes an occlusion hole, to a depth value of a pixel away from the pixel of interest toward the reference viewpoint by a prescribed number of pixels; and, if the depth value of the pixel away from the pixel of interest is larger than that of the pixel of interest by a prescribed value or more, detects the pixel of interest as a pixel to become an occlusion hole. That is, the stereoscopic video decoding device uses a depth map at a specified viewpoint at which a video is created and can thus appropriately detect a pixel to become an occlusion hole. According to a result of the detection, the stereoscopic video decoding device selects a pixel from a video created by projecting the reference viewpoint video to the specified viewpoint and a video created by projecting the residual video to the specified viewpoint and thereby creates a specified viewpoint video.

That is, using the result of detecting a pixel to become an occlusion hole using a depth map at the specified viewpoint at which a video is actually created, the stereoscopic video decoding device selects an appropriate pixel from a video created by projecting the reference viewpoint video to the specified viewpoint and a video created by projecting the residual video to the specified viewpoint and thereby creates a specified viewpoint video.

The stereoscopic video decoding device according to a ninth aspect of the invention is configured that, in the stereoscopic video decoding device according to the eighth aspect, the reference viewpoint video projection unit includes a hole mask expansion unit that expands a hole mask indicating a pixel position of an occlusion hole.

With this configuration, the hole mask expansion unit of the stereoscopic video decoding device expands an occlusion hole composed of the pixel detected by the hole pixel detection unit, by a prescribed number of pixels. The residual video projection unit of the stereoscopic video decoding device sets the pixel in the occlusion hole expanded by the hole mask expansion unit, as a pixel of the specified viewpoint video, by projecting the decoded residual video to the specified viewpoint. According to a result of expanding the hole mask detected by using the depth map at the specified viewpoint, the stereoscopic video decoding device selects a pixel from a video created by projecting the reference viewpoint video to the specified viewpoint and a video created by projecting the residual video to the specified viewpoint and thereby creates a specified viewpoint video.

This makes it possible for the stereoscopic video decoding device to absorb overlooking of a pixel to become an occlusion hole due to an error contained in the decoded intermediate viewpoint depth map, especially when the decoded intermediate viewpoint depth map is encoded using an encoding method at a high compression ratio.

The stereoscopic video decoding device according to a tenth aspect of the invention is configured that, in the stereoscopic video decoding device according to the ninth aspect, the residual video projection unit includes a hole filling processing unit.

With this configuration, the hole filling processing unit of the stereoscopic video decoding device: detects, in the specified viewpoint video, a pixel not contained in the residual video; and interpolates a pixel value of the not-contained pixel with a pixel value of a surrounding pixel.

This makes it possible for the stereoscopic video decoding device to create a specified viewpoint video without any hole.

The stereoscopic video decoding device according to an eleventh aspect of the invention is configured that the stereoscopic video decoding device according to any one of the seventh to tenth aspects further includes a depth map separation unit and a residual video separation unit.

With this configuration, the depth map separation unit of the stereoscopic video decoding device creates a plurality of the intermediate viewpoint depth maps each having a size same as that of the reference viewpoint video by separating, for each of the intermediate viewpoints, a framed depth map which is a single framed image created by reducing and joining a plurality of the intermediate viewpoint depth maps at respective intermediate viewpoints between the reference viewpoint and each of a plurality of the auxiliary viewpoints. The residual video separation unit of the stereoscopic video decoding device creates a plurality of the decoded residual videos each having a size same as that of the reference viewpoint video by separating a framed residual video which is a single framed image created by reducing and joining a plurality of the residual videos at a plurality of the auxiliary viewpoints.

Herein, the depth map decoding unit of the stereoscopic video decoding device creates a decoded framed depth map by decoding the depth map bit stream in which the framed depth map is encoded. The residual video decoding unit of the stereoscopic video decoding device creates a decoded framed residual video by decoding the residual video bit stream in which the framed residual video is encoded. The depth map separation unit of the stereoscopic video decoding device creates a plurality of the decoded intermediate viewpoint depth maps each having a size same as that of the reference viewpoint video by separating a plurality of the reduced intermediate viewpoint depth maps from the decoded framed depth map. The residual video separation unit of the stereoscopic video decoding device creates a plurality of the decoded residual videos in respective sizes thereof same as that of the reference viewpoint video by separating a plurality of the reduced residual videos from the decoded framed residual video. The depth map projection unit of the stereoscopic video decoding device creates a specified viewpoint depth map which is a depth map at the specified viewpoint by projecting, for each of a plurality of the specified viewpoints, respective decoded intermediate viewpoint depth maps to the specified viewpoints. The projected video synthesis unit of the stereoscopic video decoding device creates a specified viewpoint video which is a video at the specified viewpoint by synthesizing, for each of a plurality of the specified viewpoints, a plurality of videos in which each of the decoded reference viewpoint video and the decoded residual videos corresponding thereto are projected to the respective specified viewpoints, using the specified viewpoint depth maps.

This makes it possible for the stereoscopic video decoding device to create a video at an arbitrary viewpoint using the reference viewpoint video, a depth map in which a plurality of intermediate viewpoint depth maps are framed, and a residual video in which a plurality of residual videos are framed.

A stereoscopic video encoding method according to a twelfth aspect of the invention is a stereoscopic video encoding method encoding a multi-view video and a depth map which is a map showing information on a depth value for each pixel have been encoded, the depth value representing a parallax between different viewpoints of the multi-view video. The stereoscopic video encoding method includes, as a procedure thereof, a reference viewpoint video encoding processing step, an intermediate viewpoint depth map synthesis processing step, a depth map encoding processing step, a depth map decoding processing step, a projected video prediction processing step, and a residual video encoding processing step. The projected video prediction processing step includes an occlusion hole detection processing and a residual video segmentation processing step.

With this procedure of the stereoscopic video encoding method, the reference viewpoint video encoding processing step is encoding a reference viewpoint video which is a video at a reference viewpoint of the multi-view video and outputs the encoded reference viewpoint video as a reference viewpoint video bit stream. The intermediate viewpoint depth map synthesis processing step is creating an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint. The depth map encoding processing step is encoding the intermediate viewpoint depth map and outputting the encoded intermediate viewpoint depth map as a depth map bit stream.

This reduces an amount of data on a depth map encoded by half in a case where two original depth maps are present.

The depth map decoding processing step is creating a decoded intermediate viewpoint depth map by decoding the encoded intermediate viewpoint depth map. The projected video prediction processing step is creating a residual video by segmenting, from the auxiliary viewpoint video, a pixel which becomes an occlusion hole which constitutes a pixel area not projectable when the reference viewpoint video is projected to a viewpoint other than the reference viewpoint, using the decoded intermediate viewpoint depth map. Herein, so as to create the residual video, the occlusion hole detection processing step is detecting a pixel to become an occlusion hole when the reference viewpoint video is projected to the auxiliary viewpoint, using the decoded intermediate viewpoint depth map, and the residual video segmentation processing step of creating the residual video by segmenting, from the auxiliary viewpoint video, the pixel to become an occlusion hole detected by the occlusion hole detection unit. What is used herein is not the intermediate viewpoint depth map before subjected to encoding but the intermediate viewpoint depth map already having been encoded and decoded. If the depth map is encoded at a high compression ratio, in particular, the depth map after subjected to decoding may contain not a few errors compared to its original depth map. Therefore, the depth map used herein is configured to be the same as a depth map at an intermediate viewpoint which is used when a multi-view video is created by decoding the above-described bit stream by the stereoscopic video decoding device. This makes it possible to accurately detect a pixel to become an occlusion hole. Then, the residual video encoding processing step is encoding the residual video and outputting the encoded residual video as a residual video bit stream.

This reduces an amount of data encoded, because only data segmented as a residual video of all data on the auxiliary viewpoint video is subjected to encoding.

A stereoscopic video decoding method according to a thirteenth aspect of the invention is a stereoscopic video decoding method recreating a multi-view video by decoding a bit stream in which the multi-view video and a depth map which is a map showing information on a depth value for each pixel have been encoded, the depth value representing a parallax between different viewpoints of the multi-view video. The stereoscopic video decoding method includes, as a procedure thereof, a reference viewpoint video decoding processing step, a depth map decoding processing step, a residual video decoding processing step, a depth map projection processing step, and a projection video synthesis processing step, and the projection video synthesis processing step includes a reference viewpoint video projection processing step and a residual video projection processing step.

With this procedure of the stereoscopic video decoding method, the reference viewpoint video decoding processing step is creating a decoded reference viewpoint video by decoding a reference viewpoint video bit stream in which a reference viewpoint video which is a video constituting the multi-view video at a reference viewpoint is encoded. The depth map decoding processing step is creating a decoded intermediate viewpoint depth map by decoding a depth map bit stream in which an intermediate viewpoint depth map which is a depth map at an intermediate viewpoint between the reference viewpoint and an auxiliary viewpoint which is away from the reference viewpoint is encoded. The residual video decoding processing step is creating a decoded residual video by decoding a residual video bit stream in which a residual video is encoded which, when the reference viewpoint video is projected to a viewpoint other than the reference viewpoint, a pixel to become an occlusion hole as a pixel area in which the pixel is not projectable is segmented from the auxiliary viewpoint video. The depth map projection processing step is creating a specified viewpoint depth map which is a depth map at a specified viewpoint which is a viewpoint specified as one of the viewpoints of the multi-view video from outside by projecting the decoded intermediate viewpoint depth map to the specified viewpoint. The projected video synthesis processing step is creating a specified viewpoint video which is a video at the specified viewpoint by synthesizing a video created by projecting the decoded reference viewpoint video and a video created by projecting the decoded residual video to the specified viewpoint, using the specified viewpoint depth map. Herein, the reference viewpoint video projection processing step is detecting a pixel to become an occlusion hole which constitutes a pixel area in which, when the decoded reference viewpoint video is projected to the specified viewpoint, the pixel is not projectable, using the specified viewpoint depth map, and, on the other hand, when the decoded reference viewpoint video is projected to the specified viewpoint, sets a pixel not to become the occlusion hole as a pixel of the specified viewpoint video, using the specified viewpoint depth map. The residual video projection processing step is setting the pixel to become the occlusion hole, as a pixel of the specified viewpoint video, by projecting the decoded residual video to the specified viewpoint using the specified viewpoint depth map.

This makes it possible to create a video at an arbitrary viewpoint using the reference viewpoint video, a depth map at an intermediate viewpoint between the reference viewpoint and the auxiliary viewpoint, and a residual video segmented from the auxiliary viewpoint video.

A stereoscopic video encoding program according to a fourteenth aspect of the invention is a program for causing a computer serving as, so as to encode a multi-view video and a depth map which is a map showing information on a depth value for each pixel, the depth value representing a parallax between different viewpoints of the multi-view video, a reference viewpoint video encoding unit, an intermediate viewpoint depth map synthesis unit, a depth map encoding unit, a depth map decoding unit, a projected video prediction unit, a residual video encoding unit, an occlusion hole detection unit, and a residual video segmentation unit.

With this configuration, the reference viewpoint video encoding unit in the stereoscopic video encoding program encodes a reference viewpoint video which is a video at a reference viewpoint of the multi-view video and outputs the encoded reference viewpoint video as a reference viewpoint video bit stream. The intermediate viewpoint depth map synthesis unit in the stereoscopic video encoding program creates an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint. The depth map encoding unit in the stereoscopic video encoding program encodes the intermediate viewpoint depth map and outputs the encoded intermediate viewpoint depth map as a depth map bit stream.

This reduces an amount of data on a depth map encoded by half in a case where two original depth maps are present.

The depth map decoding unit in the stereoscopic video encoding program creates a decoded intermediate viewpoint depth map by decoding the encoded intermediate viewpoint depth map. The projected video prediction unit in the stereoscopic video encoding program creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map. Herein, so as to create the residual video, the occlusion hole detection unit in the stereoscopic video encoding program detects a pixel to become an occlusion hole which constitutes a pixel area in which the pixel is not projectable when the reference viewpoint video is projected to the auxiliary viewpoint, using the decoded intermediate viewpoint depth map. The residual video segmentation unit in the stereoscopic video encoding program creates the residual video by segmenting, from the auxiliary viewpoint video, the pixel constituting the occlusion hole detected by the occlusion hole detection unit. Herein, the stereoscopic video encoding program what the stereoscopic video encoding program uses is not an intermediate viewpoint depth map before subjected to encoding but an intermediate viewpoint depth map already having been encoded and decoded. If a depth map is encoded at a high compression ratio, in particular, the depth map after subjected to decoding may contain not a few errors compared to its original depth map. Therefore, a depth map used herein is configured to be the same as a depth map at an intermediate viewpoint which is used when a multi-view video is created by decoding the above-described bit stream by the stereoscopic video decoding device. This makes it possible to accurately detect a pixel to become an occlusion hole. Then the residual video encoding unit in the stereoscopic video encoding program encodes the residual video and outputs the encoded residual video as a residual video bit stream.

This reduces an amount of data encoded, because only data segmented as a residual video of all data on the auxiliary viewpoint video is subjected to encoding.

A stereoscopic video decoding program according to a fifteenth aspect of the invention is a program for causing a computer serving as, so as to recreate a multi-view video by decoding a bit stream in which the multi-view video and a depth map which is a map showing information on a depth value for each pixel have been encoded, the depth value representing a parallax between different viewpoints of the multi-view video, a reference viewpoint video decoding unit, a depth map decoding unit, a residual video decoding unit, a depth map projection unit, a projected video synthesis unit, a reference viewpoint video projection unit, and a residual video projection unit.

With this configuration, the reference viewpoint video decoding unit in the stereoscopic video decoding program creates a decoded reference viewpoint video by decoding a reference viewpoint video bit stream in which a reference viewpoint video which is a video constituting the multi-view video at a reference viewpoint is encoded. The depth map decoding unit in the stereoscopic video decoding program creates a decoded intermediate viewpoint depth map by decoding a depth map bit stream in which an intermediate viewpoint depth map which is a depth map at an intermediate viewpoint between the reference viewpoint and an auxiliary viewpoint which is away from the reference viewpoint is encoded. The residual video decoding unit in the stereoscopic video decoding program creates a decoded residual video by decoding a residual video bit stream in which a residual video is encoded, the residual video being, when the reference viewpoint video is projected to a viewpoint other than the reference viewpoint, a pixel to become an occlusion hole as a pixel area in which the pixel is not projectable is segmented from the auxiliary viewpoint video. The depth map projection unit in the stereoscopic video decoding program creates a specified viewpoint depth map which is a depth map at a specified viewpoint which is a viewpoint specified as one of the viewpoints of the multi-view video from outside by projecting the decoded intermediate viewpoint depth map to the specified viewpoint. The projected video synthesis unit in the stereoscopic video decoding program creates a specified viewpoint video which is a video at the specified viewpoint, by synthesizing a video created by projecting the decoded reference viewpoint video and a video created by projecting the decoded residual video to the specified viewpoint, using the specified viewpoint depth map. Herein, the reference viewpoint video projection unit in the stereoscopic video decoding program detects a pixel to become an occlusion hole which constitutes a pixel area in which the pixel is not projectable, when the decoded reference viewpoint video is projected to the specified viewpoint, using the specified viewpoint depth map, and, on the other hand, sets a pixel not to become the occlusion hole, as a pixel of the specified viewpoint video, when the decoded reference viewpoint video is projected to the specified viewpoint, using the specified viewpoint depth map. The residual video projection unit in the stereoscopic video decoding program sets the pixel to become the occlusion hole, as a pixel of the specified viewpoint video, by projecting the decoded residual video to the specified viewpoint using the specified viewpoint depth map.

This makes it possible for the stereoscopic video decoding program to create a video at an arbitrary viewpoint using the reference viewpoint video, a depth map at an intermediate viewpoint between the reference viewpoint and the auxiliary viewpoint, and a residual video segmented from the auxiliary viewpoint video.

A stereoscopic video encoding device according to a sixteenth aspect of the invention encodes a multi-view video and a depth map which is a map showing information on a depth value for each pixel, the depth value representing a parallax between different viewpoints of the multi-view video. The stereoscopic video encoding device is configured to include a reference viewpoint video encoding unit, a depth map synthesis unit, a depth map encoding unit, a depth map decoding unit, a projected video prediction unit, and a residual video encoding unit.

With this configuration, the reference viewpoint video encoding unit of the stereoscopic video encoding device encodes a reference viewpoint video which is a video at a reference viewpoint of the multi-view video and outputs the encoded reference viewpoint video as a reference viewpoint video bit stream. The depth map synthesis unit of the stereoscopic video encoding device creates a synthesized depth map which is a depth map at a prescribed viewpoint, by projecting each of a reference viewpoint depth map which is a depth map at the reference viewpoint and an auxiliary viewpoint depth map which is a depth map at an auxiliary viewpoint which is a viewpoint of the multi-view video away from the reference viewpoint, to the prescribed viewpoint, and synthesizing the projected depth maps.

This reduces an amount of data on the depth map encoded.

The depth map encoding unit of the stereoscopic video encoding device encodes the synthesized depth map and outputs the encoded synthesized depth map as a depth map bit stream. The depth map decoding unit of the stereoscopic video encoding device creates a decoded synthesized depth map by decoding the encoded synthesized depth map. The projected video prediction unit of the stereoscopic video encoding device creates a framed residual video created by predicting, from the reference viewpoint, videos at viewpoints other than the reference viewpoint using the decoded synthesized depth map so as to obtain predicted residuals as residual videos, and framing the predicted residuals into the framed residual video. The residual video encoding unit of the stereoscopic video encoding device encodes the framed residual video and outputs the encoded residual video as a residual video bit stream.

This reduces an amount of data on other viewpoint of a video.

A stereoscopic video encoding device according to a seventeenth aspect of the invention is configured that: in the stereoscopic video encoding device according to the sixteenth aspect, the depth map synthesis unit creates a single synthesized depth map at a common viewpoint by projecting the reference viewpoint depth map and a plurality of the auxiliary viewpoint depth maps to the common viewpoint; and that the stereoscopic video encoding device according to the seventeenth aspect further includes a residual video framing unit.

With this configuration, the depth map synthesis unit of the stereoscopic video encoding device synthesizes three or more depth maps including the reference viewpoint depth map into a single synthesized depth map at a common viewpoint.

This reduces an amount of data on the depth maps to one third or less.

The residual video framing unit of the stereoscopic video encoding device creates a framed residual video by reducing and joining a plurality of the residual videos created from the reference viewpoint video and a plurality of the auxiliary viewpoint videos, and framing the reduced and joined residual videos into a single framed image. The residual video encoding unit of the stereoscopic video encoding device encodes the framed residual video and outputs the encoded framed residual video as the residual video bit stream.

This reduces an amount of data on the residual videos to half or less.

A stereoscopic video encoding device according to an eighteenth aspect of the invention is configured that, in the stereoscopic video encoding device according to the sixteenth or seventeenth aspect, the projected video prediction unit creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map.

With this configuration, the projected video prediction unit of the stereoscopic video encoding device creates a residual video by performing a logical operation in which only a data on a pixel to become an occlusion hole is segmented.

This greatly reduces an amount of data on the residual video.

A stereoscopic video encoding device according to a nineteenth aspect of the invention is configured that, in the stereoscopic video encoding device according to the sixteenth or seventeenth aspect, the projected video prediction unit creates a residual video by calculating a difference, for each pixel, between a video created by projecting the reference viewpoint video to the auxiliary viewpoint, and the auxiliary viewpoint video, using the decoded synthesized depth map

With this configuration, the projected video prediction unit of the stereoscopic video encoding device creates a residual video by calculating a difference between two videos constituting a multi-view video.

This makes it possible for a stereoscopic video decoding depth value side to synthesize a high-quality stereoscopic video using the residual video.

A stereoscopic video encoding device according to a twentieth aspect of the invention is configured that: the stereoscopic video encoding device according to the sixteenth aspect, the reference viewpoint video bit stream, the depth map bit stream, and the residual video bit stream each have a header containing first identification information for identifying a prescribed start code and being a single viewpoint video, in this order; and that the stereoscopic video encoding device further comprising a bit stream multiplexing unit that multiplexes auxiliary information containing information indicating respective positions of the reference viewpoint and the auxiliary viewpoint, the reference viewpoint video bit stream, the depth map bit stream, and the residual video bit stream, and outputs the multiplexed information and bit streams as a multiplex bit stream.

With this configuration, the bit stream multiplexing unit of the stereoscopic video encoding device: outputs the reference viewpoint video bit stream as it is without change; outputs the depth map bit stream with inserted between the start code and the first identification information, second identification information for identifying itself as a data on a stereoscopic video, and third identification information for identifying itself as the depth map bit stream, in this order; outputs the residual video bit stream with inserted between the start code and the first identification information, the second identification information, and fourth identification information for identifying itself as the residual video bit stream, in this order; and outputs the auxiliary information with added thereto a header containing the start code, the second identification information, and fifth identification information for identifying itself as the auxiliary information, in this order.

This makes it possible to multiplex the bit streams on a stereoscopic video and transmit the multiplexed bit stream to the stereoscopic video decoding device. At this time, the reference viewpoint video is transmitted as a bit stream of a single viewpoint video, and other data is transmitted as a bit stream on the stereoscopic video different from the single viewpoint video.

A stereoscopic video decoding device according to a twenty-first aspect of the invention recreating a multi-view video by decoding a bit stream in which the multi-view video and a depth map which is a map showing information on a depth value for each pixel have been encoded, the depth value representing a parallax between different viewpoints of the multi-view video. The stereoscopic video decoding device is configured to include a reference viewpoint video decoding unit, a depth map decoding unit, a residual video decoding unit, a depth map projection unit, and a projected video synthesis unit.

With this configuration, the reference viewpoint video decoding unit of the stereoscopic video decoding device creates a decoded reference viewpoint video by decoding a reference viewpoint video bit stream in which a reference viewpoint video which is a video constituting the multi-view video at a reference viewpoint is encoded. The depth map decoding unit of the stereoscopic video decoding device creates a decoded synthesized depth map by decoding a depth map bit stream in which a synthesized depth map is encoded, the synthesized depth map being a depth map at a specified viewpoint created by synthesizing a reference viewpoint depth map which is a depth map at the reference viewpoint and an auxiliary viewpoint depth map which is a depth map at an auxiliary viewpoint which is a viewpoint of the multi-view video away from the reference viewpoint. The residual video decoding unit of the stereoscopic video decoding device creates a decoded residual video by decoding a residual video bit stream in which residual videos which are predicted residuals created by predicting, from the reference viewpoint, videos at viewpoints other than the reference viewpoint using the decoded synthesized depth map, and separates and creates decoded residual videos. The depth map projection unit of the stereoscopic video decoding device creates a specified viewpoint depth map which is a depth map at a specified viewpoint which is a viewpoint specified from outside as a viewpoint of the multi-view video, by projecting the decoded synthesized depth map to the specified viewpoint. The projected video synthesis unit of the stereoscopic video decoding device creates a specified viewpoint video which is a video at the specified viewpoint, by synthesizing a video created by projecting the decoded reference viewpoint video and a video created by projecting the decoded residual video to the specified viewpoint, using the specified viewpoint depth map.

This makes it possible to create a multi-view video constituted by the videos at the reference viewpoint and the specified viewpoint.

A stereoscopic video decoding device according to a twenty-second aspect of the invention is configured that: in the stereoscopic video decoding device according to the twenty-first aspect, the synthesized depth map is a single depth map at a common viewpoint created by projecting and synthesizing the reference viewpoint depth map and a plurality of the auxiliary viewpoint depth maps to the common viewpoint; and that the stereoscopic video decoding device further comprising a residual video separation unit that creates a plurality of the decoded residual videos each having a size same as that of the reference viewpoint video, by separating a framed residual video which is a single framed image created by reducing and joining a plurality of the residual videos at respective auxiliary viewpoints.

With this configuration, the residual video decoding unit of the stereoscopic video decoding device creates a decoded framed residual video by decoding the residual video bit stream in which the framed residual video is encoded. The residual video separation unit of the stereoscopic video decoding device creates a plurality of the decoded residual videos each having a size same as that of the reference viewpoint video by separating a plurality of the reduced residual videos from the decoded framed residual video. The projected video synthesis unit of the stereoscopic video decoding device creates a specified viewpoint video which is a video at the specified viewpoint, by synthesizing the decoded reference viewpoint video and any one of a plurality of the decoded residual videos, using the specified viewpoint depth map.

This makes it possible to create a multi-view video using a residual video of which amount of data is reduced by means of framing.

A stereoscopic video decoding device according to a twenty-third aspect of the invention is configured that: in the stereoscopic video decoding device according to the twenty-first or twenty-second aspect, the residual video bit stream is created by, when the reference viewpoint video is projected to a viewpoint away from the reference viewpoint, segmenting, from the auxiliary viewpoint video, a pixel to become an occlusion hole which constitutes a pixel area in which the pixel is not projectable; and that the projected video synthesis unit includes a reference viewpoint video projection unit and a residual video projection unit.

With this configuration, the reference viewpoint video projection unit of the stereoscopic video decoding device detects a pixel to become an occlusion hole which constitutes a pixel area in which the pixel is not projectable when the decoded reference viewpoint video is projected to the specified viewpoint, using the specified viewpoint depth map, and, on the other hand, sets a pixel not to become the occlusion hole, as a pixel of the specified viewpoint video when the decoded reference viewpoint video is projected to the specified viewpoint, using the specified viewpoint depth map. The residual video projection unit of the stereoscopic video decoding device sets the pixel to become the occlusion hole, as a pixel of the specified viewpoint video, by projecting the decoded residual video to the specified viewpoint using the specified viewpoint depth map.

This makes it possible to create a specified viewpoint video in which a video at the reference viewpoint and a video at the auxiliary viewpoint are synthesized.

A stereoscopic video decoding device according to a twenty-fourth aspect of the invention is configured that: in the stereoscopic video decoding device according to the twenty-first or twenty-second aspect, the residual video bit stream is created by encoding a residual video which is created by calculating a difference, for each pixel, between a video created by projecting the reference viewpoint video to the auxiliary viewpoint, and the auxiliary viewpoint video, using the decoded synthesized depth map; and that the projected video synthesis unit includes a residual addition unit.

With this configuration, the residual addition unit of the stereoscopic video decoding device creates the specified viewpoint video by adding, for each pixel, a video created by projecting the decoded reference viewpoint video to the specified viewpoint using the specified viewpoint depth map, to a video created by projecting the decoded residual video to the specified viewpoint using the specified viewpoint depth map.

This makes it possible to create a specified viewpoint video in which a video at the reference viewpoint and a residual video which is a video at the auxiliary viewpoint.

A stereoscopic video decoding device according to a twenty-fifth aspect of the invention is configured that, in the stereoscopic video decoding device according to the twenty-first aspect: the reference viewpoint video bit stream has a header containing first identification information for identifying a prescribed start code and being a single viewpoint video, in this order; the depth map bit stream has a header containing second identification information for identifying itself as a data on a stereoscopic video and third identification information for identifying itself as the depth map bit stream, in this order, between the start code and the first identification information; the residual video bit stream has a header containing the second identification information and fourth identification information for identifying itself as the residual video bit stream, in this order, between the start code and the first identification information; and the auxiliary information has a header containing the start code, the second identification information, and fifth identification information for identifying itself as the auxiliary information, in this order, and that the stereoscopic video decoding device further includes a bit stream separation unit that includes a reference viewpoint video bit stream separation unit, a depth map bit stream separation unit, a residual video bit stream separation unit, and an auxiliary information separation unit.

With this configuration, the bit stream separation unit of the stereoscopic video decoding device separates a multiplex bit stream in which the reference viewpoint video bit stream, the depth map bit stream, the residual video bit stream, and a bit stream containing auxiliary information which contains information on respective positions of the reference viewpoint and the auxiliary viewpoint are multiplexed, into the reference viewpoint video bit stream, the depth map bit stream, and the residual video bit stream, and the auxiliary information, respectively.

Herein, the reference viewpoint video bit stream separation unit of the stereoscopic video decoding device separates, from the multiplex bit stream, a bit stream having the first identification information immediately after the start code as the reference viewpoint video bit stream, and outputs the separated reference viewpoint video bit stream to the reference viewpoint video decoding unit. The depth map bit stream separation unit of the stereoscopic video decoding device separates, from the multiplex bit stream, a bit stream having the second identification information and the third identification information in this order, immediately after the start code, as the depth map bit stream, and outputs the separated bit stream with deleted therefrom the separated bit stream, the second identification information and the third identification information, to the depth map decoding unit. The residual video bit stream separation unit of the stereoscopic video decoding device separates, from the multiplex bit stream, a bit stream having the second identification information and the fourth identification information in this order immediately after the start code, and outputs the separated bit stream with deleted therefrom the separated bit stream, the second identification information and the fourth identification information from the separated bit stream, to the residual video decoding unit. The auxiliary information separation unit of the stereoscopic video decoding device separates, from the multiplex bit stream, a bit stream having the second identification information and the fifth identification information in this order immediately after the start code, as the auxiliary information bit stream, and outputs the separated bit stream with deleted therefrom the separated bit stream, the second identification information and the fifth identification information as the auxiliary information, to the projected video synthesis unit.

This makes it possible for the stereoscopic video decoding device to receive a multiplex bit stream and thereby create a multi-view video.

A stereoscopic video encoding method according to a twenty-sixth aspect of the invention encodes a multi-view video and a depth map which is a map showing information on a depth value for each pixel, the depth value representing a parallax between different viewpoints of the multi-view video. The stereoscopic video encoding method includes, as a procedure thereof, a reference viewpoint video encoding processing step, a depth map synthesis processing step, a depth map encoding processing step, a depth map decoding processing step, a projected video prediction processing step, and a residual video encoding processing step.

With this procedure of the stereoscopic video encoding method, the reference viewpoint video encoding processing step of the stereoscopic video encoding method is encoding a reference viewpoint video which is a video at a reference viewpoint of the multi-view video and outputting the encoded reference viewpoint video as a reference viewpoint video bit stream. The depth map synthesis processing step of the stereoscopic video encoding method is projecting both a reference viewpoint depth map which is a depth map at the reference viewpoint and each of a plurality of auxiliary viewpoint depth maps which are depth maps at auxiliary viewpoints which are viewpoints of the multi-view video away from the reference viewpoint, to a prescribed viewpoint, synthesizing the projected reference viewpoint depth map and the projected auxiliary viewpoint depth maps, and creating a synthesized depth map which is a depth map at the specified viewpoint.

This reduces an amount of data on a depth map encoded.

The depth map encoding processing step is encoding the synthesized depth map and outputting the encoded synthesized depth map as a depth map bit stream. The depth map decoding processing step is decoding the encoded synthesized depth map and creating a decoded synthesized depth map. The projected video prediction processing step is predicting, from the reference viewpoint, videos at viewpoints other than the reference viewpoint using the decoded synthesized depth map, and framing the predicted residuals as residual videos so as to create a framed residual video. The residual video encoding processing step is encoding the residual video and outputting the encoded residual video as a residual video bit stream.

This reduces an amount of data on other viewpoint of a video.

A stereoscopic video encoding method according to a twenty-seventh aspect of the invention has a procedure in which: in the stereoscopic video encoding method according to the twenty-sixth aspect, the reference viewpoint video bit stream, the depth map bit stream, and the residual video bit stream each have a header containing first identification information for identifying a prescribed start code and being a single viewpoint video, in this order; and that the stereoscopic video encoding method further includes a
bit stream multiplexing processing step of multiplexing auxiliary information containing information on respective positions of the reference viewpoint and the auxiliary viewpoint, the reference viewpoint video bit stream, the depth map bit stream, and the residual video bit stream, and outputting the multiplexed information and bit streams as a multiplex bit stream.

With this procedure of the stereoscopic video encoding method, the bit stream multiplexing processing step in outputting the multiplexed information and bit streams is: outputting the reference viewpoint video bit stream as it is without change; outputting the depth map bit stream with inserted between the start code and the first identification information, second identification information for identifying itself as a data on a stereoscopic video and third identification information for identifying itself as the depth map bit stream, in this order; outputting the residual video bit stream with inserted between the start code and the first identification information, the second identification information and fourth identification information for identifying itself as the residual video bit stream, in this order; and outputting the auxiliary information with adding thereto a header containing the start code, the second identification information, and fifth identification information for identifying itself as the auxiliary information, in this order.

This makes it possible to multiplex the bit streams on a stereoscopic video and transmit the multiplexed bit stream to the stereoscopic video decoding device. At this time, the reference viewpoint video is transmitted as a bit stream of a single viewpoint video, and other data is transmitted as a bit stream on the stereoscopic video different from the single viewpoint video.

A stereoscopic video decoding method according to a twenty-eighth aspect of the invention recreating a multi-view video by decoding a bit stream in which the multi-view video and a depth map which is a map showing information on a depth value for each pixel have been encoded, the depth value representing a parallax between different viewpoints of the multi-view video. The stereoscopic video decoding method includes, as a procedure thereof, a reference viewpoint video decoding processing step, a depth map decoding processing step, a residual video decoding processing step, a depth map projection processing step, and a projection video synthesis processing step.

With this procedure of the stereoscopic video decoding method, the reference viewpoint video decoding processing step decoding a reference viewpoint video bit stream in which a reference viewpoint video which is a video constituting the multi-view video at a reference viewpoint is encoded, and creating a decoded reference viewpoint video. The depth map decoding processing step is decoding a depth map bit stream in which a synthesized depth map is encoded, the synthesized depth map being a depth map at a specified viewpoint created by synthesizing a reference viewpoint depth map which is a depth map at the reference viewpoint and auxiliary viewpoint depth maps which are depth maps at auxiliary viewpoints which are viewpoints of the multi-view video away from the reference viewpoint, and creating a decoded synthesized depth map. The residual video decoding processing step is decoding a residual video bit stream in which residual videos which are predicted residuals created by predicting, from the reference viewpoint, videos at viewpoints other than the reference viewpoint, using the decoded synthesized depth map, and, separating and creating decoded residual videos. The depth map projection processing step is projecting the decoded synthesized depth map to specified viewpoints which are viewpoints specified from outside as viewpoints of the multi-view video, and creating specified viewpoint depth maps which are depth maps at the specified viewpoints. The projected video synthesis processing step is synthesizing videos created by projecting the decoded reference viewpoint video and videos created by projecting the decoded residual videos to the specified viewpoints, using the specified viewpoint depth maps, and creating specified viewpoint videos which are videos at the specified viewpoints.

This creates a multi-view video constituted by the videos at the reference viewpoint and the specified viewpoint.

A stereoscopic video decoding method according to a twenty-ninth aspect of the invention has a procedure in which, in the stereoscopic video decoding method according to the twenty-eighth aspect, the reference viewpoint video bit stream has a header containing first identification information for identifying a prescribed start code and being a single viewpoint video, in this order; the depth map bit stream has a header containing second identification information for identifying itself as a data on a stereoscopic video and third identification information for identifying itself as the depth map bit stream, in this order, between the start code and the first identification information; the residual video bit stream has a header containing the second identification information, and fourth identification information for identifying itself as the residual video bit stream, in this order, between the start code and the first identification information; and the auxiliary information has a header containing the start code, the second identification information, and fifth identification information for identifying itself as the auxiliary information, in this order, and, in which the stereoscopic video decoding method further includes a bit stream separation processing step.

With the stereoscopic video decoding method of this procedure, the bit stream separation processing step is separating a multiplex bit stream in which the reference viewpoint video bit stream, the depth map bit stream, the residual video bit stream, and a bit stream containing auxiliary information which contains information on respective positions of the reference viewpoint and the auxiliary viewpoint are multiplexed into the reference viewpoint video bit stream, the depth map bit stream, and the residual video bit stream, and the auxiliary information, respectively.

Herein, the bit stream separation processing step is: separating, from the multiplex bit stream, a bit stream having the first identification information immediately after the start code as the reference viewpoint video bit stream, and using the separated reference viewpoint video bit stream in the reference viewpoint video decoding processing step; separating, from the multiplex bit stream, a bit stream having the second identification information and the third identification information in this order, immediately after the start code as the depth map bit stream, and using the separated bit stream with deleted therefrom the second identification information and the third identification information, in the depth map decoding processing step; separating, from the multiplex bit stream, a bit stream having the second identification information and the fourth identification information in this order immediately after the start code as the residual video bit stream, and using the separated bit stream with deleted therefrom the second identification information and the fourth identification information from the separated bit stream, in the residual video decoding processing step; and separating, from the multiplex bit stream, a bit stream having the second identification information and the fifth identification information in this order, immediately after the start code as the auxiliary information bit stream, and using the separated bit stream with deleted therefrom the separated bit stream, the second identification information and the fifth identification information as the auxiliary information, in the projected video synthesis processing step.

This creates a stereoscopic video using a multiplex bit stream.

The stereoscopic video encoding device according to the sixteenth aspect of the invention can also be realized by the stereoscopic video encoding program according to a thirtieth aspect of the invention which causes a hardware resource such as a CPU (central processing unit) and a memory equipped with a generally-available computer, serving as the reference viewpoint video encoding unit, the depth map synthesis unit, the depth map encoding unit, the depth map decoding unit, the projected video prediction unit, and the residual video encoding unit.

The stereoscopic video encoding device according to the twentieth aspect of the invention can be realized by the stereoscopic video encoding program according to a thirty-first aspect of the invention for further causing a generally-available computer serving as the bit stream multiplexing unit.

The stereoscopic video decoding device according to the twenty-first aspect of the invention can also be realized by the stereoscopic video decoding program according to a thirty-second aspect for causing a hardware resource such as a CPU and a memory equipped with a generally-available computer, serving as the reference viewpoint video decoding unit, the depth map decoding unit, the residual video decoding unit, the depth map projection unit, and the projected video synthesis unit.

The stereoscopic video decoding device according to the twenty-fifth aspect of the invention can also be realized by the stereoscopic video decoding program according to a thirty-third aspect for causing a hardware resource such as a CPU and a memory equipped with a generally-available computer, serving as the bit stream separation unit.

ADVANTAGEOUS EFFECTS OF THE INVENTION

With the first, twelfth, or fourteenth aspect of the invention, when the reference viewpoint video, the auxiliary viewpoint video, and respective depth maps corresponding thereto are encoded, a depth map at an intermediate viewpoint between the reference viewpoint and the auxiliary viewpoint is selected as data to be encoded on the depth map. Also, a residual video created by extracting only a pixel to become an occlusion hole which is not projectable from the reference viewpoint video is selected as data to be encoded on the auxiliary viewpoint video. This reduces respective amounts of the data, thus allowing encoding at a high efficiency compared to their original data amounts.

With the second aspect of the invention, a pixel to become an occlusion hole can be detected with less overlooking. Thus, when a result of the detection is used for segmenting a pixel of the auxiliary viewpoint video and thereby creating a residual video, a pixel required for creating a video at an arbitrary viewpoint by the stereoscopic video decoding device can be segmented appropriately.

With the third aspect of the invention, the expansion of a hole mask indicating a position of a pixel to become an occlusion hole can reduce overlooking of such a pixel to become an occlusion hole. Thus, when a result of the detection is used for segmenting a pixel of the auxiliary viewpoint video and thereby creating a residual video, a pixel required for creating a video at an arbitrary viewpoint by the stereoscopic video decoding device can be segmented further appropriately.

With the fourth aspect of the invention, in addition to using a depth map at the auxiliary viewpoint, an occlusion hole is detected using an intermediate viewpoint depth map which is a depth map at the intermediate viewpoint, which allows a further appropriate detection of a pixel to become an occlusion hole. Thus, a result of the detection can be used for creating a further appropriate residual video.

With the fifth aspect of the invention, in addition to using a depth map at the auxiliary viewpoint, an occlusion hole is detected using a depth map at the specified viewpoint used when an encoded data is decoded and a multi-view video is created on a decoding side. Thus, a result of the detection can be used for creating a further appropriate residual video.

With the sixth aspect of the invention, each of the intermediate viewpoint depth map and the depth map between a plurality of viewpoints are framed, which allows an amount of data to be reduced. This makes it possible for the stereoscopic video encoding device to encode the data at a high efficiency.

With the seventh, thirteenth, or fifteenth aspect of the invention, it is possible to reduce an amount of data on the depth map and the auxiliary viewpoint video and to decode an encoded data at a high efficiency and thereby create a multi-view video. Further, as the depth map, the synthesized depth map can be used which is a depth map at an intermediate viewpoint between the reference viewpoint and the auxiliary viewpoint. This makes it possible to create a specified viewpoint video having an excellent image quality, because a position of a viewpoint for a created video becomes nearer than that when only a depth map at the reference viewpoint or an auxiliary is used.

With the eighth aspect of the invention, a pixel to become an occlusion hole is detected using a depth map at a specified viewpoint which is a viewpoint with which a video is actually created. Using a result of the detection, an appropriate pixel is selected from a video created by projecting the reference viewpoint video to the specified viewpoint and a video created by projecting a residual video to the specified viewpoint, to thereby create a specified viewpoint video. This makes it possible to create a specified viewpoint video having an excellent image quality.

With the ninth aspect of the invention, a pixel to become an occlusion hole is detected while overlooking of a pixel to become an occlusion hole due to an error contained in the decoded intermediate viewpoint depth map is absorbed. Using a result of the detection, an appropriate pixel is selected from a video created by projecting the reference viewpoint video to the specified viewpoint and a video created by projecting a residual video to the specified viewpoint, to thereby create a specified viewpoint video. This makes it possible to create a specified viewpoint video having an excellent image quality.

With the tenth aspect of the invention, a video without a hole can be created. This makes it possible to create a specified viewpoint video having an excellent image quality.

With the eleventh aspect of the invention, a framed depth map and a framed residual video can be separated into respective depth maps and residual videos of original sizes. When a multi-view video of a plurality of systems is encoded, depth maps and residual videos of a plurality of systems are reduced and framed into respective framed images. This makes it possible to reduce an amount of data and create a multi-view video by decoding a data encoded at a high efficiency.

With the sixteenth, twenty-sixth, or thirtieth aspect of the invention, a data amount of a depth map is reduced by synthesizing a reference viewpoint depth map and an auxiliary viewpoint depth map, and a data amount of an auxiliary viewpoint video is also reduced by creating a residual video. This makes it possible to encode a multi-view video at a high efficiency.

With the seventeenth aspect of the invention, three or more depth maps are synthesized into a single depth map to thereby further reduce a data amount, and two or more residual videos are reduced and framed to thereby further reduce a data amount. This makes it possible to further improve an encoding efficiency.

With the eighteenth aspect of the invention, in an auxiliary viewpoint video, only a pixel to become an occlusion hole is segmented, which allows reduction in a data amount. This makes it possible to improve an encoding efficiently.

With the nineteenth aspect of the invention, a difference between a video created by projecting a reference viewpoint video at an auxiliary viewpoint and an entire video is calculated with respect to an auxiliary viewpoint video, to thereby create a residual video. This makes it possible to use the residual video and create a high-quality multi-view video at a stereoscopic video decoding device side.

With the twentieth, twenty-seventh, or thirty-first aspect of the invention, when a stereoscopic video is outputted as a multiplex bit stream, a video at the reference viewpoint is transmitted as a bit stream of a single viewpoint video, and other data is transmitted as a bit stream on the stereoscopic video. This makes it possible for an existent stereoscopic video decoding device decoding a single viewpoint video to decode the multiplex bit stream as a single viewpoint video without introducing errors.

With the twenty-first, twenty-eighth, or thirty-second aspect of the invention, data amounts of a depth map and an auxiliary viewpoint video are reduced. Thus, a multi-view video can be created by decoding a data encoded at a high efficiency.

With the twenty-second aspect of the invention, the data amounts of a depth map and an auxiliary viewpoint video are further reduced. Thus, a multi-view video can be created by decoding a data encoded at a higher efficiency.

With the twenty-third aspect of the invention, a data amount of an auxiliary viewpoint video is further reduced.

Thus, a multi-view video can be created by decoding a data encoded at a further higher efficiency.

With the twenty-fourth aspect of the invention, in an auxiliary viewpoint video, a data created by encoding a high-quality residual video is decoded. Thus, a high-quality multi-view video can be created.

With the twenty-fifth, twenty-ninth, or thirty-third aspect of the invention, a multi-view video can be created by decoding a bit stream separated from a multiplex bit stream.

BRIEF DESCRIPTION OF THE DRAWINGS

FIG. 1 is a block diagram illustrating a configuration of a stereoscopic video transmission system including a stereoscopic video encoding device and a stereoscopic video decoding device according to first and second embodiments of the present invention.

FIG. 2 is a block diagram illustrating a configuration of the stereoscopic video encoding device according to the first embodiment of the present invention.

FIGS. 3A and 3B are each a block diagram illustrating a detailed configuration of the stereoscopic video encoding device according to the first embodiment of the present invention. FIG. 3A illustrates a configuration of a depth map synthesis unit and FIG. 3B illustrates a configuration of an occlusion hole detection unit.

FIG. 4 is an explanatory diagram for illustrating an outline of an encoding processing by the stereoscopic video encoding device according to the first embodiment of the present invention.

FIGS. 5A and 5B are explanatory diagrams each for illustrating a procedure of synthesizing a depth map in the present invention. FIG. 5A illustrates a case in which depth maps at a reference viewpoint and a left viewpoint are used. FIG. 5B illustrates a case in which depth maps at the reference viewpoint and a right viewpoint are used.

FIG. 6 is an explanatory diagram for illustrating a procedure of detecting an occlusion hole in the present invention.

FIG. 7 is a block diagram illustrating a configuration of the stereoscopic video decoding device according to the first embodiment of the present invention.

FIG. 8 is a block diagram illustrating a configuration of a projected video synthesis unit of the stereoscopic video decoding device according to the first embodiment of the present invention.

FIG. 9 is an explanatory diagram for illustrating an outline of a decoding processing by the stereoscopic video decoding device according to the first embodiment of the present invention.

FIG. 10 is a flowchart illustrating operations of the stereoscopic video encoding device according to the first embodiment of the present invention.

FIG. 11 is a flowchart illustrating operations of the stereoscopic video decoding device according to the first embodiment of the present invention.

FIG. 12 is a block diagram illustrating a configuration of a stereoscopic video encoding device according to the second embodiment of the present invention.

FIG. 13 is an explanatory diagram for illustrating an outline of an encoding processing in the stereoscopic video encoding device according to the second embodiment of the present invention.

FIG. 14 is a block diagram illustrating a configuration of a stereoscopic video decoding device according to the second embodiment of the present invention.

FIG. 15 is an explanatory diagram for illustrating an outline of a decoding processing by the stereoscopic video decoding device according to the second embodiment of the present invention.

FIG. 16 is a flowchart illustrating operations of the stereoscopic video encoding device according to the second embodiment of the present invention.

FIG. 17 is a flowchart illustrating operations of the stereoscopic video decoding device according to the second embodiment of the present invention.

FIGS. 18A and 18B are explanatory diagrams each for illustrating an outline of a framing processing by a stereoscopic video encoding device according to a variation of the second embodiment of the present invention. FIG. 18A illustrates framing of a depth map, and FIG. 18B illustrates framing of a residual video.

FIG. 19 is a block diagram illustrating a configuration of a stereoscopic video encoding device according to a third embodiment of the present invention.

FIG. 20 is an explanatory diagram for illustrating an outline of an encoding processing by the stereoscopic video encoding device according to the third embodiment of the present invention.

FIG. 21A is a block diagram illustrating a detailed configuration of a projected video prediction unit of the stereoscopic video encoding device according to the third embodiment of the present invention. FIG. 21B is a block diagram illustrating a configuration of a projected video prediction unit according to a variation of the third embodiment of the present invention.

FIG. 22 is a block diagram illustrating a configuration of a stereoscopic video decoding device according to the third embodiment of the present invention.

FIG. 23 is an explanatory diagram for illustrating an outline of a decoding processing in the stereoscopic video decoding device according to the third embodiment of the present invention.

FIG. 24A is a block diagram illustrating a detailed configuration of a projected video prediction unit of the stereoscopic video decoding device according to the third embodiment of the present invention. FIG. 24B is a block diagram illustrating a configuration a projected video prediction unit according to the variation of the third embodiment of the present invention.

FIG. 25 is a flowchart illustrating operations of the stereoscopic video encoding device according to the third embodiment of the present invention.

FIG. 26 is a flowchart illustrating operations of the stereoscopic video decoding device according to the third embodiment of the present invention.

FIG. 27 is a block diagram illustrating a configuration of a stereoscopic video encoding device according to a fourth embodiment of the present invention.

FIG. 28 is a block diagram illustrating a detailed configuration of a bit stream multiplexing unit of the stereoscopic video encoding device according to the fourth embodiment of the present invention.

FIGS. 29A to 29E are diagrams each illustrating a data structure according to the fourth embodiment of the present invention. FIG. 29A illustrates a conventional bit stream; FIG. 29B, a reference viewpoint video bit stream; FIG. 29C, a depth map bit stream; FIG. 29D, a residual video bit stream; and FIG. 29E, auxiliary information.

FIG. 30 is a diagram for illustrating contents of the auxiliary information according to the fourth embodiment of the present invention.

FIG. 31 is a block diagram illustrating a configuration of a stereoscopic video decoding device according to the fourth embodiment of the present invention.

FIG. 32 is a block diagram illustrating a detailed configuration of a bit stream separation unit of the stereoscopic video decoding device according to the fourth embodiment of the present invention.

FIG. 33 is a flowchart illustrating operations of the stereoscopic video encoding device according to the fourth embodiment of the present invention.

FIG. 34 is a flowchart illustrating operations of the stereoscopic video decoding device according to the fourth embodiment of the present invention.

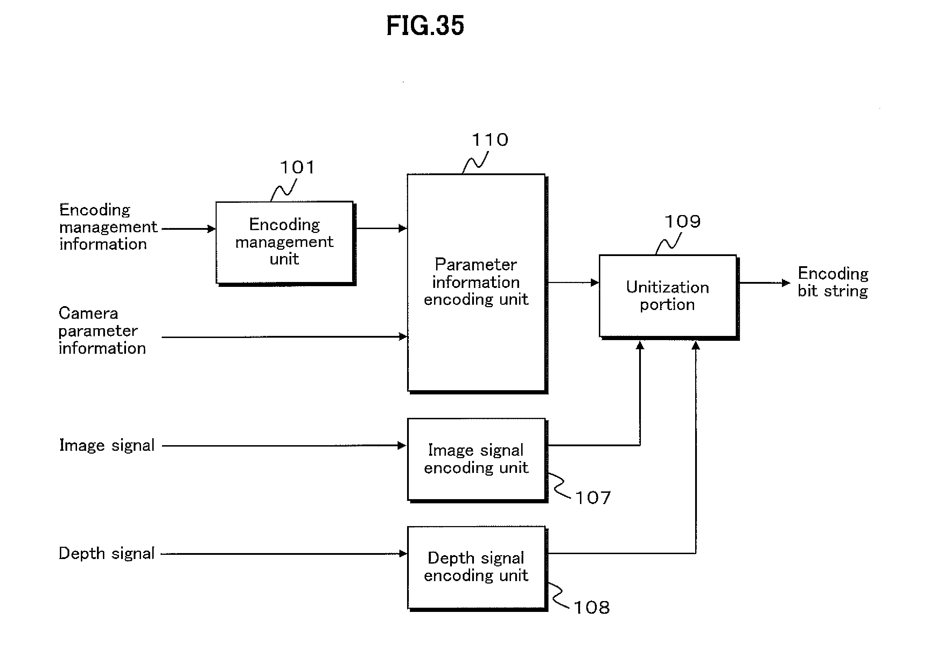

FIG. 35 is a block diagram illustrating a configuration of a stereoscopic video encoding device according to the related art.

EMBODIMENTS FOR CARRYING OUT THE INVENTION

Embodiments of the present invention are described below with reference to accompanied drawings.

<First Embodiment>

[Stereoscopic video transmission system]

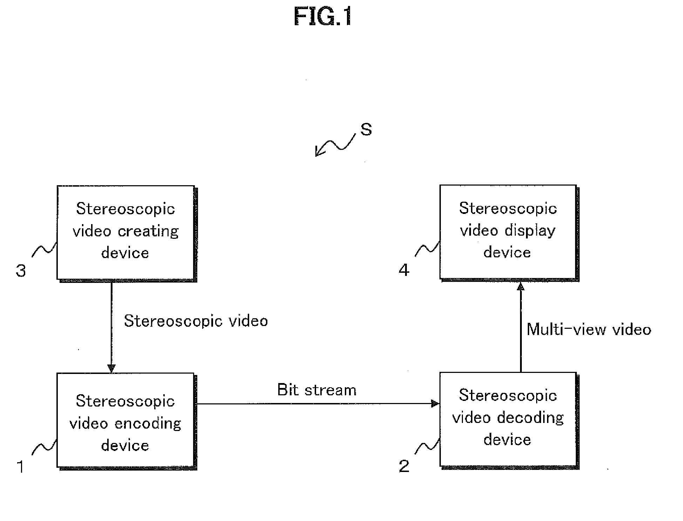

With reference to FIG. 1 is described a stereoscopic video transmission system S including a stereoscopic video encoding device and a stereoscopic video decoding device according to a first embodiment of the present invention.

The stereoscopic video transmission system S encodes a stereoscopic video taken by a camera or the like, transmits the encoded stereoscopic video together with a depth map corresponding thereto, to a destination, and creates a multi-view video at the destination. The stereoscopic video transmission system S herein includes a stereoscopic video encoding device 1, a stereoscopic video decoding device 2, a stereoscopic video creating device 3, and a stereoscopic video display device 4.

The stereoscopic video encoding device 1 encodes a stereoscopic video created by the stereoscopic video creating device 3, outputs the encoded stereoscopic video as a bit stream to a transmission path, and thereby transmits the bit stream to the stereoscopic video decoding device 2. The stereoscopic video decoding device 2 decodes the bit stream transmitted from the stereoscopic video encoding device 1, thereby creates a multi-view video, outputs the multi-view video to the stereoscopic video display device 4, and makes the stereoscopic video display device 4 display the multi-view video.

The bit stream transmitted from the stereoscopic video encoding device 1 to the stereoscopic video decoding device 2 may be a plurality of bit streams, for example, corresponding to a plurality of types of signals. A plurality of the signals may be multiplexed and transmitted as a single bit stream, as will be described hereinafter in a fourth embodiment. This is applied similarly to the other embodiments to be described later.

The stereoscopic video creating device 3 is embodied by a camera capable of taking a stereoscopic video, a CG (computer graphics) creating device, or the like. The stereoscopic video creating device 3 creates a stereoscopic video (a multi-view video) and a depth map corresponding thereto and outputs the stereoscopic video and the depth map to the stereoscopic video encoding device 1. The stereoscopic video display device 4 inputs therein the multi-view video created by the stereoscopic video decoding device 2 and displays therein the stereoscopic video.

[Configuration of stereoscopic video encoding device]

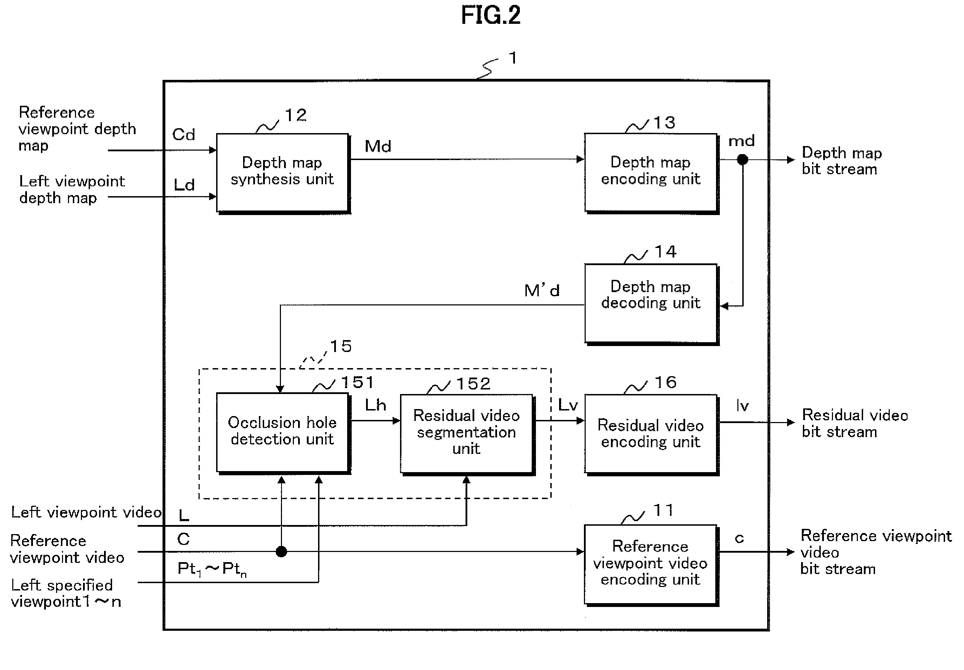

Next is described a configuration of the stereoscopic video encoding device 1 according to the first embodiment with reference to FIG. 2 through FIG. 4 (as well as FIG. 1 where necessary).

As illustrated in FIG. 2, the stereoscopic video encoding device (which may also be simply referred to as an "encoding device" where appropriate) 1 according to the first embodiment includes a reference viewpoint video encoding unit 11, a depth map synthesis unit 12, a depth map encoding unit 13, a depth map decoding unit 14, a projected video prediction unit 15, and a residual video encoding unit 16. The projected video prediction unit 15 includes an occlusion hole detection unit 151 and a residual video segmentation unit 152.

The encoding device 1 inputs therein, as a stereoscopic video: a reference viewpoint video C which is a video viewed from a viewpoint as a reference; a left viewpoint video (which may also be referred to as an auxiliary viewpoint video) L which is a video viewed from a left viewpoint (an auxiliary viewpoint) positioned at a prescribed distance horizontally leftward from the reference viewpoint; a reference viewpoint depth map Cd which is a depth map corresponding to the reference viewpoint video C; a left viewpoint depth map (an auxiliary viewpoint map) Ld which is a depth map corresponding to the left viewpoint video L; and left specified viewpoints (specified viewpoints) 1 to n, each of which is a viewpoint at which creation of a video constituting a multi-view video created by the stereoscopic video decoding device 2 is specified.

It is assumed in this embodiment that the reference viewpoint is a viewpoint on an object's right side, and the left viewpoint (the auxiliary viewpoint) is a viewpoint on an object's left side. The present invention is not, however, limited to this. For example, a left viewpoint may be assumed as the reference viewpoint, and a right viewpoint, as the auxiliary viewpoint. It is also assumed in this embodiment that the reference viewpoint and the auxiliary viewpoint are apart from each other in the horizontal direction. The present invention is not, however, limited to this. The reference viewpoint and the auxiliary viewpoint may be apart from each other in any direction in which, for example, an angle for observing an object from a prescribed viewpoint changes, such as a longitudinal direction and an oblique direction.

Based on the above-described inputted data, the encoding device 1 outputs: an encoded reference viewpoint video c created by encoding the reference viewpoint video C, as a reference viewpoint video bit stream; an encoded depth map md created by encoding a left synthesized depth map (an intermediate viewpoint depth map) Md which is a depth map at a left synthesized viewpoint (an intermediate viewpoint) which is an intermediate viewpoint between the reference viewpoint and the left viewpoint, as a depth bitmap stream; and an encoded residual video (a residual video) lv created by encoding a left residual video (a residual video) Lv which is a difference between the reference viewpoint video C and the left viewpoint video L, as a residual video bit stream.

Each of the bit streams outputted from the encoding device 1 is transmitted to the stereoscopic video decoding device 2 (see FIG. 1) via a transmission path.

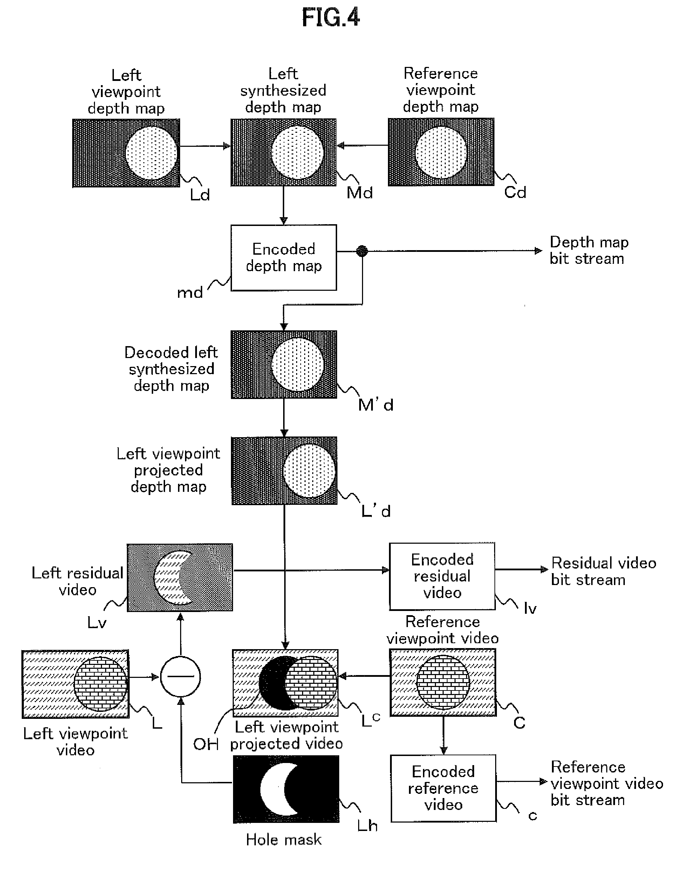

Next is described each of components of the stereoscopic video encoding device 1 by referring to exemplified videos and depth maps illustrated in FIG. 4. For simplification of explanation, each of the videos such as the reference viewpoint video C and the left viewpoint video L of FIG. 4 is assumed to contain a circular-shaped object present on a foreground and another object other than the foreground circular-shaped object present on a background.

As shown in each of the depth maps such as the reference viewpoint depth map Cd or the left viewpoint depth map Ld of FIG. 4, a pixel corresponding to an object on the foreground (a circular-shaped area) has a larger depth value, which is illustrated brighter in the figure. Meanwhile, a pixel of another object on the background has a smaller depth value, which is illustrated darker in the figure.

It is assumed herein that a depth map corresponding to a video at each viewpoint is previously prepared and given, and that, in the depth map, a depth value is provided for each pixel and is a value corresponding to a deviation amount of pixel positions of one object point viewed in the reference viewpoint video C and the same object point viewed in the left viewpoint video L.

The reference viewpoint video encoding unit 11: inputs therein the reference viewpoint video C from outside; creates the encoded reference viewpoint video c by encoding the reference viewpoint video C using a prescribed encoding method; and outputs the encoded reference viewpoint video c as a reference viewpoint video bit stream to a transmission path.

The encoding method used herein is preferably but not necessarily a widely-used 2D (two-dimensional) video encoding method. More specifically, the encoding method includes those in accordance with MPEG-2 (Moving Picture Experts Group-2) standards currently used for broadcasting, and H.264 MPEG-4 AVC (Moving Picture Experts Group-4 Advanced Video Coding) standards used for an optical disc recorder. Even if an encoding device just having a commercially-available 2D decoder of conventional type is used, those encoding methods have an advantage of allowing the reference viewpoint video C as a part of an entire video, to be seen as a 2D video.

The depth map synthesis unit (which may also be referred to as an intermediate viewpoint depth map synthesis unit) 12 inputs therein the reference viewpoint depth map Cd and the left viewpoint depth map Ld from outside, projects each of the depth maps Cd and Ld to an intermediate viewpoint which is a viewpoint in between the reference viewpoint and the left viewpoint, and thereby creates respective depth maps at the intermediate viewpoint. The depth map synthesis unit 12 creates the left synthesized depth map Md by synthesizing the created two depth maps at the intermediate viewpoint, and outputs the created left synthesized depth map Md to the depth map encoding unit 13.

Note that any of the depth maps used in this embodiment are handled as image data in a format same as that of such a video as the reference viewpoint video C. For example, if a format in accordance with high-definition standards is used, a depth value is set as a luminance component (Y), and prescribed values are set as color difference components (Pb, Pr) (for example, in a case of 8-bit signal per component, "128" is set). This is advantageous because, even in a case where the depth map encoding unit 13 encodes the left synthesized depth map Md using an encoding method similar to that used for a video, a decrease in encoding efficiency can be prevented, which is otherwise caused by the color difference components (Pb, Pr) without having information valid as a depth map.

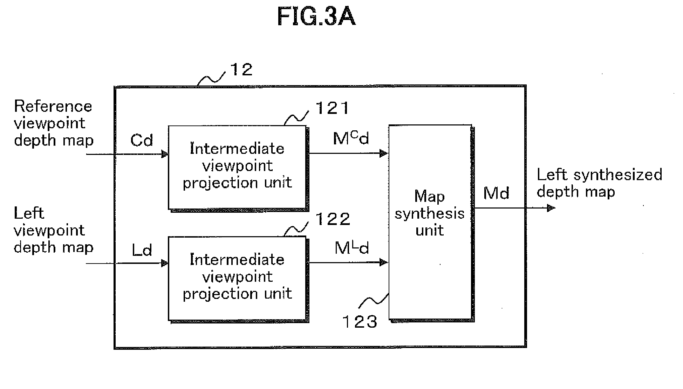

The depth map synthesis unit 12 includes intermediate viewpoint projection units 121, 122 and a map synthesis unit 123 as illustrated in FIG. 3A.

The intermediate viewpoint projection unit 121 creates a depth map $M^C d$ at an intermediate viewpoint by shifting rightward each of pixels of the reference viewpoint depth map Cd, which is an opposite direction of the intermediate viewpoint viewed from the reference viewpoint, by the number of pixels corresponding to 1/2 a depth value as a value of each of the pixels. The shift of the pixels results in a pixel without having a depth value (a pixel value) in the depth map $M^C d$, which is referred to as an occlusion hole. The pixel without having a depth value is herein assumed to have a depth value equivalent to that of a valid pixel positioned in a vicinity of the pixel of interest within a prescribed range. In this case, it is preferable to take the smallest depth value of the depth values of the pixels positioned in the vicinity of the pixel of interest within the prescribed range, as a depth value of the pixel of interest. This makes it possible to almost exactly interpolate a depth value of a pixel corresponding to an object as a background which is hidden behind an object as a foreground because of occlusion.

The intermediate viewpoint projection unit 121 outputs the created depth map $M^C d$ to the map synthesis unit 123.

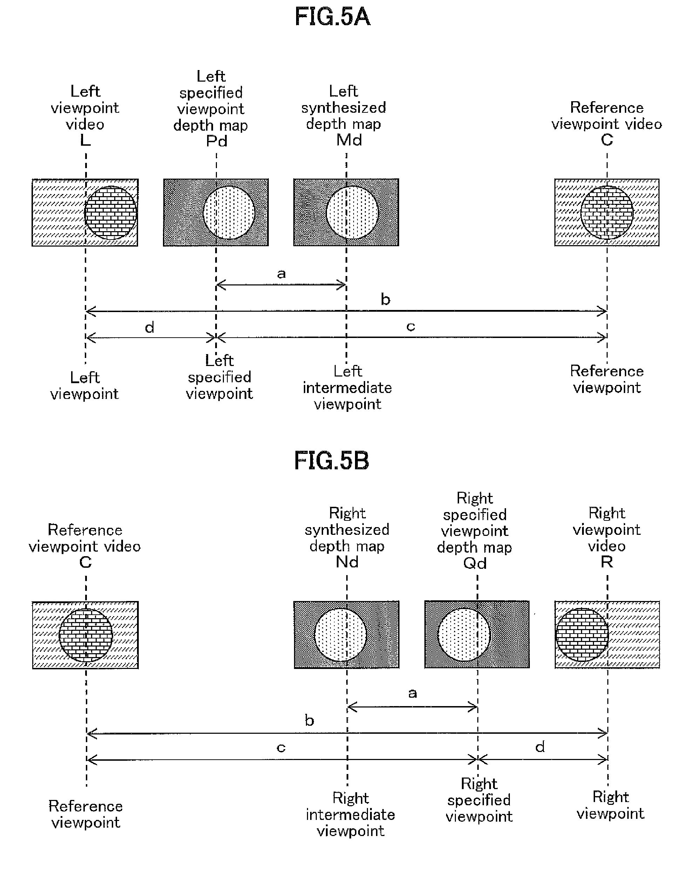

Next is described projection of a depth map with reference to FIG. 5A.

As illustrated in FIG. 5A, let "b" be a distance from a reference viewpoint to a left viewpoint; "c", from the reference viewpoint to a left specified viewpoint which is an arbitrary viewpoint; "a", from a left intermediate viewpoint to the left specified viewpoint; and "d", from the left specified viewpoint to the left viewpoint. Both a distance from the reference viewpoint to the left intermediate viewpoint and a distance from the left intermediate viewpoint to the left viewpoint are b/2.

The depth value used herein corresponds, when a depth map or a video is projected to a viewpoint positioned apart by the distance b which is the distance between the reference viewpoint and the left viewpoint, to the number of pixels (an amount of parallax) to make a pixel of interest shift rightward, opposite to a direction of shifting a viewpoint. The depth value is typically used in such a manner that the largest amount of parallax in a video is made to correspond to the largest depth value. A shift amount of the number of the pixels is proportionate to a shift amount of a viewpoint. Thus, when a depth map at the reference viewpoint is projected to the specified viewpoint which is away from the reference viewpoint by a distance c, pixels of the depth map are shifted rightward by the number of pixels corresponding to c/b times the depth values thereof. Note that if a direction of shifting a viewpoint is rightward, the pixel is shifted to the opposite direction, that is, leftward.

Hence, when the intermediate viewpoint projection unit 121 projects a depth map at the reference viewpoint to the intermediate viewpoint, a pixel of the depth map is shifted rightward by the number of pixels corresponding to ((b/2)/b)=1/2 times the depth value as described above.

As illustrated in the intermediate viewpoint projection unit 122 to be described next, when a depth map at the left viewpoint is projected to an intermediate viewpoint which is positioned rightward as viewed from the left viewpoint, each of pixels of the depth map at the left viewpoint is shifted leftward by the number of pixels ((b/2)/b)=1/2 times a depth value of the pixel.

Description is made referring back to FIG. 3A.

The intermediate viewpoint projection unit 122 shifts each of pixels of the left viewpoint depth map Ld leftward which is a direction opposite to the intermediate viewpoint as viewed from the left viewpoint, by the number of pixels 1/2 times a depth value which is a value of each of the pixels, to thereby create a depth map $M^L d$ at the intermediate viewpoint. As a result, an occlusion hole is generated in the depth map $M^L d$ and is filled up with a pixel value of a valid pixel positioned in a vicinity of the pixel of interest, similarly to the intermediate viewpoint projection unit 121 described above.

The intermediate viewpoint projection unit 122 outputs the created depth map $M^L d$ to the map synthesis unit 123.

In the depth maps $M^C d$, $M^L d$ at the intermediate viewpoints created by the intermediate viewpoint projection units 121, 122 respectively, a plurality of pixels differently positioned in an original depth map (the reference viewpoint depth map Cd or the left viewpoint depth map Ld) may fall in the same position, because of a difference in a depth value of a pixel in the depth map of interest. After the shift of pixels, if a plurality of the pixels are present in the same position, a pixel having the largest depth value of a plurality of the pixels is taken as a depth value in the position. This allows a depth value of an object on the foreground to remain unchanged and to correctly maintain a relation of occlusions, which is an overlap relation between objects, in the depth map after projection (the depth maps $M^Cd$, $M^Ld$ at the intermediate viewpoint).

The map synthesis unit 123 creates a left synthesized depth map Md by synthesizing a pair of the depth maps $M^Cd$, $M^Ld$ at the intermediate viewpoints inputted from the intermediate viewpoint projection units 121, 122, respectively, into one, and outputs the created left synthesized depth map Md to the depth map encoding unit 13.

In synthesizing a pair of the depth maps $M^Cd$, $M^Ld$ into one and thereby creating the left synthesized depth map Md, the map synthesis unit 123 calculates an average value of two depth values at the same positions in the depth maps $M^Cd$, $M^Ld$ and takes the average value as a depth value at the position in the left synthesized depth map Md.

The map synthesis unit 123 sequentially performs median filtering in pixel sizes of 3x3, 5x5, 7x7, 9x9, 11 x11, 13x13, 15x15, and 17x17 to the left synthesized depth map Md. This makes it possible to obtain a smoother depth map and improve a quality of the specified viewpoint video synthesized by the stereoscopic video decoding device 2. This is because, even if a quality of a pre-filtering depth map is low and the depth map is not so smooth containing a number of erroneous depth values, the depth map is rewritten using a median value of depth values of pixels surrounding the pixel of interest. Note that, even after the median filtering, a portion of the depth map in which a depth value has undergone a significant change is kept as before. There is thus no mix-up of depth values on the foreground and background.

The depth map encoding unit 13 creates an encoded depth map md by encoding the left synthesized depth map Md inputted by the depth map synthesis unit 12 using a prescribed encoding method, and outputs the created encoded depth map md to the transmission path as a depth map bit stream.

The encoding method used herein may be the same as the above-described encoding method in which a reference viewpoint video is encoded, or may be another encoding method having a higher encoding efficiency such as, for example, HEVC (High Efficiency Video Coding).

The depth map decoding unit 14 creates a decoded left synthesized depth map (a decoded intermediate viewpoint depth map) M'd which is a depth map at an intermediate viewpoint by decoding the depth map bit stream which is generated from the encoded depth map md created by the depth map encoding unit 13 in accordance with the encoding method used. The depth map decoding unit 14 outputs the created decoded left synthesized depth map M'd to the occlusion hole detection unit 151.

The projected video prediction unit 15 inputs therein, as illustrated in FIG. 2, the reference viewpoint video C, the left viewpoint video L, and the left specified viewpoints $Pt_1$ to $Pt_n$ from outside, also inputs therein the decoded left synthesized depth map M'd from the depth map decoding unit 14, thereby creates the left residual video Lv, and outputs the left residual video Lv to the residual video encoding unit 16. The projected video prediction unit 15 includes the occlusion hole detection unit 151 and the residual video segmentation unit 152.

The occlusion hole detection unit 151 inputs therein the reference viewpoint video C and the left specified viewpoints $Pt_1$ to $Pt_n$ from outside, also inputs therein the decoded left synthesized depth map M'd from the depth map decoding unit 14, and detects a pixel area which is predicted to constitute an occlusion hole which will be generated when the reference viewpoint video C is projected to the left viewpoint, the intermediate viewpoint, and the left specified viewpoints $Pt_1$ to $Pt_n$. The occlusion hole detection unit 151 produces, as a result of the detection, a hole mask Lh which shows a pixel area to constitute an occlusion hole, and outputs the hole mask Lh to the residual video segmentation unit 152.

In this embodiment, the hole mask Lh is a binary data (0, 1) having a size same as that of such a video as the reference viewpoint video C. Let a value of the hole mask Lh set to "0" with respect to a pixels which can project the reference viewpoint video C to the left viewpoint or the like without becoming an occlusion hole, and, to "1 ", with becoming an occlusion hole.

An occlusion hole OH is described herein assuming a case in which, as illustrated in FIG. 4, the reference viewpoint video C is projected to the left viewpoint using a left viewpoint projected depth map L'd which is a depth map at the left viewpoint.

With a shift of a viewpoint position at which, for example, a camera for taking a video is set up, a pixel of an object on a foreground which is nearer to the viewpoint position is projected to a position farther away from its original position. On the other hand, a pixel of an object on a background which is farther from the viewpoint position is projected to a position nearer to its original position. Thus, as illustrated as a left viewpoint projected video $L^C$ of FIG. 4, if a circular object as the foreground is shifted rightward, a crescent-shaped black portion in which no corresponding pixels have been present in the reference viewpoint video C because of being behind the foreground, is left as an area to which no pixel has been projected. The area to which no pixel has been projected is referred to as the occlusion hole OH.

Note that not only in the above-described example but also in such a case where a video is projected to a given viewpoint using a depth map on the video (wherein a viewpoint of the depth map may not necessarily be the same as that of the video), an occlusion hole is typically produced.

On the other hand, in the left viewpoint video L in which the object on the foreground is taken with a deviation in the right direction, a pixel in the occlusion hole OH is taken. In this embodiment, the residual video segmentation unit 152 to be described hereinafter creates the left residual video Lv by extracting a pixel present in a pixel area of the occlusion hole OH from the left viewpoint video L.

This makes it possible to encode not all of the left viewpoint video L but only a residual video thereof excluding a projectable pixel area from the reference viewpoint video C, which results in a high encoding efficiency and a reduction in a volume of transmitted data. Note that the occlusion hole detection unit 151 will be described in detail hereinafter.

If such an encoding method is used in which the left synthesized depth map Md is reversibly encoded and decoded, the left synthesized depth map Md, instead of the decoded left synthesized depth map M'd, can be used for detecting a pixel area to constitute an occlusion hole. In this case, the depth map decoding unit 14 is not necessary. However, since transformation using an encoding method with a high compression ratio is typically non-reversible, it is preferable to employ the decoded left synthesized depth map M'd as in this embodiment. This allows an accurate prediction of an occlusion hole produced when the stereoscopic video decoding device 2 (see FIG. 1) creates a multi-view video using the decoded left synthesized depth map M'd.

The residual video segmentation unit 152: inputs therein the left viewpoint video L from outside; also inputs therein the hole mask Lh from the occlusion hole detection unit 151; and creates the left residual video Left viewpoint by extracting a pixel in a pixel area to constitute an occlusion hole shown in the hole mask Lh, from the left viewpoint video L. The residual video segmentation unit 152 outputs the created left residual video Lv to the residual video encoding unit 16.

Note that the left residual video Lv is assumed to have an image data format same as those of the reference viewpoint video C and the left viewpoint video L. Also, a pixel in a pixel area not to constitute an occlusion hole is assumed to have a prescribed pixel value. In a case of 8 bit pixel data per component, for example, the prescribed value preferably but not necessarily takes a value of 128, which is an intermediate pixel value, with respect to both the luminance component (Y) and the color difference component (Pb, Pr). This makes it possible to reduce variation in quantity between portions with and without a residual video, thus allowing a distortion caused when encoding the left residual video Lv to be reduced. Additionally, when the stereoscopic video decoding device 2 (see FIG. 1) creates a video at the left specified viewpoint Pt, if an appropriate pixel is not obtained from the left residual video Lv, it becomes possible to detect a pixel not having become an occlusion hole, in the left residual video Lv and to interpolate the pixel with a neighboring valid pixel having a residual video.

The residual video encoding unit 16: inputs therein the left residual video Lv from the residual video segmentation unit 152; creates the encoded residual video Iv by encoding the left residual video Lv using a prescribed encoding method; and outputs the created encoded residual video Iv as a residual video bit stream to the transmission path.

The encoding method used herein may be the same as the above-described encoding method in which the reference viewpoint video C is encoded, or may be another encoding method having a higher encoding efficiency such as, for example, HEVC.

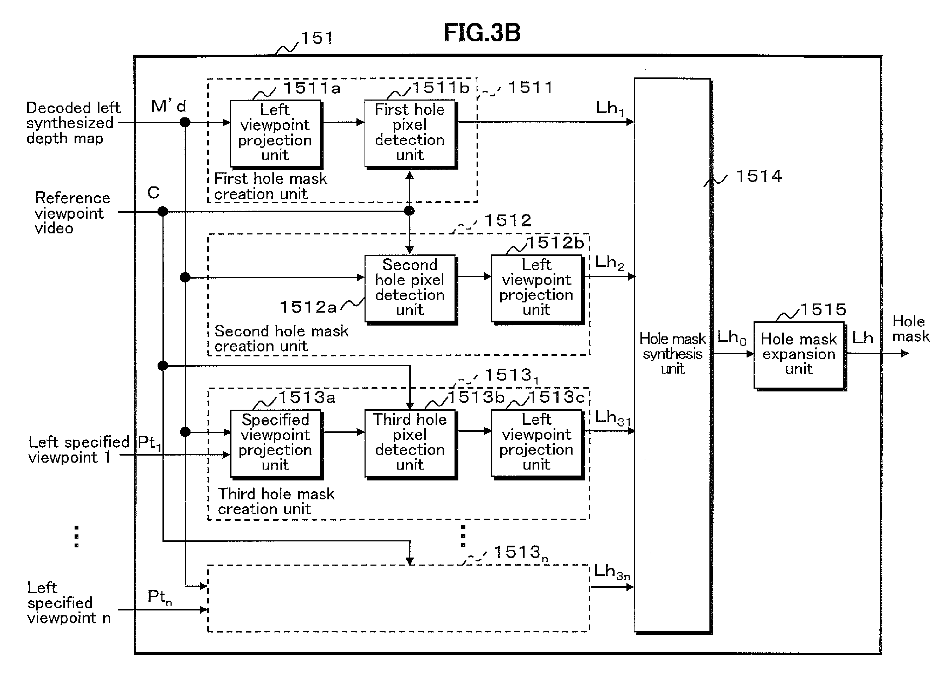

Next is described in detail the occlusion hole detection unit 151 with reference to FIG. 3B (as well as FIG. 2 and FIG. 4 where necessary).

The occlusion hole detection unit 151 includes, as illustrated in FIG. 3B, a first hole mask creation unit 1511, a second hole mask creation unit 1512, a third hole mask creation unit 1513 ($1513_1$ to $1513_n$), a hole mask synthesis unit 1514, and a hole mask expansion unit 1515.

The first hole mask creation unit 1511: predicts a pixel area to constitute an occlusion hole OH when the reference viewpoint video C is projected to the left viewpoint; creates a hole mask $Lh_1$ indicating the pixel area; and outputs the hole mask $Lh_1$ to the hole mask synthesis unit 1514. The first hole mask creation unit 1511 is thus configured to include a left viewpoint projection unit 1511 a and a first hole pixel detection unit 1511 b.

The left viewpoint projection unit (which may also be referred to as an auxiliary viewpoint projection unit) 1511 a: inputs therein the decoded left synthesized depth map M'd from the depth map decoding unit 14; creates the left viewpoint projected depth map L'd which is a depth map at the left viewpoint by projecting the decoded left synthesized depth map M'd to the left viewpoint; and outputs the created left viewpoint projected depth map L'd to the hole pixel detection unit 1511 b.

Note that the left viewpoint projected depth map L'd can be created by shifting rightward each of pixels of the decoded left synthesized depth map M'd which is a depth map at an intermediate viewpoint, by the number of pixels 1/2 times a depth value of the pixel of interest. After shifting all the pixels, if a plurality of pixels are present in the same position, a pixel having the largest depth value of a plurality of the pixels is determined as a depth value in the position, similarly to the above-described case in which the intermediate viewpoint projection units 121, 122 (see FIG. 3A) create respective depth maps at the intermediate viewpoint. If a valid pixel is not present, similarly to the above-described case in which the map synthesis unit 123 creates a depth map at the intermediate viewpoint, a depth value of a valid pixel within a prescribed range is determined as a depth value of a pixel of interest. In this case, the smallest depth value of those of a plurality of neighboring pixels within the prescribed range may be determined as the depth value of the pixel of interest.

The first hole pixel detection unit (which may also be referred to as a hole pixel detection unit) 1511b: inputs therein the reference viewpoint video C from outside; inputs therein the left viewpoint projected depth map L'd from the left viewpoint projection unit 1511 a; predicts a pixel area to constitute the occlusion hole OH when the reference viewpoint video C is projected to the left viewpoint, using the left viewpoint projected depth map L'd; thereby creates the hole mask $Lh_1$ indicating the predicted pixel area; and outputs the created hole mask $Lh_1$ to the hole mask synthesis unit 1514.

Note that the first hole pixel detection unit 1511 b sequentially performs median filtering in pixel sizes of 3x3 and 5x5 to the left viewpoint projected depth map L'd inputted from the left viewpoint projection unit 1511 a. This makes it possible to reduce an error in a depth value to be caused by encoding, decoding and projecting. The first hole pixel detection unit 1511 b then detects an pixel area to constitute the occlusion hole OH using the left viewpoint projected depth map L'd having been subjected to the median filtering.

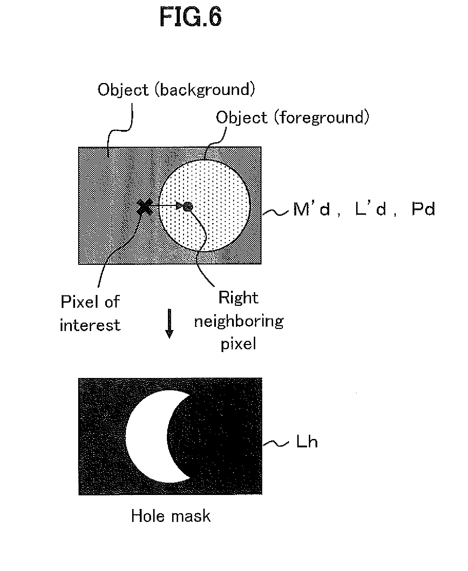

How to predict a pixel area to constitute the occlusion hole OH using the left viewpoint projected depth map L'd is described with reference to FIG. 6.

As illustrated in FIG. 6, in a depth map (the left viewpoint projected depth map L'd), if a depth value of a pixel of interest as a target to be determined whether or not the pixel becomes an occlusion hole (a pixel indicated by "x" in the figure) is compared to a depth value of a pixel in a rightward neighboring pixel of interest (a pixel indicated by "●" in the figure), and the depth value of the rightward neighboring pixel is larger than that of the pixel of interest, the pixel of interest is determined to constitute an occlusion hole. Then, a hole mask Lh which indicates that the pixel of interest becomes an occlusion hole is created. Note that in the hole mask Lh illustrated in FIG. 6, a pixel which becomes an occlusion hole is shown in white, and a pixel which does not become an occlusion hole is shown in black.

How to detect a pixel to become an occlusion hole is described in detail. Let x be a depth value of a pixel of interest; and let y be a depth value of a pixel away rightward from the pixel of interest by a prescribed number of pixels Pmax. The prescribed number of pixels Pmax away rightward from the pixel of interest herein is, for example, the number of pixels equivalent to a maximum amount of parallax in a corresponding video, that is, an amount of parallax corresponding to a maximum depth value. Further, let a pixel away rightward from the pixel of interest by the number of pixels equivalent to an amount of parallax corresponding to a difference between the two depth values, g=(y-x), be called a rightward neighboring pixel. Then let a depth value of the rightward neighboring pixel be z. If an expression as follows is satisfied, the pixel of interest is determined as a pixel to become an occlusion hole.

$$(z-x) \geqq kg > (\text{a prescribed value}) \quad ...\text{Expression 1}$$

In Expression 1, k is a prescribed coefficient and may take a value, for example, from about "0.8" to about "0.6". Multiplying the coefficient k of such a value less than "1" makes it possible to correctly detect an occlusion hole, even if a depth value of an object as a foreground somewhat fluctuates owing to a shape of the object or an inaccurate depth value.

Note that, even if no occlusion hole is detected as a result of the above-described determination, there is still a possibility that a small-width foreground object is overlooked. It is thus preferable to repeat the above-described detection of an occlusion hole with the prescribed number of pixels Pmax being reduced by half each time. The number of repeating the detections may be, for example, four, which can almost eliminate a possibility of overlooking the occlusion hole.

In Expression 1, the "prescribed value" may take a value of, for example, "4". Because the above-described condition that the difference of depth values between the pixel of interest and the rightward neighboring pixel is larger than the prescribed value is added to Expression 1, it is possible to achieve that: a portion having discontinuous depth values but substantially too small to generate occlusion will not be detected; the number of pixels extracted as the left residual video Lv is reduced; and a data volume of the encoded residual video Iv is also reduced.

As illustrated in FIG. 3B, the second hole mask creation unit 1512: predicts a pixel area to constitute an occlusion hole OH when the reference viewpoint video C is projected to the intermediate viewpoint; creates the hole mask $Lh_2$ indicating the pixel area; and outputs the created hole mask $Lh_2$ to the hole mask synthesis unit 1514. The second hole mask creation unit 1512 is thus configured to include a second hole pixel detection unit 1512a and a left viewpoint projection unit 1512b.

The second hole pixel detection unit 1512a: inputs therein the reference viewpoint video C from outside; also inputs therein decoded left synthesized depth map M'd from the depth map decoding unit 14; detects a pixel area to constitute an occlusion hole when the reference viewpoint video C is projected to the intermediate viewpoint, creates a hole mask at the intermediate viewpoint indicating the pixel area; and outputs the created hole mask to the left viewpoint projection unit 1512b.

The second hole pixel detection unit 1512a then sequentially performs the median filtering in pixel sizes of 3x3 and 5x5 to the decoded left synthesized depth map M'd so as to reduce an error in an depth value caused by encoding and decoding, and detects a pixel area to constitute an occlusion hole.

Note that how the second hole pixel detection unit 1512a creates a hole mask is similar to how the first hole pixel detection unit 1511 b creates the hole mask $Lh_1$ as described above, except that the depth maps used are different.

The left viewpoint projection unit (which may also be referred to as a second auxiliary viewpoint projection unit) 1512b inputs therein a hole mask at the intermediate viewpoint from the second hole pixel detection unit 1512a and creates the hole mask $Lh_2$ by projecting the inputted hole mask to the left viewpoint. The left viewpoint projection unit 1512b outputs the created hole mask $Lh_2$ to the hole mask synthesis unit 1514.

Note that a projection of the hole mask at the intermediate viewpoint to the left viewpoint can be created by shifting rightward each of pixels of the hole mask at the intermediate viewpoint, by the number of pixels 1/2 times a depth value of a corresponding pixel in the decoded left synthesized depth map M'd.

As illustrated in FIG. 3B, the third hole mask creation units $1513_1$ to $1513_n$ (which may also be collectively referred to as 1513): predict respective pixel areas to constitute the occlusion holes OH when the reference viewpoint video C is projected to the left specified viewpoints $Pt_1$ to $Pt_n$, respectively; create hole masks $Lh_{31}$ to $Lh_{3n}$ indicating the respective pixel areas, and output the hole masks $Lh_{31}$ to $Lh_{3n}$ to the hole mask synthesis unit 1514. The third hole mask creation unit 1513 ($1513_1$ to $1513_n$) is thus configured to include a specified viewpoint projection unit 1513a, a third hole pixel detection unit 1513b, and a left viewpoint projection unit 1513c.

The specified viewpoint projection unit (specified viewpoint projection unit) 1513a: inputs therein the decoded left synthesized depth map M'd from the depth map decoding unit 14; projects the received decoded left synthesized depth map M'd to the left specified viewpoint Pt ($Pt_1$ to $Pt_n$); creates a left specified viewpoint depth map which is a depth map at the left specified viewpoint Pt ($Pt_1$ to $Pt_n$); and outputs the created left specified viewpoint depth map to the third hole pixel detection unit 1513b.

The depth maps at the left specified viewpoints $Pt_1$ to $Pt_n$ can be created as follows. As illustrated in FIG. 5A, let a distance from the intermediate viewpoint to the left specified viewpoint be "a" and a distance from the reference viewpoint to the left viewpoint be "b". Each of pixels of the decoded left synthesized depth map M'd which is a depth map at the intermediate viewpoint is shifted by the number of pixels a/b times a depth value of a corresponding pixel in the decoded left synthesized depth map M'd, in a direction opposite to the left specified viewpoint as viewed from the intermediate viewpoint (that is, in a right direction in the example of FIG. 5A).

The third hole pixel detection unit 1513b: inputs therein the reference viewpoint video C from outside; also inputs therein the left specified viewpoint depth map from the specified viewpoint projection unit 1513a; detects a pixel area which constitutes an occlusion hole when the reference viewpoint video C is projected to the corresponding left specified viewpoints $Pt_1$ to $Pt_n$; creates hole masks at the left specified viewpoints $Pt_1$ to $Pt_n$ indicating the pixel areas; and outputs the created hole masks to the left viewpoint projection unit 1513c.

Note that the third hole pixel detection unit 1513b interpolates an occlusion hole generated on the left specified viewpoint projection depth map inputted from the specified viewpoint projection unit 1513a, with a valid pixel surrounding the occlusion hole, and sequentially performs the median filtering in pixel sizes of 3x3 and 5x5 so as to reduce an error in an depth value caused by encoding, decoding, and projection. The third hole pixel detection unit 1513b then detects a pixel area which becomes an occlusion hole, using the left specified viewpoint projection depth map.

Note that how the third hole pixel detection unit 1513b creates a hole mask is similar to how the first hole pixel detection unit 1511 b creates the hole mask $Lh_1$ as described above, except that the respective depth maps used are different.

The left viewpoint projection unit (which may also be referred to as a third auxiliary viewpoint projection unit) 1513c: inputs therein respective hole masks at the corresponding left specified viewpoints $Pt_1$ to $Pt_n$ from the third hole pixel detection unit 1513b; and creates hole masks $Lh_{31}$ to $Lh_{3n}$ by projecting the inputted hole masks to the left viewpoint. The left viewpoint projection unit 1513c outputs the created hole masks $Lh_{31}$ to $Lh_{3n}$ to the hole mask synthesis unit 1514.

The hole masks $Lh_{31}$ to $Lh_{3n}$ at the left viewpoint can be created as follows. As illustrated in FIG. 5A, let the distance from the left specified viewpoint to the left viewpoint be "d" and the distance from the reference viewpoint to the left viewpoint be "b". Each of pixels of the hole masks at the left specified viewpoint is shifted rightward by the number of pixels corresponding to a value d/b times a depth value of a pixel in a depth map at the left specified viewpoint corresponding to the each of the pixels of the hole masks.

The left specified viewpoints $Pt_1$ to $Pt_n$ are used as viewpoints in a multi-view video created by the stereoscopic video decoding device 2 (see FIG. 1) and are preferably but not necessarily the same as the viewpoints inputted to the stereoscopic video decoding device 2. However, if the viewpoints inputted are not known, viewpoints created by dividing a portion between the reference viewpoint and an auxiliary viewpoint (the left or right viewpoint) at equal intervals may be used. The number of the left specified viewpoints $Pt_1$ to $Pt_n$ may be one or two or more. In this embodiment, the third hole mask creation unit 1513 ($1513_1$ to $1513_n$) is provided, and the hole masks $Lh_{31}$ to $Lh_{3n}$ of a pixel area are also provided, which is expected to constitute an occlusion hole at a time of projection to the left specified viewpoints $Pt_1$ to

$Pt_n$ actually specified by the stereoscopic video decoding device 2 (see FIG. 1). The configuration is advantageous to creating the left residual video Lv more suitable.

The hole mask synthesis unit 1514 inputs therein: the hole mask $Lh_1$ from the first hole mask creation unit 1511, the hole mask $Lh_2$ from the second hole mask creation unit 1512, and the hole mask $Lh_{31}$ to $Lh_{3n}$ outputted from the third hole mask creation units $1513_1$ to $1513_n$, as respective results of detection of a pixel area to constitute an occlusion hole. The hole mask synthesis unit 1514 then: creates a single hole mask $Lh_0$ by synthesizing the inputted hole masks (detection results); and outputs the created hole mask $Lh_0$ to the hole mask expansion unit 1515.

Note that the hole mask synthesis unit 1514 computes a logical add of a pixel area to constitute an occlusion hole with respect to a plurality of the hole masks $Lh_1$, $Lh_2$, and $Lh_{31}$ to $Lh_{3n}$, and determines a pixel having at least one hole mask calculated to constitute an occlusion hole as a pixel to become an occlusion hole.

The hole mask expansion unit 1515 inputs therein the hole mask $Lh_0$ from the hole mask synthesis unit 1514 and makes a pixel area to constitute an occlusion hole at the hole mask $Lh_0$ expand by a prescribed number of pixels in all directions. The hole mask expansion unit 1515 outputs the expanded hole mask Lh to the residual video segmentation unit 152 (see FIG. 2).

The prescribed number of pixels to be expanded hi may be, for example, 16. In this embodiment, the hole mask Lh created by expanding the hole mask $Lh_0$ by a prescribed number of pixels is used for extracting the left residual video Lv. This makes it possible for the stereoscopic video decoding device 2 (see FIG. 1) to, in creating a multi-view video, complement different occlusion holes according to different viewpoints (specified viewpoints) and copy and use an appropriate pixel from the left residual video Lv.

Note that the hole mask expansion unit 1515 may be put ahead of the hole mask synthesis unit 1514 in the figure. That is, the same advantageous effect can still be achieved even if the hole masks are first expanded, and then, the logical add of pixel areas is computed.

[Configuration of stereoscopic video decoding device]

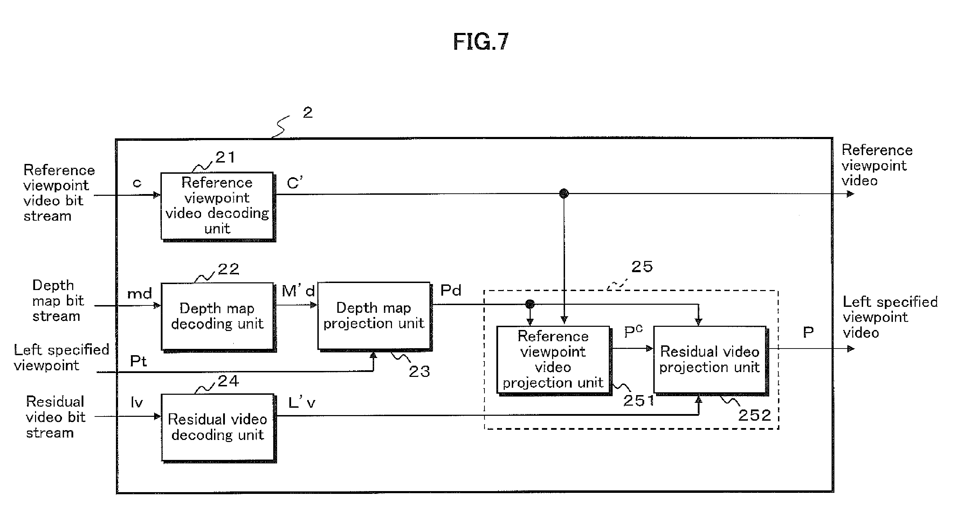

Next is described a configuration of the stereoscopic video decoding device 2 with reference to FIG. 7 through FIG. 9 (as well as FIG. 1 where necessary) according to the first embodiment. The stereoscopic video decoding device 2 creates a multi-view video by decoding a bit stream transmitted from the stereoscopic video encoding device 1 via the transmission path as illustrated in FIG. 2.

As illustrated in FIG. 7, the stereoscopic video decoding device (which may also be simply referred to as a "decoding device" hereinafter) 2 according to the first embodiment includes a reference viewpoint video decoding unit 21, a depth map decoding unit 22, a depth map projection unit 23, a residual video decoding unit 24, and a projected video synthesis unit 25. The projected video synthesis unit 25 further includes a reference viewpoint video projection unit 251 and a residual video projection unit 252.

The decoding device 2: inputs therein, from the encoding device 1, the encoded reference viewpoint video c outputted as a reference viewpoint video bit stream, the encoded depth map md outputted as a depth map bit stream, and the encoded residual video lv outputted as a residual video bit stream; creates a reference viewpoint video (decoding reference viewpoint video) C' which is a video at the reference viewpoint and the left specified viewpoint video (a specified viewpoint video) P which is a video at a left specified viewpoint (a specified viewpoint) Pt, by processing the inputted data; outputs the videos C, P, to the stereoscopic video display device 4; and makes the stereoscopic video display device 4 display a stereoscopic video. Note that the number of the left specified viewpoint videos P created by the decoding device 2 may be one or two or more.

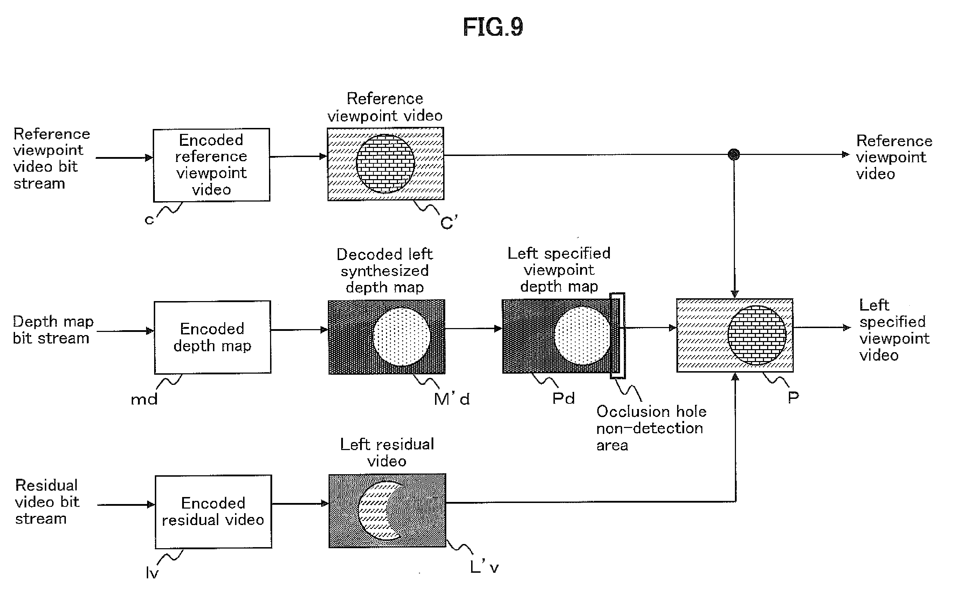

Next are described components of the decoding device 2 by referring to an example of videos and depth maps illustrated in FIG. 9.

The reference viewpoint video decoding unit 21: inputs therein the encoded reference viewpoint video c outputted from the encoding device 1 as the reference viewpoint video bit stream; and creates the reference viewpoint video (decoded reference viewpoint video) C' by decoding the encoded reference viewpoint video c in accordance with the encoding method used. The reference viewpoint video decoding unit 21 outputs the created reference viewpoint video C' to the reference viewpoint video projection unit 251 of the projected video synthesis unit 25 and also to the stereoscopic video display device 4 as a video (a reference viewpoint video) of a multi-view video.

The depth map decoding unit 22: inputs therein the encoded depth map md outputted from the encoding device 1 as the depth bitmap stream; and creates the decoded left synthesized depth map (decoded intermediate viewpoint depth map) M'd which is a depth map at the intermediate viewpoint, by decoding the encoded depth map md in accordance with the encoding method used. The created decoded left synthesized depth map M'd is the same as the decoded left synthesized depth map M'd created by the depth map decoding unit 14 (see FIG. 2) of the encoding device 1. The depth map decoding unit 22 then outputs the created decoded left synthesized depth map M'd to the depth map projection unit 23.

The depth map projection unit 23: inputs therein the decoded left synthesized depth map M'd which is a depth map at the intermediate viewpoint, from the depth map decoding unit 22; and creates a left specified viewpoint depth map Pd which is a depth map at the left specified viewpoint Pt, by projecting the inputted decoded left synthesized depth map M'd to the left specified viewpoint Pt. The depth map projection unit 23 interpolates an occlusion hole on the projected left specified viewpoint depth map Pd, with a valid pixel surrounding the occlusion hole; sequentially performs the median filtering in pixel sizes of 3x3 and 5x5 so as to reduce an error in an depth value caused by encoding, decoding, and projection; and outputs the created left specified viewpoint depth map Pd to the reference viewpoint video projection unit 251 and the residual video projection unit 252 of the projected video synthesis unit 25.

Note that the left specified viewpoint Pt herein is the same as the left specified viewpoint Pt at the multi-view video created by the decoding device 2. The left specified viewpoint Pt may be inputted from a setting unit (not shown) predetermined by the decoding device 2 or may be inputted in response to a user's entry via an input means such as a keyboard from outside. The number of the left specified viewpoints Pt may be one or two or more. If two or more left specified viewpoints Pt are present, the left specified viewpoint depth maps Pd at respective left specified viewpoints Pt are sequentially created and are sequentially outputted to the projected video synthesis unit 25.

The residual video decoding unit 24: inputs therein the encoded residual video Iv outputted from the encoding device 1 as the residual video bit stream; creates the left residual video (decoded residual video) L'v by decoding the encoded residual video Iv in accordance with the encoding method used; and outputs the created left residual video L'v to the residual video projection unit 252 of the projected video synthesis unit 25.

The projected video synthesis unit 25 inputs therein the reference viewpoint video C' from the reference viewpoint video decoding unit 21, the left residual video L'v from the residual video decoding unit 24, and the left specified viewpoint depth map Pd from the depth map projection unit 23; creates a left specified viewpoint video P which is a video at the left specified viewpoint Pt, using the inputted data; and outputs the created left specified viewpoint video P to the stereoscopic video display device 4 as one of videos constituting the multi-view video. The projected video synthesis unit 25 is thus configured to include the reference viewpoint video projection unit 251 and the residual video projection unit 252.

The reference viewpoint video projection unit 251 of the projected video synthesis unit 25: inputs therein the reference viewpoint video C' from the reference viewpoint video decoding unit 21 and the left specified viewpoint depth map Pd from the depth map projection unit 23; and creates a left specified viewpoint video $P^C$ with respect to a pixel with which the reference viewpoint video C' is projectable to the left specified viewpoint Pt, as a video at the left specified viewpoint Pt. The reference viewpoint video projection unit 251 outputs the created left specified viewpoint video $P^C$ to the residual video projection unit 252. Note that details of the configuration of the reference viewpoint video projection unit 251 are described hereinafter.

The residual video projection unit 252 of the projected video synthesis unit 25: inputs therein the left residual video L'v from the residual video decoding unit 24 and the left specified viewpoint depth map Pd from the depth map projection unit 23; creates the left specified viewpoint video P as a video at the left specified viewpoint Pt, by interpolating a pixel with which the reference viewpoint video C' is not projectable, that is, a pixel to become an occlusion hole. The residual video projection unit 252 outputs the created left specified viewpoint video P to the stereoscopic video display device 4 (see FIG. 1). Note that details of the configuration of the residual video projection unit 252 are described hereinafter.

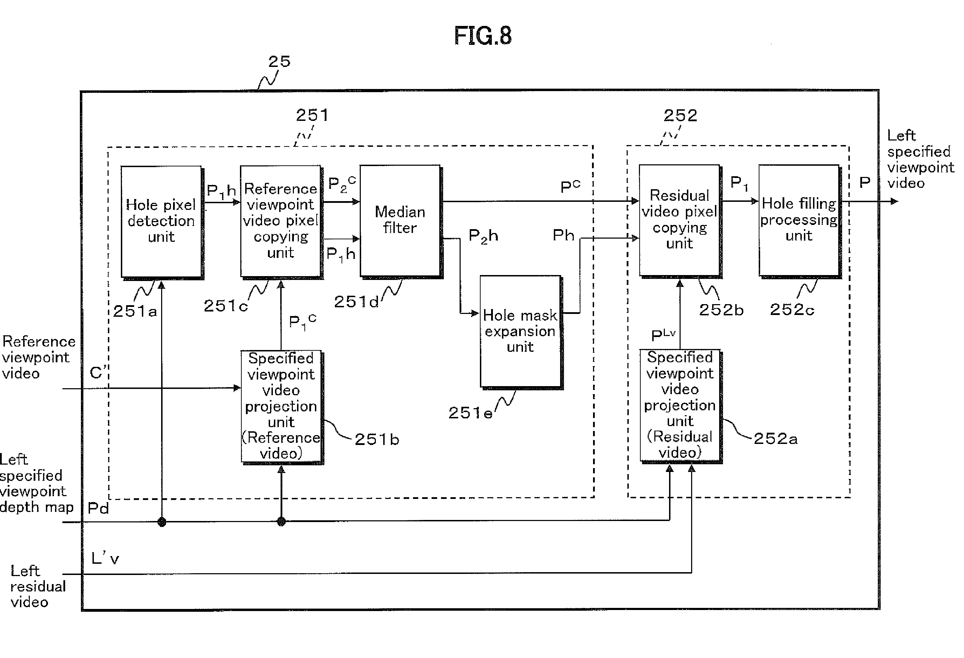

Next are described details of the configuration of the reference viewpoint video projection unit 251. As illustrated in FIG. 8, the reference viewpoint video projection unit 251 includes a hole pixel detection unit 251 a, a specified viewpoint video projection unit 251 b, a reference viewpoint video pixel copying unit 251 c, a median filter 251 d, and a hole mask expansion unit 251 e.

The hole pixel detection unit 251 a: inputs therein the left specified viewpoint depth map Pd from the depth map projection unit 23; detects a pixel to become an occlusion hole when the reference viewpoint video C' inputted from the reference viewpoint video decoding unit 21 is projected to the left specified viewpoint Pt using the left specified viewpoint depth map Pd; creates a hole mask $P_1h$ indicating an area of the detected pixel as a result of the detection; and outputs the result of the detection to the reference viewpoint video pixel copying unit 251 c.

Next is described how to detect a pixel to become an occlusion hole using the left specified viewpoint depth map Pd. How to detect a pixel to become an occlusion hole by the hole pixel detection unit 251 a uses the left specified viewpoint depth map Pd, in place of the above-described left viewpoint projected depth map L'd of the first hole pixel detection unit 1511 b (see FIG. 3A) of the encoding device 1. If a rightward neighboring pixel of a pixel of interest as a target to be determined whether or not the pixel of interest becomes an occlusion hole has a depth value larger than that of the pixel of interest, then the pixel of interest is detected as a pixel to become an occlusion hole. At this time, viewpoint positions of respective depth maps and respective projection destinations are different, appropriate adjustment is required.

As illustrated in FIG. 5A, let "b" be the distance from the reference viewpoint to the left viewpoint, and "c", a distance from the reference viewpoint to the left specified viewpoint.

Further, let "x" be the depth value of the pixel of interest as a target to be determined whether or not the pixel becomes an occlusion hole, and let "y" be the depth value of the pixel spaced away rightward from the pixel of interest by the prescribed number of pixels Pmax.

Let "z" be a depth value of a pixel away rightward from the pixel of interest by the number of pixels corresponding to a value of "(y-x) (c/b)" which is calculated by multiplying g=(y-x) by (c/b), wherein "g" is a difference between "y" which is the depth value of the pixel away from the pixel of interest by the prescribed number of pixels Pmax, and "x" which is the depth value of the pixel of interest. If an expression as follows is satisfied, the pixel of interest is determined to become an occlusion hole.

$$(z-x) \geqq kg > (a\ prescribed\ value) \quad ...Expression\ 2$$

In Expression 2, k is a prescribed coefficient and may take a value, for example, from about "0.8" to about "0.6". Multiplying the coefficient k of such a value less than "1" makes it possible to correctly detect an occlusion hole, even if a depth value of an object as a foreground somewhat fluctuates owing to a shape of the object or an inaccurate depth value.

In Expression 2, the "prescribed value" may take a value of, for example, "4". Because the above-described condition that the difference of depth values between the pixel of interest and the rightward neighboring pixel is larger than the prescribed value is added to Expression 1, it is possible to achieve that: a portion having discontinuous depth values substantially too small to generate occlusion will not be detected; and an appropriate pixel is copied from a left specified viewpoint projection video $P_1^C$ which is a video projecting the reference viewpoint video C' by the reference viewpoint video pixel copying unit 251 c to be described hereinafter.

In this embodiment, the prescribed number of pixels away rightward from a pixel of interest is set at four levels. Similar determinations are made at each of the levels and, if the pixel of interest is determined to become an occlusion hole at least one of the levels, the pixel of interest is conclusively determined to become an occlusion hole.

The prescribed number of pixels Pmax away rightward from the pixel of interest at four levels is as follows, for example. At the first level, the number of pixels Pmax is the number of pixels corresponding to the largest amount of parallax in a video of interest, that is, the number of pixels corresponding to the largest depth value. At the second level, the number of pixels Pmax is 1/2 times the number of pixels set at the first level. At the third level, the number of pixels Pmax is 1/4 times the number of pixels set at the first level. Finally, at the fourth level, the number of pixels Pmax is 1/8 times the number of pixels set at the first level.

As described above, a pixel to become an occlusion hole is detected by referring a difference of depth values between a pixel of interest and a pixel away from the pixel of interest by a prescribed number of pixels at a plurality of levels. This is advantageous because, an occlusion hole caused by a foreground object having a small width can be appropriately detected, which is otherwise overlooked, when a large amount of parallax is set. Note that the number of the levels at which the prescribed number of pixels Pmax away rightward from the pixel of interest is set is not limited to 4 and may be 2, 3, or 5 or more.

In detecting an occlusion hole, the hole pixel detection unit 251 a skips the detection from a right edge of a screen to a prescribed range which is an area not included in the left residual video (residual video) L'v, as an occlusion hole non-detection area. If an occlusion hole is generated in the area, the hole filling processing unit 252c fills the occlusion hole. This prevents an occlusion hole not included in the residual video from being expanded by the hole mask expansion unit 251e and also prevents a quality of a synthesized video from decreasing. The prescribed range as the occlusion hole non-detection area is, for example, as illustrated in FIG. 9, within a range from a right edge of a video to a pixel corresponding to the largest amount of parallax.

The specified viewpoint video projection unit 251 b: inputs therein the reference viewpoint video C' from the reference viewpoint video decoding unit 21 and the left specified viewpoint depth map Pd from the depth map projection unit 23; creates the left specified viewpoint projection video $P_1^C$ which is a video created by projecting the reference viewpoint video C' to the left specified viewpoint Pt; and outputs the created left specified viewpoint projection video $P_1^C$ to the reference viewpoint video pixel copying unit 251c.

As illustrated in FIG. 5A, let "b" be the distance from the reference viewpoint to the left viewpoint x, and "c", the distance from the reference viewpoint to the left specified viewpoint. At this time, the specified viewpoint video projection unit 251 b: shifts each of pixels on the left specified viewpoint depth map Pd leftward by the number of pixels corresponding to a value "c/b" times a depth value at a position of each of the pixels; extracts a pixel at a position to which each of the pixels is shifted leftward, from the reference viewpoint video C'; takes a value of the extracted pixel as a pixel value at a position of the referred depth value, to thereby create the left specified viewpoint projection video $P_1^C$.

The reference viewpoint video pixel copying unit 251 c: inputs therein the left specified viewpoint projection video $P_1^C$ from the specified viewpoint video projection unit 251 b and the hole mask $P_1h$ from the hole pixel detection unit 251 a; copies a pixel with which the reference viewpoint video C' is projectable to the left specified viewpoint Pt, without becoming an occlusion hole, based on the inputted data; and thereby creates the left specified viewpoint video $P_2^C$.

The reference viewpoint video pixel copying unit 251 c then outputs the created left specified viewpoint video

$P_2^C$ and the inputted hole mask $P_1h$ to the median filter 251d.

Note that, in creating the left specified viewpoint video $P_2^C$, the reference viewpoint video pixel copying unit 251c performs an initialization processing with regard to all the pixel values of the left specified viewpoint video $P_2^C$, in which prescribed values are set to all the pixel values. Let the prescribed value be the same as the pixel values set to a pixel without having a residual video by the residual video segmentation unit 152 (see FIG. 2) of the encoding device 1 (for example, in a case of 8 bit pixel data per component, "128" with respect to both the luminance component (Y) and the color difference component (Pb, Pr)). The left specified viewpoint video $P_2^C$ to which the prescribed values are set to a pixel to become an occlusion hole is thereby created.

The median filter 251 d: inputs therein the left specified viewpoint video $P_2^C$ and the hole mask $P_1h$ from the reference viewpoint video pixel copying unit 251 c; performs median filtering to each of the inputted data; thereby creates the left specified viewpoint video $P^C$ and the hole mask $P_2h$, respectively; and outputs the created left specified viewpoint video $P^C$ to a residual video pixel copying unit 252b of the residual video projection unit 252 and the created hole mask $P_2h$ to the hole mask expansion unit 251 e.

In the median filtering to which the left specified viewpoint video $P_2^C$ is subjected, a filter in a pixel size of, for example, 3x3 can be used. This makes it possible to, even if there is a pixel to become an isolated occlusion hole without being detected by the hole pixel detection unit 251 a, despite absence of a corresponding valid pixel in the left specified viewpoint projection video $P_1^C$, interpolate the pixel with a median of values of surrounding pixels in the 3x3 pixel area.

Note that, if a pixel having a valid pixel value before the median filtering is changed to, after the processing, has a not valid pixel value indicating that the pixel becomes an occlusion hole, the pixel is regarded as having the valid pixel value as it was before the processing, not using the result of the processing.

The hole mask expansion unit 251 e: inputs therein the hole mask $P_2h$ from the median filter 251d; creates a hole mask Ph by expanding a pixel area to become an occlusion hole on the hole mask $P_2h$ by a prescribed number of pixels; and outputs the created hole mask Ph to the residual video pixel copying unit 252b of the residual video projection unit 252.

The prescribed number of pixels by which the pixel area is expanded may be, for example, 8. The expansion processing makes it possible to, even if the reference viewpoint video pixel copying unit 251 c erroneously copies a pixel from the left specified viewpoint projection video $P_1^C$ because of an error in creating the left specified viewpoint depth map Pd, return the erroneously-copied pixel to a state of "no pixel" which is a pixel to substantially become an occlusion hole. Note that the erroneously-copied pixel is to have an appropriate pixel value copied by the residual video projection unit 252 to be described hereinafter.

Next are described details of the configuration of the residual video projection unit 252. The residual video projection unit 252 includes, as illustrated in FIG. 8, the specified viewpoint video projection unit 252a, the residual video pixel copying unit 252b, and the hole filling processing unit 252c.

The specified viewpoint video projection unit 252a: inputs therein the left residual video L'v from the residual video decoding unit 24 and the left specified viewpoint depth map Pd from the depth map projection unit 23; creates a left specified viewpoint projection residual video $P^{Lv}$ which is a video created by projecting the left residual video L'v to the left specified viewpoint Pt; and outputs the created left specified viewpoint projection residual video $P^{Lv}$ to the residual video pixel copying unit 252b.

As illustrated in FIG. 5A, let the distance from the reference viewpoint to the left viewpoint be "b", and let the distance from the left viewpoint to the left specified viewpoint be "d". At this time, the specified viewpoint video projection unit 252a shifts each of pixels on the left specified viewpoint depth map Pd leftward by the number of pixels corresponding to a value "d/b" times a depth value at a position of each of the pixels; extracts a pixel at a position to which each of the pixels is shifted rightward, from the left residual video L'v; takes a value of the extracted pixel as a pixel value at a position of the referred depth value, to thereby create the left specified viewpoint projection residual video PLv.

The residual video pixel copying unit 252b: inputs therein the left specified viewpoint video $P^C$ from the median filter 251d of the reference viewpoint video projection unit 251, the hole mask Ph from the hole mask expansion unit 251 e, and the left specified viewpoint projection residual video $P^{Lv}$ from the specified viewpoint video projection unit 252a; extracts a pixel value of a pixel which has become an occlusion hole from the left specified viewpoint projection residual video $P^{Lv}$, based on the inputted data; copies the extracted pixel value to the left specified viewpoint video $P^C$; and thereby creates the left specified viewpoint video $P_1$ which is a video at the left specified viewpoint Pt. The residual video pixel copying unit 252b outputs the created left specified viewpoint video $P_1$ to the hole filling processing unit 252c.

The hole filling processing unit 252c: inputs therein the left specified viewpoint video $P_1$ from the residual video pixel copying unit 252b; creates the left specified viewpoint video P by, in the left specified viewpoint video $P_1$, setting an appropriate pixel value to a pixel to which a valid pixel has not been copied by the reference viewpoint video pixel copying unit 251 c and the residual video pixel copying unit 252b; and outputs the created left specified viewpoint video P to the stereoscopic video display device 4 (see FIG. 1) as one of the videos constituting the multi-view video.

The hole filling processing unit 252c: detects, from among pixels in the left specified viewpoint video $P_1$, a pixel whose pixel value is identical to that of a pixel set as an initial value by the reference viewpoint video pixel copying unit 251 c and also a pixel whose pixel value is identical to the initial value within a prescribed range; and thereby creates a hole mask indicating a pixel area containing the above-described pixels. Herein, the expression that the pixel value is identical to the initial value within a prescribed range means that, for example, if initial values of some components are all set at "128", each of the initial values takes a value between 127 and 129 inclusive. This makes it possible to detect an appropriate pixel even when a value of the pixel is more or less changed from the initial value due to an encoding processing or the like.

The hole filling processing unit 252c expands the pixel area indicated by the created hole mask by a prescribed number of pixel values. The prescribed number of pixel values herein is, for example, one pixel value. The hole filling processing unit 252c: interpolates a pixel value of a pixel of interest in the pixel area after the expansion, with a pixel value of a valid pixel surrounding the pixel of interest; and thereby sets an appropriate pixel value of the pixel of interest which becomes an occlusion hole of the left specified viewpoint video $P_1$.

As described above, by expanding the pixel area indicated by the hole mask and filling the hole, it becomes possible to set a pixel value of a pixel not contained in the left residual video L'v, to an appropriate pixel value, preventing a feeling of strangeness in imbalance between the pixel of interest and surrounding pixels thereof. Also, even if the median filtering by the median filter 251 d causes misalignment in the pixels of the hole mask $P_1h$, it is possible to appropriately fill up a pixel to constitute a pixel area of the hole mask.

Note that if the number of pixels to be expanded is set to more than one pixel, the hole can be filled up having less imbalance with the surrounding pixels. In this case, though a resolution of the created left specified viewpoint video P decreases, it is possible to absorb an error in irreversible encoding and decoding of a depth map, thus allowing the fill-up if a hole with a less feeling of strangeness in imbalance with the surrounding pixels. In order to further absorb the error in the irreversible encoding and decoding, the number of pixels to be expanded may be set larger, the higher a compression ratio in the encoding becomes.

[Operations of stereoscopic video encoding device]

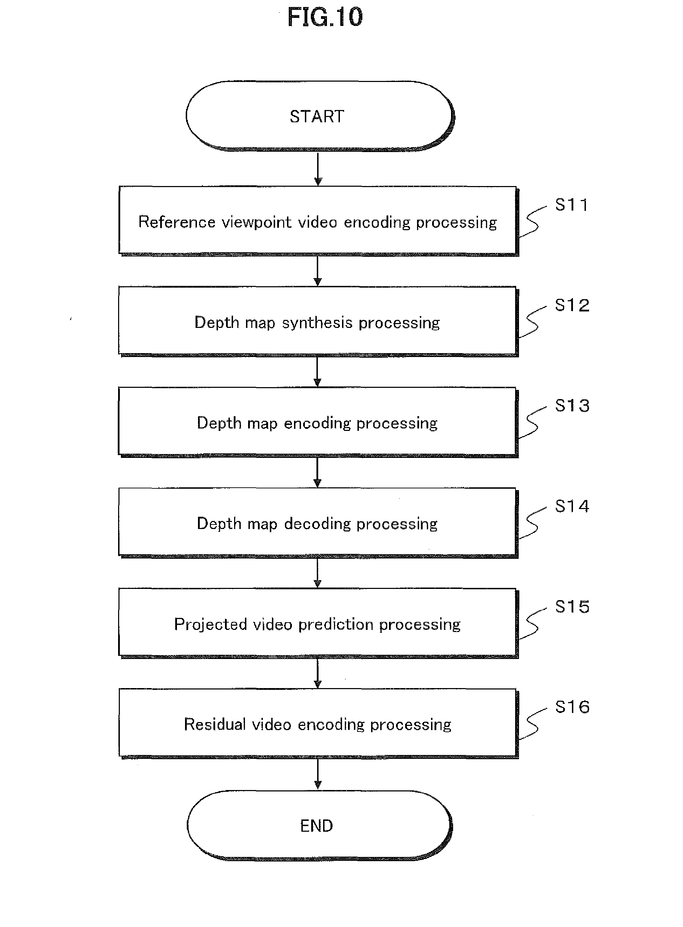

Next are described operations of the stereoscopic video encoding device 1 according to the first embodiment with reference to FIG. 10 (as well as FIG. 1 and FIG. 2 where necessary).

(Reference viewpoint video encoding processing)

The reference viewpoint video encoding unit 11 of the encoding device 1: creates the encoded reference viewpoint video c by encoding the reference viewpoint video C inputted from outside, using a prescribed encoding method; and outputs the created encoded reference viewpoint video c as a reference viewpoint video bit stream (step S11).

(Depth map synthesis processing (intermediate viewpoint depth map synthesis processing))

The depth map synthesis unit 12 of the encoding device 1 synthesizes the left synthesized depth map Md which is a depth map at the intermediate viewpoint which is a viewpoint positioned intermediate between the reference viewpoint and the left viewpoint, using the reference viewpoint depth map Cd and the left viewpoint depth map Ld inputted from outside (step S12).

(Depth map encoding processing)

The depth map encoding unit 13 of the encoding device 1: creates the encoded depth map md by encoding the left synthesized depth map Md synthesized in step S12 using the prescribed encoding method; and outputs the created encoded depth map md as a depth map bit stream (step S13).

(Depth map decoding processing)

The depth map decoding unit 14 of the encoding device 1 creates the decoded left synthesized depth map M'd by decoding the encoded depth map md created in step S13 (step S14).

(Projected video prediction processing)

The projected video prediction unit 15 of the encoding device 1 creates the left residual video Lv using the decoded left synthesized depth map M'd created in step S14 and the left viewpoint video L inputted from outside (step S15).

Note that in step S15, the occlusion hole detection unit 151 of the encoding device 1 detects a pixel to become an occlusion hole using the decoded left synthesized depth map M'd (occlusion hole detection processing) The residual video segmentation unit 152 of the encoding device 1 creates the left residual video Lv by extracting (segmenting) a pixel area constituted by the pixel detected from the left viewpoint video L by the occlusion hole detection unit 151 (a residual video segmentation processing).

(Residual video encoding processing)

The residual video encoding unit 16 of the encoding device 1: creates the encoded residual video Iv by encoding the left residual video Lv created in step S15 using the prescribed encoding method; and outputs the created encoded residual video Iv as a residual video bit stream (step S16).

[Operations of stereoscopic video decoding device]

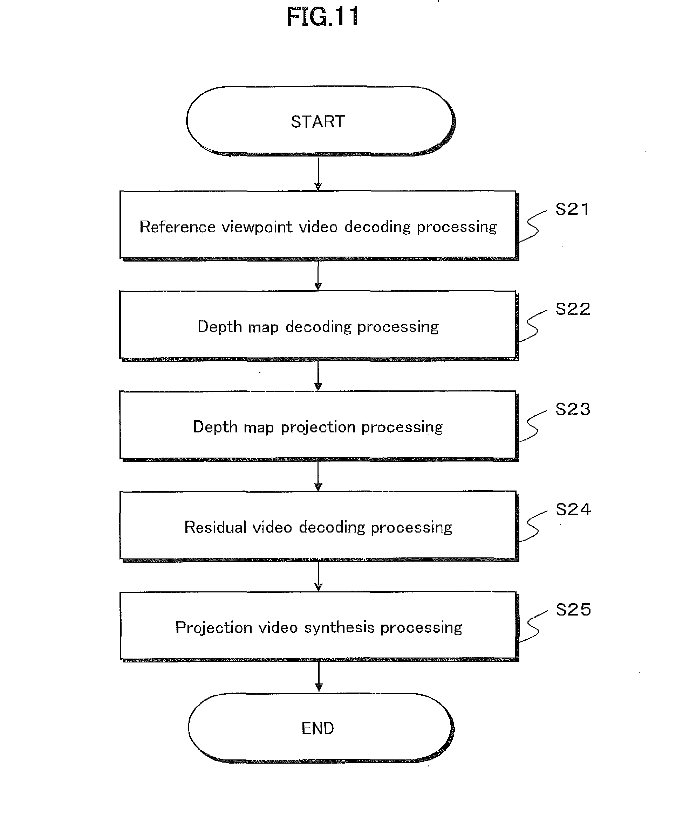

Next are described operations of the stereoscopic video decoding device 2 according to the first embodiment with reference to FIG. 11 (as well as FIG. 1 and FIG. 7 where necessary).

(Reference viewpoint video decoding processing)

The reference viewpoint video decoding unit 21 of the decoding device 2: creates the reference viewpoint video C' by decoding the reference viewpoint video bit stream; and outputs the created reference viewpoint video C' as a video of a multi-view video (step S21).

(Depth map decoding processing)

The depth map decoding unit 22 of the decoding device 2 creates the decoded left synthesized depth map M'd by decoding the depth map bit stream (step S22).

(Depth map projection processing)

The depth map projection unit 23 of the decoding device 2 creates the left specified viewpoint depth map Pd which is a depth map at the left specified viewpoint Pt by projecting the decoded left synthesized depth map M'd created in step S22 to the left specified viewpoint Pt (step S23).

(Residual video decoding processing)

The residual video decoding unit 24 of the decoding device 2 creates the left residual video L'v by decoding the residual video bit stream (step S24).

(Projection video synthesis processing)

The projected video synthesis unit 25 of the decoding device 2: synthesizes videos created by projecting each of the reference viewpoint video C' created in step S21 and the left residual video L'v created in step S24 to the left specified viewpoint Pt, using the left specified viewpoint depth map Pd created in step S23; and creates the left specified viewpoint video P which is a video at the left specified viewpoint Pt (step S25).

Note that in step S25, the reference viewpoint video projection unit 251 of the decoding device 2: detects a pixel to become an occlusion hole as a non-projectable pixel area when the reference viewpoint video C' is projected to the left specified viewpoint Pt, using the left specified viewpoint depth map Pd; and copies a pixel in a pixel area not to become an occlusion hole of the video in which the reference viewpoint video C' is projected to the left specified viewpoint Pt, as a pixel in a left specified viewpoint video.

The residual video projection unit 252 of the decoding device 2C copies a pixel in a pixel area to constitute an occlusion hole in a video in which the left residual video L'v is projected to the left specified viewpoint Pt, as a pixel of a left specified viewpoint video, using the left specified viewpoint depth map Pd. This completes creation of the left specified viewpoint video P.

As described above, the encoding device 1 according to the first embodiment encodes: the reference viewpoint video C; the left synthesized depth map Md which is the depth map at the intermediate viewpoint which is the viewpoint positioned intermediate between the reference viewpoint and the left viewpoint; and the left residual video Lv composed of a pixel area to constitute an occlusion hole when projected from the reference viewpoint video C to any other viewpoint, and transmits the encoded data as a bit stream. This allows encoding at a high encoding efficiency. Also, the decoding device 2 according to the first embodiment can decode the encoded data transmitted from the encoding device 1 and thereby create a multi-view video.

<Second Embodiment>

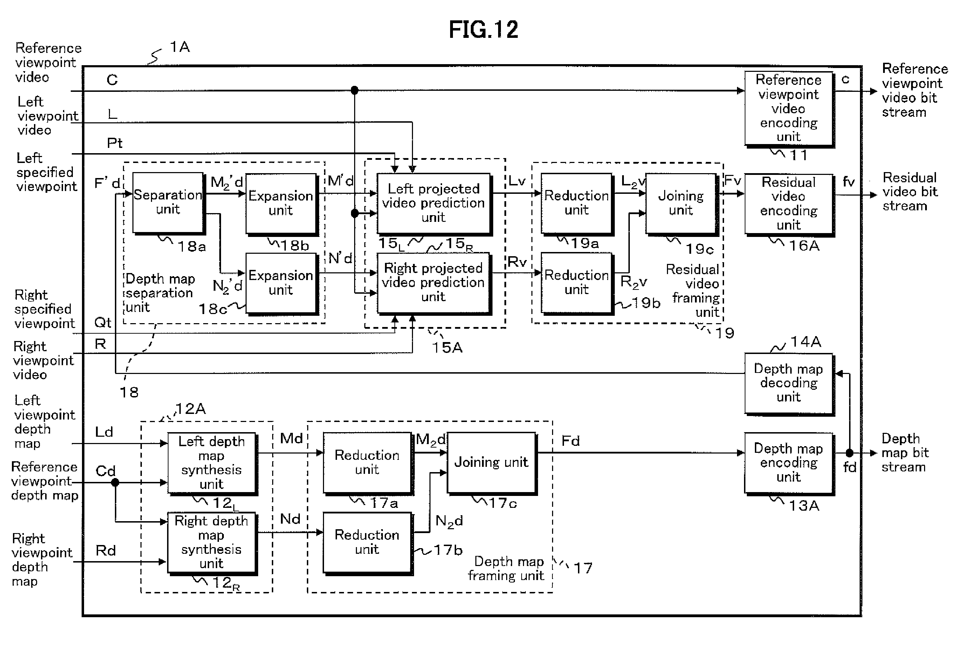

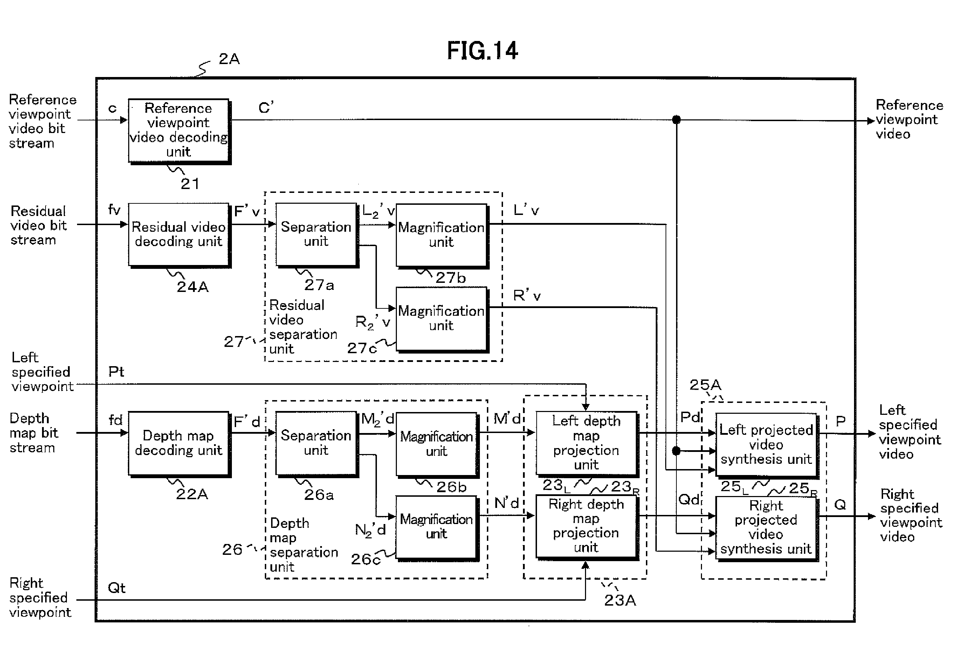

Next is described a configuration of a stereoscopic video transmission system which includes a stereoscopic video encoding device and a stereoscopic video decoding device according to the second embodiment.
The stereoscopic video transmission system including the stereoscopic video encoding device and the stereoscopic video decoding device according to the second embodiment is similar to the stereoscopic video transmission system S illustrated in FIG. 1 except that the stereoscopic video transmission system according to the second embodiment includes, in place of the stereoscopic video encoding device 1 and the stereoscopic video decoding device 2, a stereoscopic video encoding device 1A (see FIG. 12) and a stereoscopic video decoding device 2A (see FIG. 14), detailed description of which is thus omitted herefrom.

[Configuration of stereoscopic video encoding device]

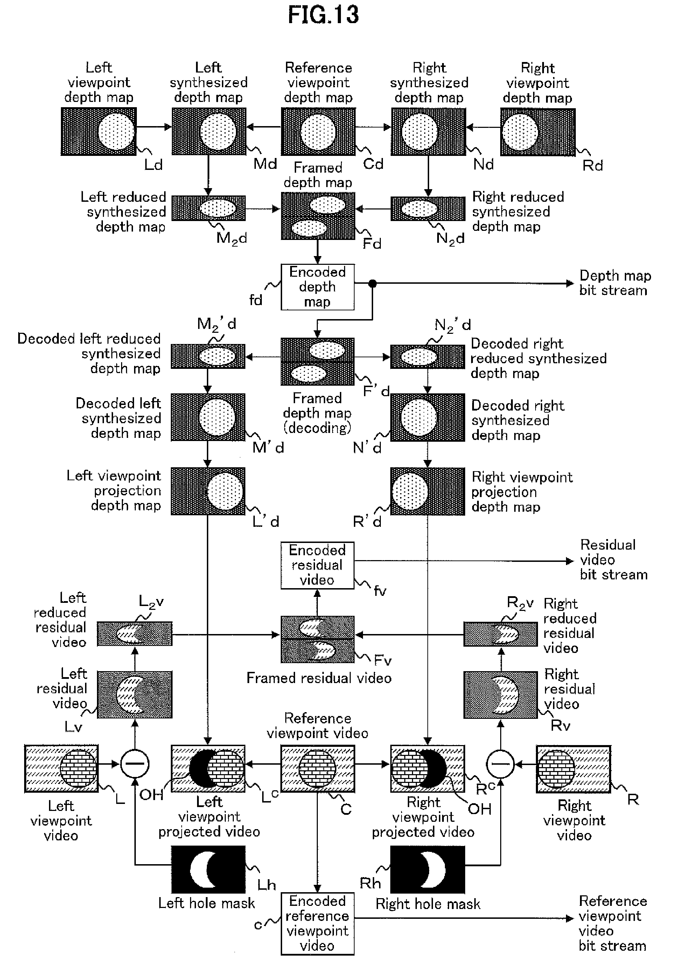

Next is described a configuration of the stereoscopic video encoding device 1A according to the second embodiment with reference to FIG. 12 and FIG. 13.
As illustrated in FIG. 12, the stereoscopic video encoding device (which may also be simply referred to as an "encoding device" where appropriate) 1A according to the second embodiment includes the reference viewpoint video encoding unit 11, a depth map synthesis unit 12A, a depth map encoding unit 13A, a depth map decoding unit 14A, a projected video prediction unit 15A, a residual video encoding unit 16A, a depth map framing unit 17, a depth map separation unit 18, and a residual video framing unit 19.
The encoding device 1A according to the second embodiment is similar to the encoding device 1 (see FIG. 2) according to the first embodiment except that the encoding device 1A inputs therein: not only the reference viewpoint video C which is the video at the reference viewpoint, and the left viewpoint video (auxiliary viewpoint video) L which is the video at the left viewpoint, as well as the reference viewpoint depth map Cd and the left viewpoint depth map (auxiliary viewpoint depth map) Ld respectively corresponding thereto; but also a right viewpoint video (auxiliary viewpoint video) R which is a video at the right viewpoint as well as a right viewpoint depth map (an auxiliary viewpoint depth map) Rd which is a depth map corresponding thereto. That is, the encoding device 1A according to the second embodiment encodes a stereoscopic video of a plurality of systems (two systems).
The encoding device 1A according to the second embodiment creates, similarly to the encoding device 1 (see FIG. 2) according to the first embodiment, the left synthesized depth map (intermediate viewpoint depth map) Md which is the depth map at the left intermediate viewpoint which is an intermediate viewpoint between the reference viewpoint and the left viewpoint, and the left residual video (residual video) Lv, using the reference viewpoint video C, the left viewpoint video L, the reference viewpoint depth map Cd, and the left viewpoint depth map Ld. The encoding device 1A also creates a right synthesized depth map (intermediate viewpoint depth map) Nd which is a depth map at a right intermediate viewpoint which is an intermediate viewpoint between the reference viewpoint and a right viewpoint, and a right residual video Rv, using the reference viewpoint video C, a right viewpoint video R, the reference viewpoint depth map Cd, and a right viewpoint depth map (auxiliary viewpoint depth map) Rd.
The encoding device 1A: reduces and joins together each of the left synthesized depth map Md and the right synthesized depth map Nd and the left residual video Lv and the right residual video Rv; to thereby frames the reduced and joined videos and maps into respective single images; encodes the respective framed images using respective prescribed encoding methods; and outputs the encoded videos and the encoded maps as a depth map bit stream and a residual video bit stream, respectively. Note that, similarly to the encoding device 1 (see FIG. 2) according to the first embodiment, the encoding device 1A encodes the reference viewpoint video C using the prescribed encoding method and outputs the encoded reference viewpoint video C as a reference viewpoint video bit stream.
Note that how to create the right synthesized depth map Nd and the right residual video Rv based on the videos and maps at the reference viewpoint and the right viewpoint is similar to how to create the left synthesized depth map Md and the left residual video Lv based on the videos and maps at the reference viewpoint and the left viewpoint, except that a positional relation between right and left is replaced each other, detailed description of which is omitted where appropriate. Additionally, description of components similar to those in the first embodiment is omitted herefrom where appropriate.
Next are described components of the encoding device 1A by referring to exemplified videos and depth maps illustrated in FIG. 13. Note that in the second embodiment, three viewpoints toward an object are set on a line extending in a horizontal direction at respective positions thereof evenly spaced apart. A middle-positioned viewpoint of the three is referred to as the reference viewpoint. A left viewpoint which is a leftward viewpoint and a right viewpoint which is a rightward viewpoint are referred to as auxiliary viewpoints. However, the present invention is not limited to this. The three viewpoints may be set differently spaced apart. The reference viewpoint may not be spaced apart from the auxiliary viewpoints in the horizontal direction and may be spaced apart in any direction such as a longitudinal direction and an oblique direction.

In FIG. 13, for simplification of explanation, each of the videos is assumed to, similarly to the example illustrated in FIG. 4, contain a circular-shaped object on a foreground and another object other than the circular-shaped object on a background, as shown in the reference viewpoint video C, the left viewpoint video L, and the right viewpoint video R.

The reference viewpoint video encoding unit 11 illustrated in FIG. 12 is similar to the reference viewpoint video encoding unit 11 illustrated in FIG. 2, and description thereof is thus omitted herefrom.

The depth map synthesis unit (intermediate viewpoint depth map synthesis unit) 12A includes a left depth map synthesis unit $12_L$ and a right depth map synthesis unit $12_R$ that synthesize: the left synthesized depth map Md which is the depth map at the left intermediate viewpoint which is an intermediate viewpoint between the reference viewpoint and the left viewpoint; and the right synthesized depth map Nd which is the depth map at the right intermediate viewpoint which is the intermediate viewpoint between the reference viewpoint and the right viewpoint, respectively. The depth map synthesis unit 12A outputs the left synthesized depth map Md and the right synthesized depth map Nd to a reduction unit 17a and a reduction unit 17b of the depth map framing unit 17, respectively.

Note that the left depth map synthesis unit $12_L$ is configured similarly to the depth map synthesis unit 12 illustrated in FIG. 2. The right depth map synthesis unit $12_R$ is also configured similarly to the left depth map synthesis unit $12_L$ except that the right depth map synthesis unit $12_R$ inputs therein, in place of the left viewpoint depth map Ld, the right viewpoint depth map Rd and that, as illustrated in FIG. 5B, a positional relation with respect to the reference viewpoint depth map Cd is reversed, detailed description of which is thus omitted herefrom.

The depth map framing unit 17: creates a framed depth map Fd by framing the left synthesized depth map Md and the right synthesized depth map Nd inputted respectively from the left depth map synthesis unit $12_L$ and the right depth map synthesis unit $12_R$, into a single image; and outputs the created framed depth map Fd to the depth map encoding unit 13A. The depth map framing unit 17 is thus configured to include the reduction units 17a, 17b, and a joining unit 17c.

The reduction unit 17a and the reduction unit 17b: input therein the left synthesized depth map Md and the right synthesized depth map Nd from the left depth map synthesis unit $12_L$ and the right depth map synthesis unit $12_R$, respectively; reduce the respective inputted depth maps by thinning out in a longitudinal direction; thereby create a left reduced synthesized depth map $M_2d$ and a right reduced synthesized depth map $N_2d$ each reduced to half in height (the number of pixels in the longitudinal direction), respectively; and output the depth maps $M_2d$ and $N_2d$ to the joining unit 17c, respectively.

Note that in reducing the respective depth maps to half in height, the reduction unit 17a and the reduction unit 17b may preferably perform filtering processings to the respective depth maps using low pass filters and thin out respective data every other line. This can prevent occurrence of aliasing in high pass components owing to the thin-out.

The joining unit 17c: inputs therein the left reduced synthesized depth map $M_2d$ and the right reduced synthesized depth map $N_2d$ from the reduction unit 17a and the reduction unit 17b, respectively; and creates the framed depth map Fd having a height same as that before the reduction by joining the two depth maps in the longitudinal direction. The joining unit 17c outputs the created framed depth map Fd to the depth map encoding unit 13A.

The depth map encoding unit 13A: inputs therein the framed depth map Fd from the joining unit 17c of the depth map framing unit 17; creates an encoded depth map fd by encoding the framed depth map Fd using a prescribed encoding method; and outputs the created encoded depth map fd to the transmission path as a depth map bit stream.

The depth map encoding unit 13A is similar to the depth map encoding unit 13 illustrated in FIG. 2 except that a depth map to be encoded by the depth map encoding unit 13A is, in place of a single depth map, a framed depth map, detailed description of which is thus omitted herefrom.

The depth map decoding unit 14A creates a framed depth map (a decoded framed depth map) F'd which is a framed depth map, by decoding the depth map bit stream corresponding to the encoded depth map fd created by the depth map encoding unit 13A, based on the prescribed encoding method. The depth map decoding unit 14A outputs the created framed depth map F'd to a separation unit 18a of the depth map separation unit 18.

The depth map decoding unit 14A is similar to the depth map decoding unit 14 illustrated in FIG. 2 except that a depth map decoded by the depth map decoding unit 14A is, in place of a single depth map, a framed depth map, detailed description of which is thus omitted herefrom.

The depth map separation unit 18: inputs therein the encoded framed depth map F'd from the depth map decoding unit 14A; separates a pair of two framed reduced depth maps, namely, a decoded left reduced synthesized depth map $M_2'd$ and a decoded right reduced synthesized depth map $N_2'd$, from each other; magnifies respective heights of the depth maps $M_2'd$ and $N_2'd$ to original heights thereof; thereby creates a decoded left synthesized depth map (a decoded intermediate viewpoint depth map) M'd and a decoded right synthesized depth map (a decoded intermediate viewpoint depth map) N'd; and outputs the created depth maps M'd and N'd to a left projected video prediction unit $15_L$ and a right projected video prediction unit $15_R$, respectively, of the projected video prediction unit 15A. The depth map separation unit 18 is thus configured to include the separation unit 18a and magnification units 18b, 18c.

The separation unit 18a: inputs therein the framed depth map F'd from the depth map decoding unit 14A; separates the framed depth map F'd into a pair of the framed depth maps, that is, the framed decoded left reduced synthesized depth map $M_2$'d and the framed decoded right reduced synthesized depth map $N_2$'d; and outputs the separated depth map $M_2$'d and the separated depth map $N_2$'d to the magnification unit 18b and the magnification unit 18c, respectively.

The magnification unit 18b and the magnification unit 18c: input therein the decoded left reduced synthesized depth map $M_2$'d and the decoded right reduced synthesized depth map $N_2$'d, respectively, from the separation unit 18a; and double respective heights thereof; and thereby create the decoded left synthesized depth map M'd and the decoded right synthesized depth map N'd having their respective original heights. The magnification unit 18b and the magnification unit 18c output the created decoded left synthesized depth map M'd and the created decoded right synthesized depth map N'd to the left projected video prediction unit $15_L$ and the right projected video prediction unit $15_R$, respectively.

Note that magnification of a reduced depth map may be a simple extension in which data in each of lines is just copied and inserted. Another magnification may be preferable in which a pixel every other line is inserted such that a value of the pixel is interpolated with a value of a surrounding pixel using a bicubic filter for a smooth joining. This is advantageous because a thin-out effect of the pixel when reduced is corrected.

The projected video prediction unit 15A creates the left residual video (a residual video) Lv and right residual video (a residual video) Rv by extracting pixels in pixel areas to constitute occlusion holes when the reference viewpoint video C is projected to both the left viewpoint or the like, and the right viewpoint or the like, from the left viewpoint video L and the right viewpoint video R, respectively, using the decoded left synthesized depth map M'd and the decoded right synthesized depth map N'd inputted respectively from the magnification unit 18b and the magnification unit 18c of the depth map separation unit 18. The projected video prediction unit 15A outputs the created left residual video Lv and the created right residual video Rv to the reduction unit 19a and the reduction unit 19b of the residual video framing unit 19.

The left projected video prediction unit $15_L$: inputs therein the reference viewpoint video C, the left viewpoint video L, and the left specified viewpoint Pt from outside; also inputs therein the decoded left synthesized depth map M'd magnified by the magnification unit 18b; thereby creates the left residual video Lv; and outputs the created left residual video Lv to the reduction unit 19a of the residual video framing unit 19. Note that the left projected video prediction unit $15_L$ is configured similarly to the projected video prediction unit 15 illustrated in FIG. 2 except that to which data is inputted and outputted is different, detailed description is thus omitted herefrom. Note that FIG. 12 illustrates an example in which the number of the left specified viewpoints Pt inputted from outside is one. However, a plurality of left specified viewpoints Pt may be inputted as illustrated in FIG. 2.

The right projected video prediction unit $15_R$ is similar to the left projected video prediction unit $15_L$ except: that the right projected video prediction unit $15_R$ inputs therein, in place of the left viewpoint video L, the decoded left synthesized depth map M'd, and the left specified viewpoint Pt, the right viewpoint video R, the decoded right synthesized depth map N'd, and a right specified viewpoint Qt; that the right projected video prediction unit $15_R$ outputs, in place of the left residual video Lv, the right residual video Rv; and that a positional relation between the reference viewpoint video C or the like and the depth map is reversed, detailed description of which is thus omitted herefrom.

The residual video framing unit 19 creates a framed residual video Fv by framing the left residual video Lv and the right residual video Rv respectively inputted from the left projected video prediction unit $15_L$ and the right projected video prediction unit $15_R$, into a single image; and outputs the created framed residual video Fv to the residual video encoding unit 16A. The residual video framing unit 19 is thus configured to include the reduction units 19a, 19b, and the joining unit 19c.

The reduction unit 19a and the reduction unit 19b: input therein the left residual video Lv and the right residual video Rv from the left projected video prediction unit $15_L$ and the right projected video prediction unit $15_R$, respectively; reduce the inputted residual videos by thinning out in the longitudinal direction; thereby create a left reduced residual video $L_2$v and a right reduced residual video $R_2$v each reduced to half in height (the number of pixels in the longitudinal direction); and output the created residual videos to the joining unit 19c.

Note that the reduction unit 19a and the reduction unit 19b are configured similarly to the reduction unit 17a and the reduction unit 17b, respectively, detailed description of which is thus omitted herefrom.

The joining unit 19c: inputs therein the left reduced residual video $L_2$v and the right reduced residual video $R_2$v from the reduction unit 19a and the reduction unit 19b, respectively; and creates the framed residual video Fv which becomes a residual video having a height same as that before the reduction, by joining the two residual videos in the longitudinal direction. The joining unit 19c outputs the created framed residual video Fv to the residual video encoding unit 16A.

The residual video encoding unit 16A: inputs therein the framed residual video Fv from the joining unit 19c of the residual video framing unit 19; creates an encoded residual video fv by encoding the framed residual video Fv using a prescribed encoding method; and outputs the created encoded residual video fv to the transmission path as a residual video bit stream.

The residual video encoding unit 16A is similar to the residual video encoding unit 16 illustrated in FIG. 2 except that a residual video to be encoded is, in place of a single residual video, a framed residual video, detailed description of which is thus omitted herefrom.

[Configuration of stereoscopic video decoding device]

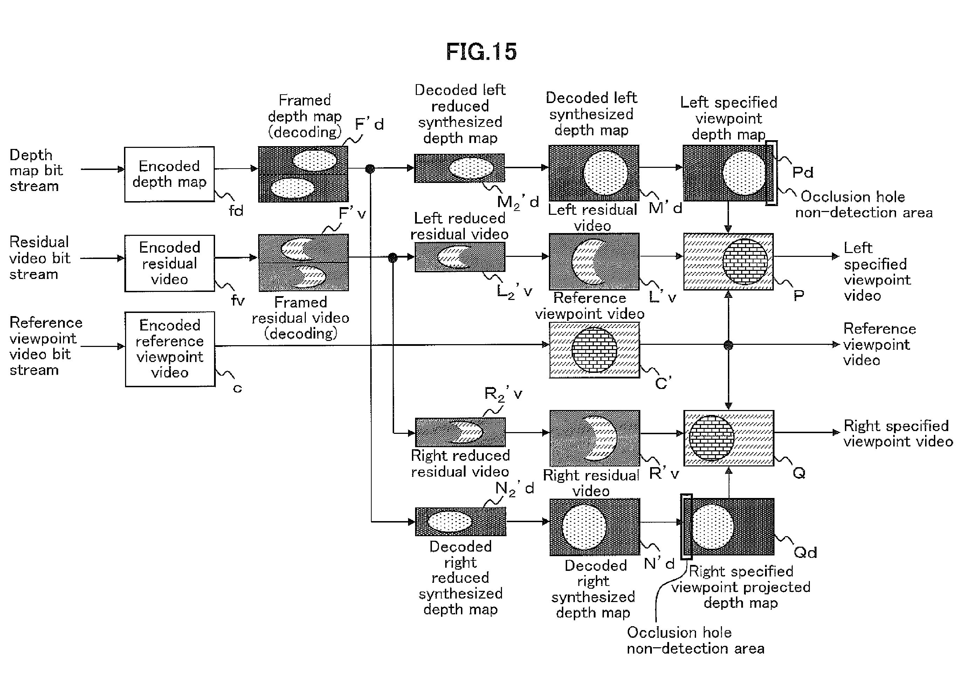

Next is described a configuration of the stereoscopic video encoding device 2A according to the second embodiment with reference to FIG. 14 and FIG. 15. The stereoscopic video encoding device 2A creates a multi-view video by decoding the bit stream transmitted from the stereoscopic video encoding device 1A illustrated in FIG. 12 via the transmission path.

As illustrated in FIG. 14, the stereoscopic video encoding device (which may also be simply referred to as an "encoding device" where appropriate) 2A according to the second embodiment includes the reference viewpoint video decoding unit 21, a depth map decoding unit 22A, a depth map projection unit 23A, a residual video decoding unit 24A, a projected video synthesis unit 25A, the depth map separation unit 26, and a residual video separation unit 27.

The decoding device 2A according to the second embodiment is similar to the decoding device 2 according to the first embodiment (see FIG. 7) except that the decoding device 2A: inputs therein the encoded depth map fd and the encoded residual video fv which are created by framing depth maps and residual videos of a plurality of systems (two systems), as the depth map bit stream and the residual video bit stream, respectively; separates the depth map fd and the residual video fv into the framed depth maps and the residual videos, respectively; and thereby creates the left specified viewpoint video P and the right specified viewpoint video Q as specified viewpoint videos of a plurality of systems.

The reference viewpoint video decoding unit 21 is similar to the reference viewpoint video decoding unit 21 illustrated in FIG. 7, description of which is thus omitted herefrom.

The depth map decoding unit 22A: creates a framed depth map (a decoded framed depth map) F'd by decoding the depth bit stream; and outputs the created framed depth map F'd to the separation unit 26a of the depth map separation unit 26.

The depth map decoding unit 22A is similar to the depth map decoding unit 14A (see FIG. 12) of the encoding device 1A, detailed description of which is thus omitted herefrom.

The depth map separation unit 26: inputs therein the framed depth map F'd decoded by the depth map decoding unit 22A; separates a pair of framed reduced depth maps, namely, the decoded left reduced synthesized depth map $M_2$'d and the decoded right reduced synthesized depth map $N_2$'d from each other, magnifies respective heights thereof to their original heights; and thereby creates the decoded left synthesized depth map M'd and the decoded right synthesized depth map N'd. The depth map separation unit 26 outputs the created decoded left synthesized depth map M'd and the created decoded right synthesized depth map N'd to a left depth map projection unit $23_L$ and a right depth map projection unit $23_R$, respectively, of the depth map projection unit 23A. The depth map separation unit 26 is thus configured to include the separation unit 26a and magnification units 26b, 26c.

Note that the depth map separation unit 26 is similar to the depth map separation unit 18 of the encoding device 1A illustrated in FIG. 12, detailed description of which is thus omitted herefrom. Note that the separation unit 26a, the magnification unit 26b, and the magnification unit 26c correspond to the separation unit 18a, the magnification unit 18b, and the magnification unit 18c illustrated in FIG. 12, respectively.

The depth map projection unit 23A includes the left depth map projection unit $23_L$ and the right depth map projection unit $23_R$. The depth map projection unit 23A viewpoint Pt and the right specified viewpoint Qt, and creates the left specified viewpoint depth map Pd and the right specified viewpoint depth map Qd which are depth maps at the respective specified viewpoints by projecting depth maps at respective intermediate viewpoints of a pair of left and right systems to the left specified viewpoint Pt and the right specified viewpoint Qt which are specified viewpoint of the respective systems. The depth map projection unit 23A outputs the created left specified viewpoint depth map Pd and the created right specified viewpoint depth map Qd to a left projected video synthesis unit $25_L$ and a right projected video synthesis unit $25_R$, respectively, of the projected video synthesis unit 25A.

Note that the left specified viewpoint (specified viewpoint) Pt and the right specified viewpoint (specified viewpoint) Qt correspond to the left specified viewpoint and the right specified viewpoint, respectively, in the multi-view video created by the decoding device 2A. The left specified viewpoint Pt and the right specified viewpoint Qt may be inputted from a prescribed setting unit (not shown) of the decoding device 2A or may be inputted through a user's operation via an input unit such as a keyboard from outside. The numbers of the left specified viewpoints Pt and the right specified viewpoints Qt may each be one or two or more. If the numbers of the left specified viewpoints Pt and the right specified viewpoints Qt are two or more, the left specified viewpoint depth map Pd and the right specified viewpoint depth map Qd at each of the left specified viewpoints Pt and the right specified viewpoints Qt, respectively, are sequentially created and are sequentially outputted to the left projected video synthesis unit $25_L$ and the right projected video synthesis unit $25_R$, respectively, of the projected video synthesis unit 25A.

The left depth map projection unit $23_L$: inputs therein the decoded left synthesized depth map M'd which is a depth map decoded by the magnification unit 26b; and creates the left specified viewpoint depth map (specified viewpoint depth map) Pd at the left specified viewpoint Pt by projecting the decoded left synthesized depth map M'd to the left specified viewpoint Pt. The left depth map projection unit $23_L$ outputs the created left specified viewpoint depth map Pd to the left projected video synthesis unit $25_L$.

The right depth map projection unit $23_R$: inputs therein the decoded right synthesized depth map N'd which is a depth map magnified by the magnification unit 26c; and creates the right specified viewpoint depth map (specified viewpoint depth map) Qd at the right specified viewpoint Qt by projecting the decoded right synthesized depth map N'd to the right specified viewpoint Qt. The right depth map projection unit $23_R$ outputs the created right specified viewpoint depth map Qd to the right projected video synthesis unit $25_R$.

Note that the left depth map projection unit $23_L$ is configured similarly to the depth map projection unit 23 illustrated in FIG. 7, detailed description of which is thus omitted herefrom. Further, the right depth map projection unit $23_R$ is configured similarly to the left depth map projection unit $23_L$ except that a positional relation between right and left with respect to the reference viewpoint is reversed, detailed description of which is thus omitted herefrom.

The residual video decoding unit 24A: creates a framed residual video (decoded framed residual video) F'v by decoding the residual video bit stream; and outputs the created framed residual video F'v to a separation unit 27a of the residual video separation unit 27.

The residual video decoding unit 24A is similar to the residual video decoding unit 24 (see FIG. 7) of the decoding device 2 except that a residual video to be decoded is a single residual video or a framed residual video, detailed description of which is thus omitted herefrom.

The residual video separation unit 27: inputs therein the framed residual video F'v decoded by the residual video decoding unit 24A; separates the framed residual video F'v into a pair of framed reduced residual videos, namely, a left reduced residual video $L_2$'v and a right reduced residual video $R_2$'v; magnifies respective heights thereof to their original heights; and thereby creates the left residual video (decoded residual video) L'v and the right residual video (decoded residual video) R'v. The residual video separation unit 27 outputs the created left residual video L'v and the right residual video R'v to the left projected video synthesis unit $25_L$ and the right projected video synthesis unit $25_R$, respectively, of the projected video synthesis unit 25A. The residual video separation unit 27 is thus configured to include the separation unit 27a and the magnification units 27b, 27c.

The residual video separation unit 27 is similar to the depth map separation unit 26 except that a target to be separated is a residual video or a depth map, detailed description of which is thus omitted herefrom. Note that the separation unit 27a, the magnification unit 27b, and the magnification unit 27c correspond to the separation unit 26a, the magnification unit 26b, and the magnification unit 26c, respectively.

The projected video synthesis unit 25A creates the left specified viewpoint video P and the right specified viewpoint video Q which are specified viewpoint videos at the left specified viewpoint Pt and the right specified viewpoint Qt as a pair of left and right systems, respectively, based on the reference viewpoint video C' inputted from the reference viewpoint video decoding unit 21, the left residual video L'v and the right residual video R'v which are residual videos of a pair of left and right systems inputted from the residual video separation unit 27, and the left specified viewpoint depth map Pd and the right specified viewpoint depth map Qd which are inputted from the depth map projection unit 23A as the depth maps as a pair of left and right systems. The projected video synthesis unit 25A is thus configured to include the left projected video synthesis unit $25_L$ and the right projected video synthesis unit $25_R$.

The left projected video synthesis unit $25_L$: inputs therein the reference viewpoint video C' from the reference viewpoint video decoding unit 21, the left residual video L'v from the magnification unit 27b of the residual video separation unit 27, and the left specified viewpoint depth map Pd from the left depth map projection unit $23_L$ of the depth map projection unit 23A; and thereby creates the left specified viewpoint video P.

The right projected video synthesis unit $25_R$: inputs therein the reference viewpoint video C' from the reference viewpoint video decoding unit 21, the right residual video R'v from the magnification unit 27c of the residual video separation unit 27, and the right specified viewpoint depth map Qd from the right depth map projection unit $23_R$ of the depth map projection unit 23A; and thereby creates the right specified viewpoint video Q.

Note that the left projected video synthesis unit $25_L$ is configured similarly to the projected video synthesis unit 25 of the decoding device 2 illustrated in FIG. 7, detailed description of which is thus omitted herefrom.

Further, the right projected video synthesis unit $25_R$ is configured similarly to the left projected video synthesis unit $25_L$ except that a positional relation between right and left with respect to the reference viewpoint is reversed, detailed description of which is thus omitted herefrom.

As described above, the encoding device 1A according to the second embodiment frames and encodes each of depth maps and residual videos of a stereoscopic video of a plurality of systems, and outputs the framed and encoded data as bit streams. This allows encoding of a stereoscopic video at a high encoding efficiency.

Also, the decoding device 2A can decode a stereoscopic video encoded by the encoding device 1A and thereby creates a multi-view video.

[Operations of stereoscopic video encoding device]

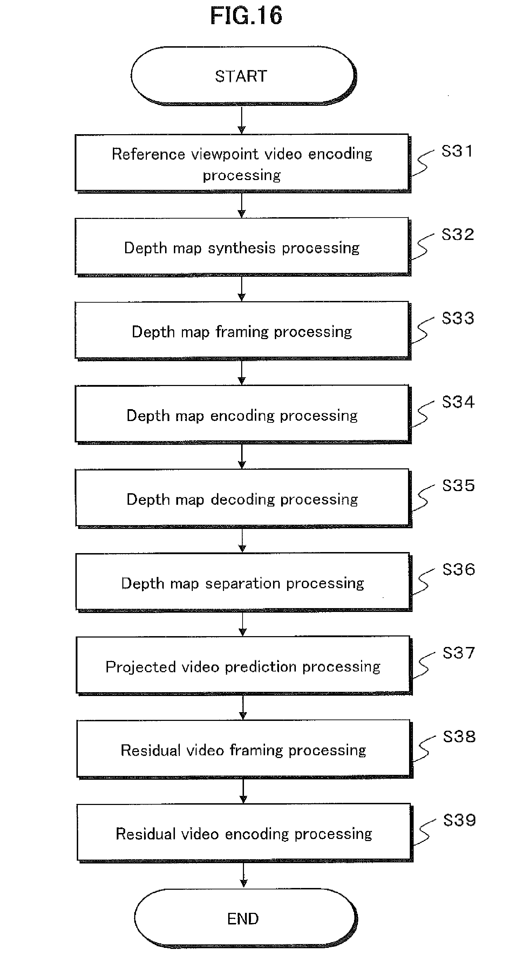

Next are described operations of the stereoscopic video encoding device 1A according to the second embodiment with reference to FIG. 16 (see also FIG. 12 and FIG. 13 where necessary).

(Reference viewpoint video encoding processing)

The reference viewpoint video encoding unit 11 of the encoding device 1A: creates the encoded reference viewpoint video c by encoding the reference viewpoint video C inputted from outside using a prescribed encoding method; and outputs the created encoded reference viewpoint video c as a reference viewpoint video bit stream (step S31).

(Depth map synthesis processing (intermediate viewpoint depth map synthesis processing))

The depth map synthesis unit 12A of the encoding device 1A: synthesizes the left synthesized depth map Md which is a depth map at the left intermediate viewpoint which is an intermediate viewpoint between the reference viewpoint and the left viewpoint, using the reference viewpoint depth map Cd and the left viewpoint depth map Ld inputted from outside; and also synthesizes the right synthesized depth map Nd which is a depth map at the right intermediate viewpoint which is an intermediate viewpoint between the reference viewpoint and the right viewpoint, using the reference viewpoint depth map Cd and the right viewpoint depth map Rd inputted from outside (step S32).

(Depth map framing processing)

The depth map framing unit 17 of the encoding device 1A creates the framed depth map Fd by reducing and joining the left synthesized depth map Md and the right synthesized depth map Nd which are a pair of the depth maps synthesized in step S32, into a single framed video (step S33).

(Depth map encoding processing)

The depth map encoding unit 13A of the encoding device 1A: creates the encoded depth map fd by encoding the framed depth map Fd created in step S33 using a prescribed encoding method; and outputs the created encoded depth map fd as a depth map bit stream (step S34).

(Depth map decoding processing)

The depth map decoding unit 14A of the encoding device 1 A creates the framed depth map F'd by decoding the encoded depth map fd created in step S34 (step S35).

(Depth map separation processing)

The depth map separation unit 18 of the encoding device 1 A separates a pair of the depth maps having been joined as the decoded framed depth map F'd created in step S35, magnifies respective heights of the separated depth maps to their original heights, and thereby creates the decoded left synthesized depth map M'd and the decoded right synthesized depth map N'd (step S36).

(Projected video prediction processing)

The projected video prediction unit 15A of the encoding device 1A: creates the left residual video Lv, using the decoded left synthesized depth map M'd created in step S36 and the left viewpoint video L outputted from outside; and also creates the right residual video Rv using the decoded right synthesized depth map N'd created in step S36 and the right viewpoint video R inputted from outside (step S37).

(Residual video framing processing)

The residual video framing unit 19 of the encoding device 1A creates the framed residual video Fv by reducing and joining the left residual video Lv and the right residual video Rv which are a pair of the residual videos created in step S37 into a single framed video (step S38).

(Residual video encoding processing)

The residual video encoding unit 16A of the encoding device 1A: creates the encoded residual video fv by encoding the framed residual video Fv created in step S38 using the prescribed encoding method; and outputs the created encoded residual video fv as a residual video bit stream (step S39).

[Operations of stereoscopic video decoding device]

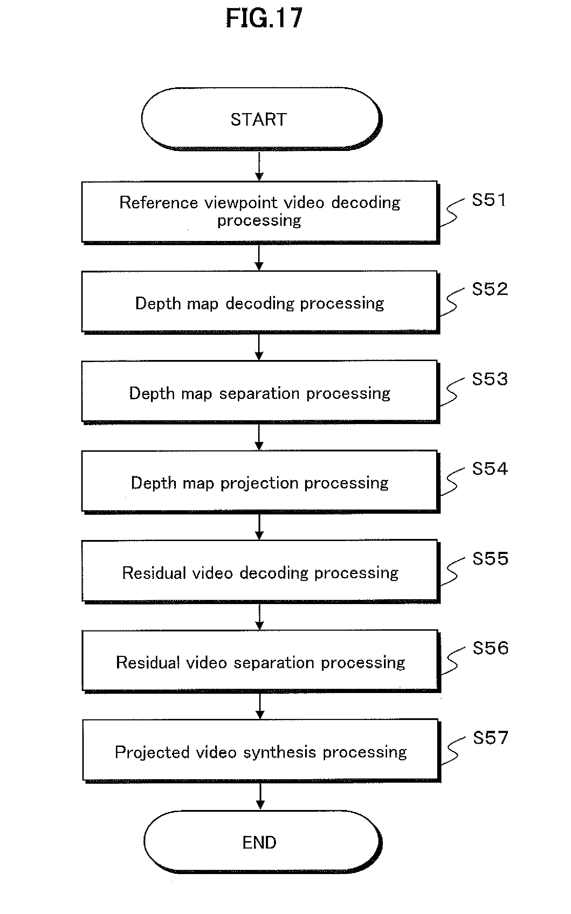

Next are described operations of the stereoscopic video decoding device 2A according to the second embodiment with reference to FIG. 17 (as well as FIG. 14 and FIG. 15 where necessary).

(Reference viewpoint video decoding processing)

The reference viewpoint video decoding unit 21 of the decoding device 2A: creates the reference viewpoint video C' by decoding the reference viewpoint video bit stream; and outputs the created reference viewpoint video C' as one of the videos constituting the multi-view video (step S51).

(Depth map decoding processing)

The depth map decoding unit 22A of the decoding device 2A creates the framed depth map F'd by decoding the depth map bit stream (step S52).

(Depth map separation processing)

The depth map separation unit 26 of the decoding device 2A creates the decoded left synthesized depth map M'd and the decoded right synthesized depth map N'd by separating a pair of the depth maps having been joined as the decoded framed depth map F'd created in step S52 and magnifying the separated depth maps to their respective original sizes (step S53).

(Depth map projection processing)

The depth map projection unit 23A of the decoding device 2A: creates the left specified viewpoint depth map Pd which is a depth map at the left specified viewpoint Pt by projecting the decoded left synthesized depth map M'd created in step S53 to the left specified viewpoint Pt: and also creates the right specified viewpoint depth map Qd which is a depth map at the right specified viewpoint Qt by projecting the decoded right synthesized depth map N'd created in step S53 to the right specified viewpoint Qt (step S54).

(Residual video decoding processing)

The residual video decoding unit 24A of the decoding device 2A creates the framed residual video F'v by decoding the residual video bit stream (step S55).

(Residual video separation processing)

The residual video separation unit 27 of the decoding device 2A creates the left residual video L'v and the right residual video R'v by separating a pair of the residual videos having been joined as the decoded framed residual video F'v created in step S55 and magnifying the separated residual videos to their respective original sizes (step S56).

(Projected video synthesis processing)

The left projected video synthesis unit $25_L$ of the decoding device 2A creates the left specified viewpoint video P which is a video at the left specified viewpoint Pt: by synthesizing a pair of videos obtained by projecting both the reference viewpoint video C' created in step S51 and the left residual video L'v created in step S55, to the left specified viewpoint Pt, using the left specified viewpoint depth map Pd created in step S54. The right projected video synthesis unit $25_R$ of the decoding device 2A creates the right specified viewpoint video Q which is a video at the right specified viewpoint Qt by synthesizing a pair of videos obtained by projecting both the reference viewpoint video C' created in step S51 and the right residual video R'v created in step S55, to the right specified viewpoint Qt, using the right specified viewpoint depth map Qd created in step S54 (step S57).

<Variation of Second Embodiment>

Next are described a stereoscopic video encoding device and a stereoscopic video decoding device according to a variation of the second embodiment of the present invention.

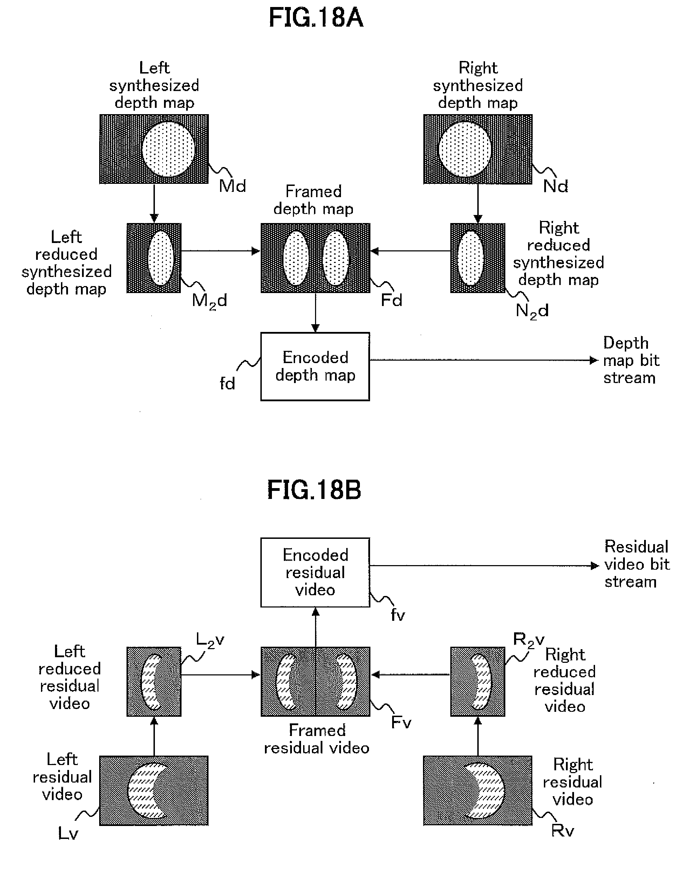

In the stereoscopic video encoding device according to this variation, when the depth map framing unit 17 and the residual video framing unit 19 of the encoding device 1A according to the second embodiment illustrated in FIG. 12 reduce a depth map and a residual video, respectively, each of the depth map framing unit 17 and the residual video framing unit 19: thins out pixels thereof in a lateral direction for reducing a width to half; and joins a pair of the reduced depth maps and a plurality of the residual videos side by side, respectively, into a single framed image, as illustrated in FIG. 18A and FIG. 18B.

The stereoscopic video encoding device according to this variation is configured such that the depth map separation unit 18 of the encoding device 1A separates the framed depth map F'd having been reduced and joined in the lateral direction.

The stereoscopic video decoding device according to this variation is also configured such that the depth map separation unit 26 and the residual video separation unit 27 of the decoding device 2A according to the second embodiment illustrated in FIG. 14 separate the framed depth map F'd and the framed residual video F'v, respectively, each having been reduced and joined in the lateral direction.

Configurations and operations of the stereoscopic video encoding device and the stereoscopic video decoding device according to this variation are similar to those of the encoding device 1A and the decoding device 2A according to the second embodiment except that, in the variation, the depth map and the residual video are reduced and joined in the lateral direction and are then separated and magnified, detailed description of which is thus omitted herefrom.

Note that the depth maps used in the first and second embodiments are each set as image data having the same format as that of a video such as the reference viewpoint video C to which a depth value as the luminance component (Y) and a prescribed value as the color difference component (Pb, Pr) are added. However, the depth map may be set as monochrome image data only having the luminance component (Y). This makes it possible to completely exclude a possibility of decreasing an encoding efficiency derived from the color difference component (Pb, Pr).

<Third Embodiment>

Next is described a configuration of a stereoscopic video transmission system including a stereoscopic video encoding device and a stereoscopic video decoding device according to a third embodiment of the present invention.

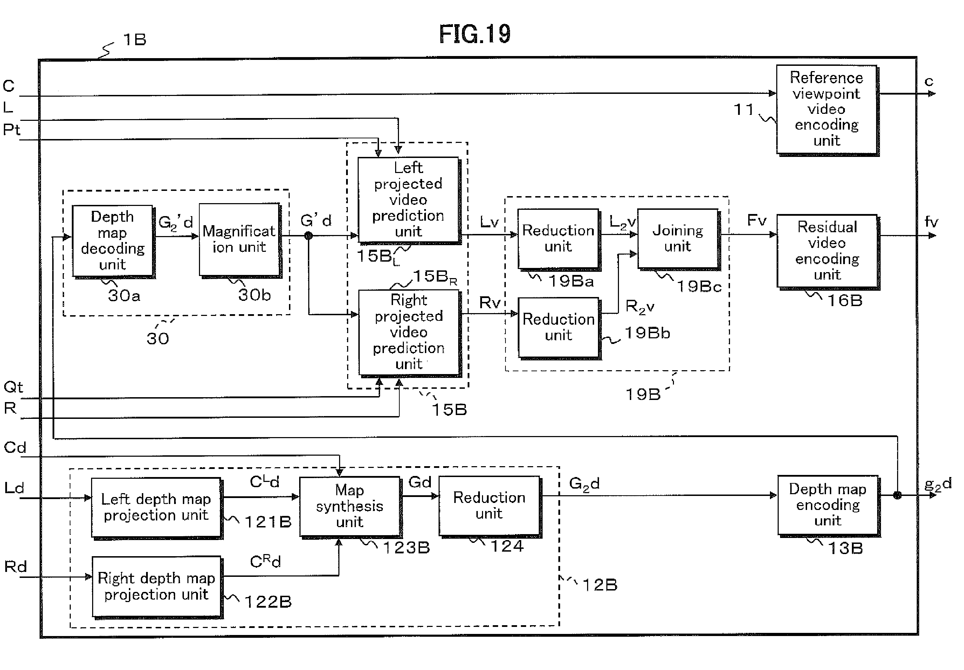

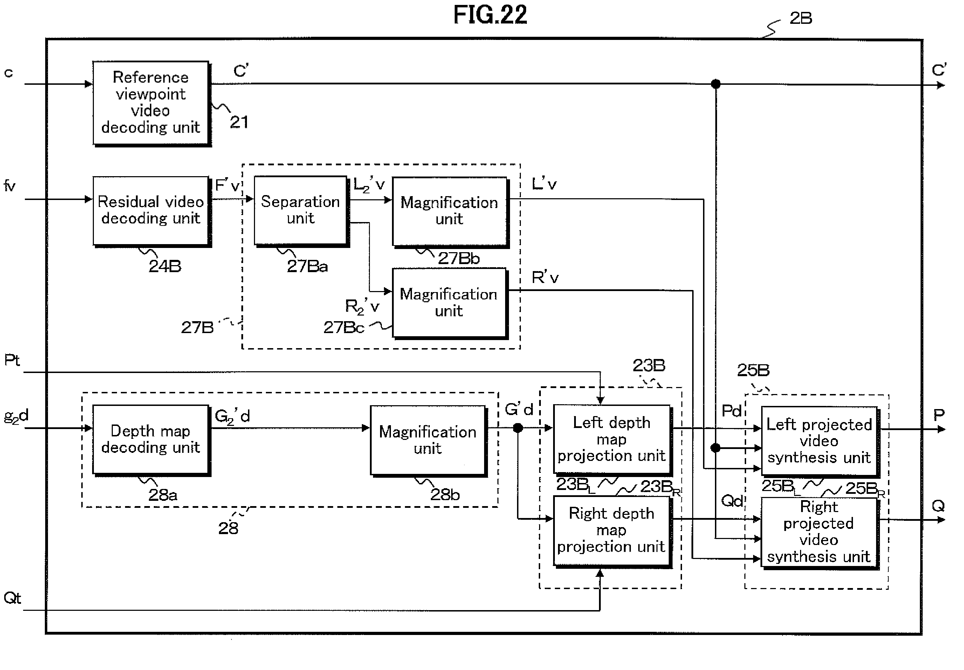

The stereoscopic video transmission system according to the third embodiment is similar to the stereoscopic video transmission system S illustrated in FIG. 1 except that the stereoscopic video transmission system according to the third embodiment includes, in place of the stereoscopic video encoding device 1 and the stereoscopic video decoding device 2, a stereoscopic video encoding device 1 B (see FIG. 19) and a stereoscopic video decoding device 2B (see FIG. 22), respectively, detailed description of which is thus omitted herefrom.

[Configuration of stereoscopic video encoding device]

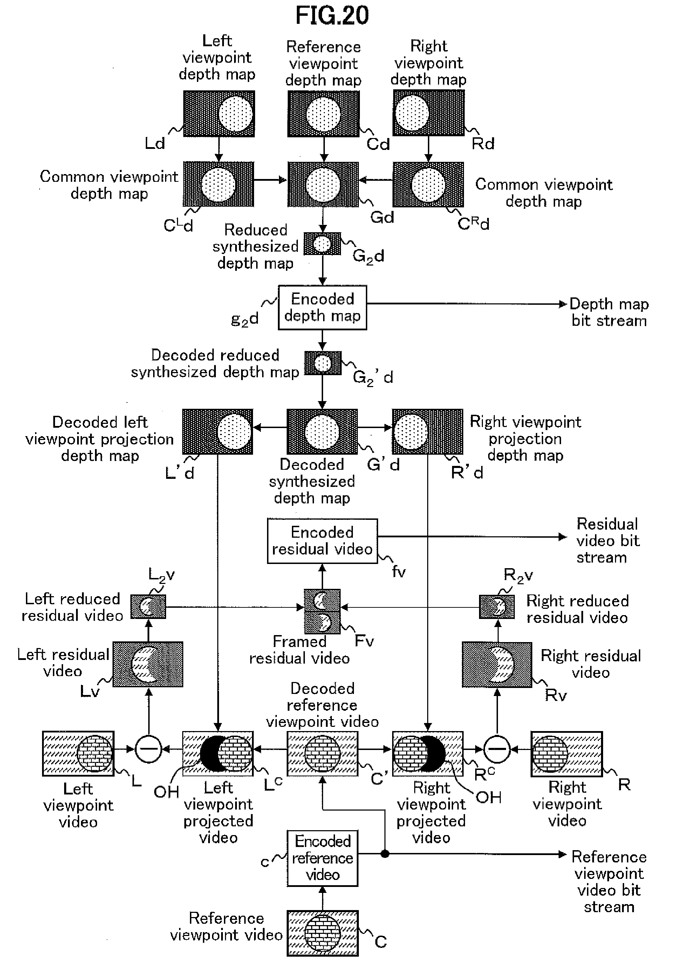

Next is described a configuration of the stereoscopic video encoding device 1 B according to the third embodiment with reference to FIG. 19 and FIG. 20.

As illustrated in FIG. 19, the stereoscopic video encoding device 1 B (which may also be simply referred to as an "encoding device 1 B" where appropriate) according to the third embodiment includes the reference viewpoint video encoding unit 11, a depth map synthesis unit 12B, a depth map encoding unit 13B, a projected video prediction unit 15B, a residual video encoding unit 16B, a residual video framing unit 19B, and a depth map restoration unit 30.

The encoding device 1 B according to the third embodiment, similarly to the encoding device 1A according to the second embodiment illustrated in FIG. 12: inputs therein the reference viewpoint video C which is a video at the reference viewpoint, the left viewpoint video (auxiliary viewpoint video) L which is a video at the left viewpoint, and the right viewpoint video (auxiliary viewpoint video) R which is a video at the right viewpoint, as well as respective depth maps corresponding to the above-described videos, that is, the reference viewpoint depth map Cd, the left viewpoint depth map (auxiliary viewpoint depth map) Ld, and the right viewpoint depth map (auxiliary viewpoint depth map) Rd; and outputs the encoded reference viewpoint video c and the encoded residual video fv which are encoded using respective prescribed encoding methods, as a reference viewpoint video bit stream and a residual video bit stream, respectively. The encoding device 1 B is however difference from the encoding device 1A (see FIG. 12) according to the second embodiment in that the encoding device 1 B: synthesizes the inputted depth maps Cd, Ld, and Rd at the three viewpoints into a synthesized depth map Gd which is a depth map at a prescribed common viewpoint; encodes the synthesized depth map Gd; and outputs the encoded synthesized depth map Gd as a depth map bit stream.

Note that the same reference characters in the third embodiment are given to components similar to those in the first embodiment or the second embodiment, description of which is omitted where appropriate.

Next are described components of the encoding device 1 B by referring to exemplified videos and depth maps illustrated in FIG. 20. Note that in the third embodiment, similarly to the second embodiment, three viewpoints toward an object are set on a line extending in a horizontal direction with respective positions thereof evenly spaced apart. A middle-positioned viewpoint of the three is referred to as the reference viewpoint. A left viewpoint which is a leftward viewpoint and a right viewpoint which is a rightward viewpoint are referred to as auxiliary viewpoints. However, the present invention is not limited to this. The three viewpoints may be set differently spaced apart. The reference viewpoint may not be spaced apart from the auxiliary viewpoints in the horizontal direction and may be spaced apart in any direction such as a longitudinal direction and an oblique direction.

In FIG. 20, for simplification of explanation, each of the videos is assumed to, similarly to the example illustrated in FIG. 13, contain a circular-shaped object on a foreground and another object other than the circular-shaped object on a background, as shown in the reference viewpoint video C, the left viewpoint video L, and the right viewpoint video R.

The reference viewpoint video encoding unit 11 illustrated in FIG. 19 is similar to the reference viewpoint video encoding unit 11 illustrated in FIG. 2, detailed description of which is thus omitted herefrom.

The depth map synthesis unit 12B includes a left depth map projection unit 121 B, a right depth map projection unit 122B, a depth map synthesis unit 123B, and the reduction unit 124.

The left depth map projection unit 121 B and the right depth map projection unit 122B: input therein the left viewpoint depth map Ld and the right viewpoint depth map Rd, respectively; create the common viewpoint depth map $C^Ld$ and the common viewpoint depth map $C^Rd$, respectively, which are depth maps projected to respective prescribed one of the common viewpoints; and output the created common viewpoint depth map $C^Ld$ and the created common viewpoint depth map $C^Rd$ to the depth map synthesis unit 123B.

In this embodiment, because the reference viewpoint is used as a common viewpoint, in order to project the left viewpoint depth map Ld to the reference viewpoint, the left depth map projection unit 121 B creates the common viewpoint depth map $C^Ld$ by shifting leftward each of pixels of the left viewpoint depth map Ld by the number of pixels equivalent to a depth value of each of the pixels.

In projecting the left viewpoint depth map Ld, if a pixel to which a plurality of pixel values are projected is present, the largest pixel value of a plurality of the projected pixel values is taken as a depth value of the pixel of interest. Because the largest pixel value is taken as a depth value of the common viewpoint depth map $C^Ld$, a depth value of the foreground object is preserved. This allows an appropriate projection while maintaining a correct relation of occlusions.

If there is any pixel not having been projected, the pixel of interest is filled up by taking a smaller depth value between depth values of pixels having been projected and neighboring positioned right and left of the pixel of interest, as a depth value of the pixel of interest. This makes it possible to correctly interpolate a depth value of a pixel corresponding to an object as a background which is hidden behind an object at an original viewpoint position.

Similarly, in order to project the right viewpoint depth map Rd to the reference viewpoint, the right depth map projection unit 122B creates the common viewpoint depth map $C^Rd$ by shifting rightward each of pixels by the number of pixels equivalent to a depth value of each of the pixels.

Also in a case of the right depth map projection unit 122B, similarly to the left depth map projection unit 121 B, in projecting the right viewpoint depth map Rd, if a pixel to which a plurality of pixel values are projected is present, the largest pixel value of a plurality of the projected pixel values is taken as a depth value of the pixel of interest. If there is any pixel not having been projected, the pixel of interest is filled up by taking a smaller depth value between depth values of pixels having been projected and neighboring positioned right and left of the pixel of interest, as a depth value of the pixel of interest.

In this embodiment, the common viewpoint is the reference viewpoint which is a median point of three viewpoints inputted from outside. It is thus not necessary to project the reference viewpoint depth map Cd.

However, the present invention is not limited to this, and any viewpoint may be used as the common viewpoint. If a viewpoint other than the reference viewpoint is used as the common viewpoint, a configuration is possible in which a depth map created by projecting, in place of the reference viewpoint depth map Cd, the reference viewpoint depth map Cd to the common viewpoint is inputted to the depth map synthesis unit 123B. Also regarding the left depth map projection unit 121 B and the right depth map projection unit 122B, a shift amount of a pixel at a time of projection may be appropriately adjusted depending on a distance from the reference viewpoint to the common viewpoint.

The depth map synthesis unit 123B: inputs therein the common viewpoint depth map $C^Ld$ and the common viewpoint depth map $C^Rd$ from the left depth map projection unit 121 B and the right depth map projection unit 122B, respectively; also inputs therein the reference viewpoint depth map Cd from outside (for example, the stereoscopic video creating device 3 (see FIG. 1)); and creates a single synthesized depth map Gd at the reference viewpoint as the common viewpoint by synthesizing the three depth maps into one.

The depth map synthesis unit 123B outputs the created synthesized depth map Gd to the reduction unit 124.

In this embodiment, the depth map synthesis unit 123B creates the synthesized depth map Gd by smoothing depth values of the three depth maps for each pixel and taking the smoothed depth values as depth values of the synthesized depth map Gd. The smoothing of the depth values may be performed by calculating an arithmetic mean of the three pixel values or a median value thereof using a median filter.

As described above, the synthesis of the depth maps regulates an error of a depth value contained in the three depth maps. When a video captured with a number of viewpoints for constructing a stereoscopic video on a decoding device side is synthesized, this can improve quality of the synthesized video.

The reduction unit 124: inputs therein the synthesized depth map Gd from the map synthesis unit 123B; and creates a reduced synthesized depth map $G_2d$ by reducing the inputted synthesized depth map Gd. The reduction unit 124 outputs the created reduced synthesized depth map $G_2d$ to the depth map encoding unit 13B.

The reduction unit 124 creates the reduced synthesized depth map $G_2d$ which are reduced to half both in height and width by thinning out every other pixel of the synthesized depth map Gd both in the longitudinal and lateral directions.

Note that in thinning out a depth map, the reduction unit 124 may preferably skip a filtering processing using a low pass filter and directly thin out data of the depth map. This can prevent occurrence of a depth value at a level far away from that of the original depth map owing to the filtering processing and maintain quality of a synthesized video.

The reduction ratio used herein is not limited to 1/2 and may be 1/4, 1/8, and the like, by repeating the thinning processing with the reduction ratio of 1/2 a plurality of times. Or, the reduction ratio may be 1/3, 1/5, and the like. Different reduction ratios may be used in the longitudinal and lateral directions. Further, without using the reduction unit 124, the depth map synthesis unit 123B may output the synthesized depth map Gd as it is without any data magnification, to the depth map encoding unit 13B.

The depth map encoding unit 13B: inputs therein the reduced synthesized depth map $G_2d$ from the reduction unit 124 of the depth map synthesis unit 12; creates an encoded depth map $g_2d$ by encoding the reduced synthesized depth map $G_2d$ using a prescribed encoding method; and outputs the created encoded depth map $g_2d$ to the transmission path as a depth map bit stream.

In this embodiment, a depth map transmitted as a depth map bit stream is created by synthesizing depth maps at three viewpoints into one and further reducing the synthesized depth map. This can reduce a data volume of the depth maps and improve encoding efficiency.

The depth map encoding unit 13B is similar to the depth map encoding unit 13 illustrated in FIG. 2 except that, in the depth map encoding unit 13B, a depth map to be encoded is, in place of a single depth map of a size without any magnification, a reduced depth map, detailed description of which is thus omitted herefrom.

The depth map restoration unit 30: decodes the depth map bit stream converted from the encoded depth map $g_2d$ created by the depth map encoding unit 13B, in accordance with the encoding method used; and restores a decoded synthesized depth map G'd of an original size thereof by magnifying the decoded depth map bit stream. The depth map restoration unit 30 is thus configured to include a depth map decoding unit 30a and a magnification unit 30b.

The depth map restoration unit 30 also outputs the restored decoded synthesized depth map G'd to a left projected video prediction unit 15B$_L$ and a right projected video prediction unit 15B$_R$ of the projected video prediction unit 15B.

The depth map decoding unit 30a: inputs therein the encoded depth map $g_2d$ from the depth map encoding unit 13B: and creates an encoded reduced synthesized depth map $G'_2d$ by decoding the encoded depth map $g_2d$ in accordance with the encoding method used. The depth map decoding unit 30a outputs the created encoded reduced synthesized depth map $G'_2d$ to the magnification unit 30b. The depth map decoding unit 30a is similar to the depth map decoding unit 14 illustrated in FIG. 2, detailed description of which is thus omitted herefrom.

The magnification unit 30b: inputs therein the encoded reduced synthesized depth map $G'_2d$ from the depth map decoding unit 30a and thereby creates the decoded synthesized depth map G'd of the same size as the synthesized depth map Gd. The magnification unit 30b outputs the created decoded synthesized depth map G'd to the left projected video prediction unit 15B$_L$ and the right projected video prediction unit 15B$_R$.

When the magnification unit 30b interpolates a pixel thinned out in the reduction processing by the reduction unit 124, as a magnification processing, if a difference in pixel values (depth values) between the pixel of interest and a plurality of neighboring pixels is small, the magnification unit 30b takes an average value of the pixel values of the neighboring pixels as a pixel value of the pixel of interest. On the other hand, if the difference in the pixel values (depth values) between the pixel of interest and a plurality of the neighboring pixels is large, the magnification unit 30b takes the largest value of the pixel values of the neighboring pixels as the pixel value of the pixel of interest. This makes it possible to restore a depth value on the foreground at a boundary portion between the foreground and the background, which can maintain quality of a multi-view video synthesized by the decoding device 2B (see FIG. 22).

In the magnification processing, the magnified depth map is subjected to a two-dimensional median filter. This makes it possible to smoothly join an outline portion of depth values of the foreground object and improve quality of a synthesized video created by using the synthesized depth map.

The projected video prediction unit 15B: extracts a pixel in a pixel area which becomes an occlusion hole when the reference viewpoint video C is projected to the left viewpoint or the like and the right viewpoint or the like, from the left viewpoint video L and the right viewpoint video R, respectively, using the decoded synthesized depth map G'd inputted from the magnification unit 30b of the depth map restoration unit 30; and thereby creates the left residual video (residual video) Lv and the right residual video (residual video) Rv. The projected video prediction unit 15B outputs the created left residual video Lv and the created right residual video Rv to a reduction unit 19Ba and a reduction unit 19Bb, respectively, of the residual video framing unit 19B.

The left projected video prediction unit $15B_L$: inputs therein the left viewpoint video L and the left specified viewpoint Pt from outside; also inputs therein the decoded synthesized depth map G'd decoded by the magnification unit 30b; thereby creates the left residual video Lv; and outputs the created left residual video Lv to the reduction unit 19Ba of the residual video framing unit 19B.

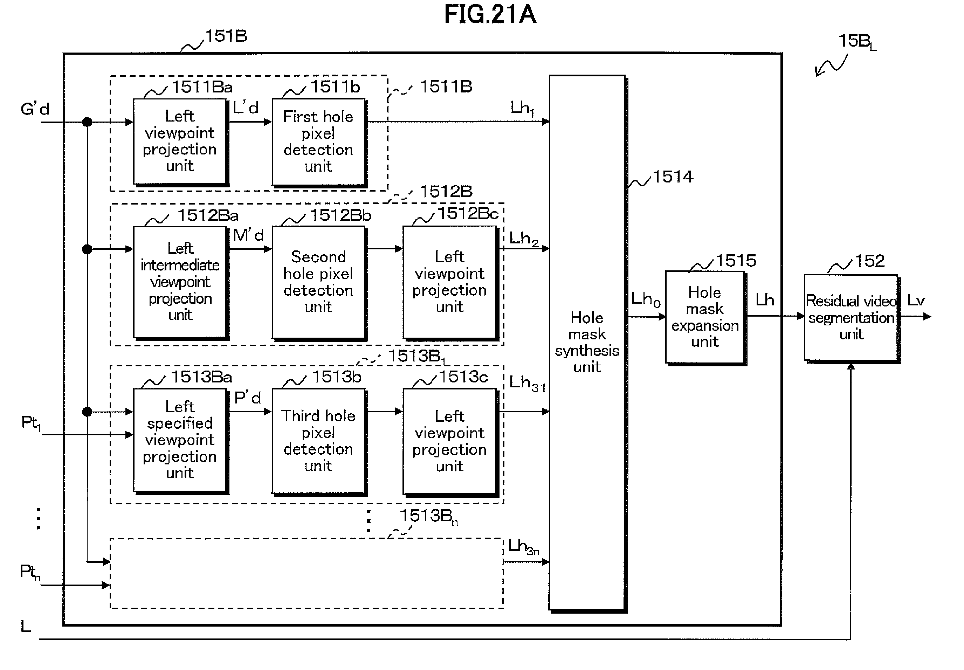

Next are described details of the configuration of the left projected video prediction unit $15B_L$ according to this embodiment with reference to FIG. 21A (as well as FIG. 19 and FIG. 20 where necessary).

As illustrated in FIG. 21A, the left projected video prediction unit $15B_L$ according to this embodiment includes an occlusion hole detection unit 151 B and the residual video segmentation unit 152. The left projected video prediction unit $15B_L$ according to this embodiment is similar to the projected video prediction unit 15 according to the first embodiment illustrated in FIG. 2 except that the left projected video prediction unit $15B_L$ includes, in place of the occlusion hole detection unit 151, the occlusion hole detection unit 151 B.

The occlusion hole detection unit 151 B according to this embodiment includes a first hole mask creation unit 1511 B, a second hole mask creation unit 1512B, a third hole mask creation unit 1513B ($1513B_1$ to $1513B_n$), the hole mask synthesis unit 1514, and the hole mask expansion unit 1515. The occlusion hole detection unit 151 B according to this embodiment is similar to the occlusion hole detection unit 151 according to the first embodiment illustrated in FIG. 3B except that the occlusion hole detection unit 151 B includes, in place of the first hole mask creation unit 1511, the second hole mask creation unit 1512, and the third hole mask creation unit 1513 ($1513_1$ to $1513_n$), the first hole mask creation unit 1511 B, the second hole mask creation unit 1512B, and the third hole mask creation unit 1513B ($1513B_1$ to $1513B_n$), respectively.

Note that the same reference characters are given to components of the projected video prediction unit 15B and the occlusion hole detection unit 151 B similar to those of the projected video prediction unit 15 and the occlusion hole detection unit 151 according to the first embodiment, respectively, description of which is omitted where appropriate.

In this embodiment, the first hole mask creation unit 1511 B, the second hole mask creation unit 1512B, and the third hole mask creation unit 1513B each use the decoded synthesized depth map G'd at the reference viewpoint which is a common viewpoint, as a depth map for detecting an occlusion hole. On the other hand, in the first embodiment, the first hole mask creation unit 1511, the second hole mask creation unit 1512, and the third hole mask creation unit 1513 each use the decoded left synthesized depth map M'd which is a depth map at the intermediate viewpoint between the reference viewpoint and the left viewpoint. The first hole mask creation unit 1511 B, the second hole mask creation unit 1512B, and the third hole mask creation unit 1513B have functions similar to those of the first hole mask creation unit 1511, the second hole mask creation unit 1512, and the third hole mask creation unit 1513 in the first embodiment except that shift amounts in this embodiment are different from those when the projection units 1511 Ba, 1512Ba, 1513Ba project respective depth maps to be inputted to the first hole pixel detection unit 1511 b, a second hole pixel detection unit 1512Bb, and the third hole pixel detection unit 1513b, respectively.

That is, the first hole mask creation unit 1511 B, the second hole mask creation unit 1512B, and the third hole mask creation unit 1513B predict respective areas to constitute occlusion holes OH when those units 1511 B, 1512B, and 1513B project the reference viewpoint video C using the respective inputted depth maps to the left viewpoint, the left intermediate viewpoint, and the left specified viewpoint, respectively. The units 1511 B, 1512B, and 1513B then project the respective predicted areas to the left viewpoint, create the hole masks $Lh_1$, $Lh_2$, $Lh_{31}$ to $Lh_{3n}$ indicating the respective projected areas, and output the created hole masks $Lh_1$, $Lh_2$, $Lh_{31}$ to $Lh_{3n}$ to the hole mask synthesis unit 1514.

Note that the occlusion hole OH can be detected using only the decoded synthesized depth map G'd, and no reference viewpoint video C is necessary. Similarly, an input of the reference viewpoint video C may be skipped in the occlusion hole detection unit 151 according to the first embodiment illustrated in FIG. 3B.

The first hole mask creation unit 1511 B: predicts a pixel area to constitute the occlusion hole OH when the reference viewpoint video C is projected to the left viewpoint; creates the hole mask $Lh_1$ indicating the pixel area; and outputs the created hole mask $Lh_1$ to the hole mask synthesis unit 1514. The first hole mask creation unit 1511 B is thus configured to include the left viewpoint projection unit 1511 Ba and the first hole pixel detection unit 1511 b.

The left viewpoint projection unit 1511 Ba: inputs therein the decoded synthesized depth map G'd from the depth map restoration unit 30; creates the left viewpoint projected depth map L'd which is a depth map at the left viewpoint by projecting the decoded synthesized depth map G'd to the left viewpoint; and outputs the created left viewpoint projected depth map L'd to the first hole pixel detection unit 1511 b.

The left viewpoint projection unit 1511 Ba is similar to the left viewpoint projection unit 1511 a illustrated in FIG. 3B except that when the left viewpoint projection unit 1511 Ba projects a depth map, a shift amount thereof is different from that of the left viewpoint projection unit 1511 a, detailed description of which is thus omitted herefrom.

The second hole mask creation unit 1512B: predicts a pixel area to constitute an occlusion hole OH, when the reference viewpoint video C is projected to the left intermediate viewpoint which is an intermediate viewpoint between the reference viewpoint and the left viewpoint; creates the hole mask $Lh_2$ indicating the pixel area; and outputs the created hole mask $Lh_2$ to the hole mask synthesis unit 1514. The second hole mask creation unit 1512B is thus configured to include the left intermediate viewpoint projection unit 1512Ba, the second hole pixel detection unit 1512Bb, and a left viewpoint projection unit 1512Bc.

The left intermediate viewpoint projection unit 1512Ba: inputs therein the decoded synthesized depth map G'd from the depth map restoration unit 30; creates the decoded left synthesized depth map M'd which is a depth map at the left intermediate viewpoint by projecting the decoded synthesized depth map G'd to the left intermediate viewpoint; and outputs the created decoded left synthesized depth map M'd to the second hole pixel detection unit 1512Bb.

The left intermediate viewpoint projection unit 1512Ba is similar to the left viewpoint projection unit 1511 a illustrated in FIG. 3B except that when the left intermediate viewpoint projection unit 1512Ba projects a depth map, a shift amount thereof is different from that of the left viewpoint projection unit 1511 a, detailed description of which is thus omitted herefrom.

The second hole pixel detection unit 1512Bb and the left viewpoint projection unit 1512Bc are similar to the second hole pixel detection unit 1512a and the left viewpoint projection unit 1512b, respectively, illustrated in FIG. 3B, detailed description of which is thus omitted herefrom.

Note that the second hole mask creation unit 1512B may not be used.

The third hole mask creation units $1513B_1$ to $1513B_n$ ($1513B$): predict pixel areas to constitute occlusion holes OH when the reference viewpoint video C is projected to respective left specified viewpoints $Pt_1$ to $Pt_n$; create the hole masks $Lh_{31}$ to $Lh_{3n}$ indicating the respective pixel areas; and output the respective created hole masks $Lh_{31}$ to $Lh_{3n}$ to the hole mask synthesis unit 1514. The third hole mask creation unit 1513B ($1513B_1$ to $1513B_n$) is thus configured to include the left specified viewpoint projection unit 1513Ba, the third hole pixel detection unit 1513b, and the left viewpoint projection unit 1513c.

The left specified viewpoint projection unit 1513Ba: inputs therein the decoded synthesized depth map G'd from the depth map restoration unit 30; creates the left specified viewpoint depth map P'd which is a depth map at the left specified viewpoint Pt ($Pt_1$ to $Pt_n$) by projecting the decoded synthesized depth map G'd to the left specified viewpoint Pt ($Pt_1$ to $Pt_n$); and outputs the created left specified viewpoint depth map P'd to the third hole pixel detection unit 1513b. The left specified viewpoint projection unit 1513Ba is similar to the left viewpoint projection unit 1511 a illustrated in FIG. 3B except that when the left specified viewpoint projection unit 1513Ba projects a depth map, a shift amount thereof is different from that of the left viewpoint projection unit 1511 a, detailed description of which is thus omitted herefrom. The third hole mask creation unit 1513B may or may not be configured to detect an area to constitute the occlusion hole OH when the third hole mask creation unit 1513B projects a video to at least one left specified viewpoint Pt ($Pt_1$ to $Pt_n$) as illustrated in FIG. 21A.

The hole mask synthesis unit 1514, the hole mask expansion unit 1515, and the residual video segmentation unit 152 used herein may be similar to those used in the first embodiment.

Note that, regarding the residual video segmentation unit 152, a pixel value of a pixel in an area other than the area to constitute the occlusion hole OH indicated by the hole mask Lh with respect to the left viewpoint video is not limited to a fixed value such as 128 and may be an average value of all pixel values of the left viewpoint video L. This makes it possible to reduce a difference in amounts between a portion in which a valid pixel of a residual video is present (that is, an area to constitute the occlusion hole OH) and a portion in which no valid pixel of a residual video is present (the other area), which can reduce a possible distortion in encoding the residual video.

Also regarding the residual video segmentation unit 152 according to the first embodiment, an average of all pixel values of a residual video may be used as a pixel value of a portion in which no valid pixel of the residual video is present.

The right projected video prediction unit $15B_R$ is similar to the left projected video prediction unit $15B_L$ except that the right projected video prediction unit $15B_R$: inputs therein, in place of the left viewpoint video L and the left specified viewpoint Pt, the right viewpoint video R and the right specified viewpoint Qt, respectively; outputs, in place of the left residual video Lv, the right residual video Rv, and that a positional relation between right and left with respect to the reference viewpoint and a viewpoint position of a depth map is reversed, detailed description of which is thus omitted herefrom.

Referring back to FIG. 19 and FIG. 20, description of the configuration of the encoding device 1 B is continued.

The residual video framing unit 19B: creates the framed residual video Fv by framing the left residual video Lv and the right residual video Rv inputted from the left projected video prediction unit $15B_L$ and the right projected video prediction unit $15B_R$ respectively, into a single image; and outputs the created framed residual video Fv to the residual video encoding unit 16B. The residual video framing unit 19B is thus configured to include the reduction units 19Ba, 19Bb and a joining unit 19Bc.

The reduction unit 19Ba and the reduction unit 19Bb: input therein the left residual video Lv and the right residual video Rv from the left projected video prediction unit $15B_L$ and the right projected video prediction unit $15B_R$, respectively;

reduce the respective inputted residual videos by thinning out pixels both in the longitudinal and lateral directions; thereby creates the left reduced residual video $L_2v$ and the right reduced residual video $R_2v$, respectively, both of which are reduced to half both in height (the number of pixels in the longitudinal direction) and width (the number of pixels in the lateral direction); and respectively outputs the created left reduced residual video $L_2v$ and the created right reduced residual video $R_2v$ to the joining unit 19Bc.

An area in which a residual video is used in general accounts for only a small portion of a multi-view video synthesized in the decoding device 2B (see FIG. 22). Hence, even with the pixel thin-out, image quality of the synthesized video is not deteriorated so greatly. The thin-out of a residual video (the reduction processing) can thus improve encoding efficiency without greatly deteriorating image quality.

In subjecting the left residual video Lv and the right residual video Rv to the reduction processing, the reduction unit 19Ba and the reduction unit 19Bb preferably but not necessarily performs a thinning processing after, for example, a low pass filtering using a three-tap filter with coefficients (1, 2, 1). This can prevent occurrence of aliasing in high pass components owing to the thin-out.

The low pass filtering is preferably but not necessarily performed using a one-dimensional filter with the above-described coefficients with respect to the longitudinal direction and the lateral direction prior to thin-out in the both directions, because throughput can be reduced. However, not being limited to this, the thinning processing in the longitudinal direction and the lateral direction may be performed after a two-dimensional low pass filtering is performed.

Further, a low pass filtering is preferably but not necessarily performed to a boundary portion between an area to constitute the occlusion hole OH (an area in which a valid pixel is present) and the other area of the left reduced residual video $L_2v$ and a right reduced residual video $R_2v$. This can make a smooth change in pixel values in a boundary between an area with and without a valid pixel, thus allowing efficiency in encoding to be improved.

Reduction ratios used by the reduction unit 19Ba and the reduction unit 19Bb are not limited to 1/2 and may be any other reduction ratios such as 1/4 and 1/3. Different reduction ratios may be used for the longitudinal and lateral directions. Or, no change may be made in size without using the reduction units 19Ba, 19Bb.

The joining unit 19Bc: inputs therein the left reduced residual video $L_2v$ and the right reduced residual video $R_2v$ from the reduction unit 19Ba and the reduction unit 19Bb, respectively; joins the two residual videos in the longitudinal direction; and thereby creates the framed residual video Fv which is a single video frame having a size unmagnified in the longitudinal direction and 1/2 in the lateral direction, compared to the original size before being reduced. The joining unit 19Bc outputs the created framed residual video Fv to the residual video encoding unit 16B.

Note that the joining unit 19Bc may join the two residual videos in the lateral direction.

The residual video encoding unit 16B: inputs therein the framed residual video Fv from the joining unit 19Bc of the residual video framing unit 19B; creates the encoded residual video fv by encoding the inputted framed residual video Fv using a prescribed encoding method; and outputs the created encoded residual video fv to the transmission path as a residual video bit stream.

The residual video encoding unit 16B is similar to the residual video encoding unit 16 illustrated in FIG. 2 except that a residual video to be encoded is, in place of a single residual video, a framed residual video, detailed description of which is thus omitted herefrom.

[Configuration of stereoscopic video decoding device]

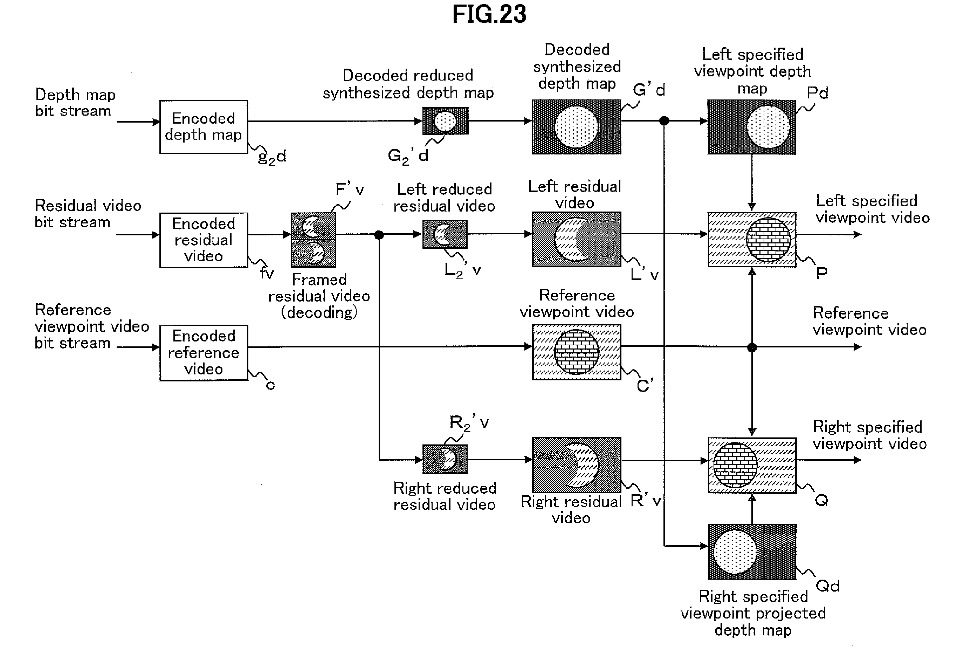

Next is described a configuration of the stereoscopic video decoding device 2B according to the third embodiment with reference to FIG. 22 and FIG. 23. The stereoscopic video decoding device 2B: decodes the bit stream transmitted from the stereoscopic video encoding device 1 B illustrated in FIG. 19 via the transmission path and thereby creates a multi-view video.

As illustrated in FIG. 22, the stereoscopic video decoding device 2B (which may also be simply referred to as the "decoding device 2B" where appropriate) according to the third embodiment includes the reference viewpoint video decoding unit 21, the depth map restoration unit 28, a depth map projection unit 23B, a residual video decoding unit 24B, a projected video synthesis unit 25B, and a residual video separation unit 27B.

The decoding device 2B according to the third embodiment: inputs therein the encoded depth map $g_2d$ which is created by encoding a depth map of a single system as a depth map bit stream, and the encoded residual video fv which is created by framing a residual video of a plurality of systems (two systems) as a residual video bit stream; separates the framed residual video; and thereby creates the left specified viewpoint video P and the right specified viewpoint video Q as a specified viewpoint video of a plurality of the systems.

The decoding device 2B according to this embodiment is similar to the decoding device 2A (see FIG. 14) according to the second embodiment except that the decoding device 2B inputs therein and uses an encoded reduced synthesized depth map $g_2d$ which is created by reducing and encoding a depth map of a single system, the depth map created by synthesizing the depth maps Cd, Ld, and Rd into the synthesized depth map Gd which is a d at a single specified common viewpoint.

The reference viewpoint video decoding unit 21 according to this embodiment is similar to the reference viewpoint video decoding unit 21 illustrated in FIG. 7, detailed description of which is thus omitted herefrom.

The depth map restoration unit 28: creates a decoded reduced synthesized depth map $G_2$'d by decoding the depth bit stream; further creates therefrom the decoded synthesized depth map G'd having an original size; and outputs the created decoded synthesized depth map G'd to a left depth map projection unit $23B_L$ and a right depth map projection unit $23B_R$ of the depth map projection unit 23B. The depth map restoration unit 28 is thus configured to include a depth map decoding unit 28a and a magnification unit 28b.

The depth map restoration unit 28 is configured similarly to the depth map restoration unit 30 (see FIG. 19) of the encoding device 1 B, detailed description of which is thus omitted herefrom. Note that the depth map decoding unit 28a and the magnification unit 28b correspond to the depth map decoding unit 30a and the magnification unit 30b illustrated in FIG. 19, respectively.

The depth map projection unit 23B includes the left depth map projection unit $23B_L$ and the right depth map projection unit $23B_R$. The depth map projection unit 23B: projects a depth map at the reference viewpoint as the common viewpoint to the left specified viewpoint Pt and the right specified viewpoint Qt which are specified viewpoints of respective systems; and thereby creates the left specified viewpoint depth map Pd and the right specified viewpoint depth map Qd which are depth maps at the respective specified viewpoints. The depth map projection unit 23B outputs the created left specified viewpoint depth map Pd and the created right specified viewpoint depth map Qd to a left projected video synthesis unit $25B_L$ and a right projected video synthesis unit $25B_R$, respectively, of the projected video synthesis unit 25B.

Note that, similarly to the depth map projection unit 23A illustrated in FIG. 14, the depth map projection unit 23B according to this embodiment: inputs therein one or more left specified viewpoints (specified viewpoints) Pt and right specified viewpoints (specified viewpoints) Qt; thereby creates the left specified viewpoint depth map Pd and the right specified viewpoint depth map Qd corresponding to respective specified viewpoints; and outputs the created left projected video synthesis unit $25B_L$ and the created right projected video synthesis unit $25B_R$, respectively, of the projected video synthesis unit 25B.

The left depth map projection unit $23B_L$: inputs therein the decoded synthesized depth map G'd which is a decoded depth map at the reference viewpoint; and creates the left specified viewpoint depth map (specified viewpoint depth map) Pd at the left specified viewpoint Pt by projecting the inputted decoded synthesized depth map G'd to the left specified viewpoint Pt. The left depth map projection unit $23B_L$ outputs the created left specified viewpoint depth map Pd to the left projected video synthesis unit $25B_L$.

Note that the left depth map projection unit $23B_L$ according to this embodiment is similar to the left depth map projection unit $23B_L$ according to the second embodiment illustrated in FIG. 14 except that when the former projects a depth map, a shift amount thereof is different from that of the latter due to a difference in respective viewpoint positions of inputted depth maps, detailed description of which is thus omitted herefrom.

The right depth map projection unit $23B_R$: inputs therein the decoded synthesized depth map G'd which is a depth map at a decoded reference viewpoint; and creates the right specified viewpoint depth map (specified viewpoint depth map) Qd at the right specified viewpoint Qt by projecting the decoded synthesized depth map G'd to the right specified viewpoint Qt. The right depth map projection unit $23B_R$ outputs the created right specified viewpoint depth map Qd to the right projected video synthesis unit $25B_R$.

Note that the right depth map projection unit $23B_R$ is configured similarly to the left depth map projection unit $23B_L$ except that a positional relation between right and left with respect to the reference viewpoint is reversed, detailed description of which is thus omitted herefrom.

The residual video decoding unit 24B: creates the framed residual video (decoded framed residual video) F'v by decoding the residual video bit stream; and outputs the created framed residual video F'v to the separation unit 27Ba of the residual video separation unit 27B.

The residual video decoding unit 24B is configured similarly to the residual video decoding unit 24A according to the second embodiment illustrated in FIG. 14 except that sizes of respective framed residual videos to be decoded are different from each other, detailed description of which is thus omitted herefrom.

The residual video separation unit 27B: inputs therein the decoded framed residual video F'v from the residual video decoding unit 24B; separates the inputted decoded framed residual video F'v into two reduced residual videos, that is, the left reduced residual video $L_2$'v and the right reduced residual video $R_2$'v; magnifies both the reduced residual videos; and thereby creates the left residual video (decoded residual video) L'v and the right residual video (decoded residual video) R'v. The residual video separation unit 27B outputs the created left residual video L'v and the created right residual video R'v to the left projected video synthesis unit $25B_L$ and the right projected video synthesis unit $25B_R$, respectively, of the projected video synthesis unit 25B.

Note that the residual video separation unit 27B is configured similarly to the residual video separation unit 27 according to the second embodiment illustrated in FIG. 14 except that sizes of respective framed residual videos to be separated are different from each other, detailed description of which is thus omitted herefrom. Note that the separation unit 27Ba, the magnification unit 27Bb, and the magnification unit 27Bc of the residual video separation unit 27B correspond to the separation unit 27a, the magnification unit 27b, and the magnification unit 27c of the residual video separation unit 27, respectively.

The projected video synthesis unit 25B creates the left specified viewpoint video P and the right specified viewpoint video Q which are specified viewpoint videos at the left specified viewpoint Pt and the right Qt, respectively, which are specified viewpoints of the left and right systems, based on the reference viewpoint video C' inputted from the reference viewpoint video decoding unit 21, the left residual video L'v and the right residual video R'v, which are residual videos of the left and right systems, inputted from the residual video separation unit 27B, and the left specified viewpoint depth map Pd and the right specified viewpoint depth map Qd, which are depth maps of the left and right systems, inputted from the depth map projection unit 23B. The projected video synthesis unit 25B is thus configured to include the left projected video synthesis unit 25B$_L$ and the right projected video synthesis unit 25B$_R$.

The left projected video synthesis unit 25B$_L$: inputs therein the reference viewpoint video C' from the reference viewpoint video decoding unit 21, the left residual video L'v from the magnification unit 27Bb of the residual video separation unit 27B, and the left specified viewpoint depth map Pd from the left depth map projection unit 23B$_L$ of the depth map projection unit 23B; and thereby creates the left specified viewpoint video P.

The right projected video synthesis unit 25B$_R$: inputs therein the reference viewpoint video C' from the reference viewpoint video decoding unit 21, the right residual video R'v from the magnification unit 27Bc of the residual video separation unit 27B, and the right specified viewpoint depth map Qd from the right depth map projection unit 23B$_R$ of the depth map projection unit 23B; and thereby creates the right specified viewpoint video Q.

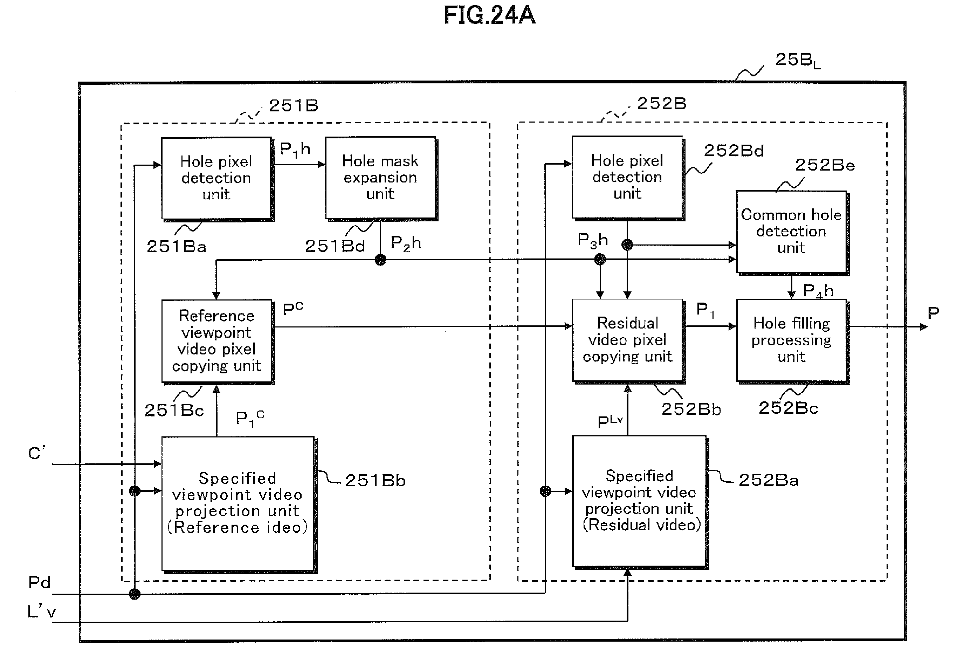

Next is described in detail a configuration of the left projected video synthesis unit 25B$_L$ with reference to FIG. 24A (as well as FIG. 22 and FIG. 23 where necessary).

As illustrated in FIG. 24A, the left projected video synthesis unit 25B$_L$ according to this embodiment includes a reference viewpoint video projection unit 251 B and a residual video projection unit 252B.

The reference viewpoint video projection unit 251 B: inputs therein the reference viewpoint video C' from the reference viewpoint video decoding unit 21 and the left specified viewpoint depth map Pd from the depth map projection unit 23B; and creates the left specified viewpoint video P$^C$ with respect to a pixel with which the reference viewpoint video C' is projectable to the left specified viewpoint Pt, as a video at the left specified viewpoint Pt. The reference viewpoint video projection unit 251 B outputs the created left specified viewpoint video P$^C$ to the residual video projection unit 252B.

The reference viewpoint video projection unit 251 B is thus configured to include the hole pixel detection unit 251 Ba, a specified viewpoint video projection unit 251 Bb, a reference viewpoint video pixel copying unit 251 Bc, and a hole mask expansion unit 251 Bd.

The hole pixel detection unit 251 Ba: inputs therein the left specified viewpoint depth map Pd from the left depth map projection unit 23B$_L$ of the depth map projection unit 23B; detects a pixel to become an occlusion hole when the reference viewpoint video C' is projected to the left specified viewpoint Pt, using the left specified viewpoint depth map Pd; creates the hole mask P$_1$h indicating a pixel area composed of the detected pixel, as a result of the detection; and outputs the created hole mask P$_1$h to the hole mask expansion unit 251 Bd.

How the hole pixel detection unit 251 Ba detects the pixel to become an occlusion hole is similar to how the hole pixel detection unit 251 a according to the first embodiment illustrated in FIG. 8 detects such a pixel, detailed description of which is thus omitted herefrom.

The specified viewpoint video projection unit 251 Bb: inputs therein the reference viewpoint video C' from the reference viewpoint video decoding unit 21 and the left specified viewpoint depth map Pd from the left depth map projection unit 23B$_L$ of the depth map projection unit 23B; creates the left specified viewpoint projection video P$_1^C$ which is a video created by projecting the reference viewpoint video C' to the left specified viewpoint Pt; and outputs the created left specified viewpoint projection video P$_1^C$ to the reference viewpoint video pixel copying unit 251 Bc.

Note that the specified viewpoint video projection unit 251 Bb is similar to the specified viewpoint video projection unit 251 b according to the first embodiment illustrated in FIG. 8, detailed description of which is thus omitted herefrom.

The reference viewpoint video pixel copying unit 251 Bc: inputs therein the left specified viewpoint projection video P$_1^C$ from the specified viewpoint video projection unit 251 Bb and the hole mask P$_2$h from the hole mask expansion unit 251 Bd; copies a pixel which can project the reference viewpoint video C' to the left specified viewpoint Pt without becoming an occlusion hole, from the above-described inputted data; and thereby creates the left specified viewpoint video P$^C$.

The reference viewpoint video pixel copying unit 251 Bc also outputs the created left specified viewpoint video P$^C$ to the residual video pixel copying unit 252Bb of the residual video projection unit 252B.

Note that the reference viewpoint video pixel copying unit 251 Bc is similar to the reference viewpoint video pixel copying unit 251c according to the first embodiment illustrated in FIG. 8, detailed description of which is thus omitted herefrom.

The hole mask expansion unit 251 Bd: inputs therein the hole mask P$_1$h from the hole pixel detection unit 251 Ba; creates a hole mask P$_2$h by expanding the pixel area to constitute an occlusion hole at the hole mask P$_1$h by a

prescribed number of pixels; and outputs the created hole mask $P_2h$ to the reference viewpoint video pixel copying unit 251 Bc and to a common hole detection unit 252Be of the residual video projection unit 252B.

Herein, the prescribed number of the pixels by the number of which the pixel area is expanded may be, for example, two pixels. The expansion processing can prevent that the reference viewpoint video pixel copying unit 251 Bc erroneously copies a pixel from the left specified viewpoint projection video $P_1{}^C$, due to an error generated when the left specified viewpoint depth map Pd is created.

The residual video projection unit 252B: inputs therein the left residual video L'v from the residual video decoding unit 24B and the left specified viewpoint depth map Pd from the left depth map projection unit $23B_L$ of the depth map projection unit 23B; and creates the left specified viewpoint video P by interpolating a pixel which cannot project the reference viewpoint video C', as a video at the left specified viewpoint Pt, that is, a pixel to become an occlusion hole, to the left specified viewpoint video $P^C$. The residual video projection unit 252B outputs the created left specified viewpoint video P to the stereoscopic video display device 4 (see FIG. 1).

The residual video projection unit 252B is thus configured to include the specified viewpoint video projection unit 252Ba, a residual video pixel copying unit 252Bb, a hole filling processing unit 252Bc, a hole pixel detection unit 252Bd, and a common hole detection unit 252Be.

The specified viewpoint video projection unit 252Ba: inputs therein the left residual video L'v from the magnification unit 27Bb of the residual video separation unit 27B, and the left specified viewpoint depth map Pd from the left depth map projection unit $23B_L$ of the depth map projection unit 23B; creates the left specified viewpoint projection residual video $P^{Lv}$ which is a video created by projecting the left residual video L'v to the left specified viewpoint Pt; and outputs the created left specified viewpoint projection residual video $P^{Lv}$ to the residual video pixel copying unit 252Bb.

The residual video pixel copying unit 252Bb inputs therein: the left specified viewpoint video $P^C$ from the reference viewpoint video pixel copying unit 251 Bc of the reference viewpoint video projection unit 251B; the hole mask $P_2h$ from the hole mask expansion unit 251 Bd; the left specified viewpoint projection residual video $P^{Lv}$ from the specified viewpoint video projection unit 252Ba; and a hole mask $P_3h$ from the hole pixel detection unit 252Bd. The residual video pixel copying unit 252Bb: references the hole mask $P_2h$; extracts a pixel value of a pixel having been become an occlusion hole at the left specified viewpoint video $P^C$, from the left specified viewpoint projection residual video $P^{Lv}$; copies the extracted pixel value to the left specified viewpoint video $P^C$; and thereby creates the left specified viewpoint video $P_1$ which is a video at the left specified viewpoint Pt. At this time, the residual video pixel copying unit 252Bb references the hole mask $P_3h$ indicating a pixel area (an occlusion hole) in which the left residual video L'v is not projectable as a video at the left specified viewpoint Pt, using the left specified viewpoint depth map Pd; and skips a copy of a pixel in the pixel area to constitute an occlusion hole at the hole mask $P_3h$, from the left specified viewpoint projection residual video $P^{Lv}$.

The residual video pixel copying unit 252Bb outputs the created left specified viewpoint video $P_1$ to the hole filling processing unit 252Bc.

The hole filling processing unit 252Bc inputs therein the left specified viewpoint video $P_1$ from the residual video pixel copying unit 252Bb and a hole mask $P_4h$ from the common hole detection unit 252Be. The hole filling processing unit 252Bc: references a hole mask $P_4h$ indicating a pixel which has not been validly copied by either the reference viewpoint video pixel copying unit 251 Bc or the residual video pixel copying unit 252Bb, in the inputted left specified viewpoint video $P_1$; and creates the left specified viewpoint video P by filling the pixel having become an occlusion hole, with a valid pixel value of a neighboring pixel. The hole filling processing unit 252Bc outputs the created left specified viewpoint video P to the stereoscopic video display device 4 (see FIG. 1) as one of videos constituting a multi-view video.

The hole pixel detection unit 252Bd: inputs therein the left specified viewpoint depth map Pd from the left depth map projection unit $23B_L$ of the depth map projection unit 23B; detects a pixel to become an occlusion hole when the left residual video L'v which is a video at the left viewpoint is projected to the left specified viewpoint Pt using the inputted left specified viewpoint depth map Pd; creates the hole mask $P_3h$ indicating a pixel area detected, as a detected result; and outputs the detected result to the residual video pixel copying unit 252Bb.

The hole pixel detection unit 252Bd detects a pixel to become an occlusion hole on an assumption that the left specified viewpoint is positioned more rightward than the left viewpoint. Thus, how to detect a pixel to become an occlusion hole by the hole pixel detection unit 251 a according to the first embodiment illustrated in FIG. 8 can be applied to how to detect a pixel to become an occlusion hole by the hole pixel detection unit 252Bd. That is, if a leftward neighboring pixel of a pixel of interest has a pixel value (a depth value) larger than that of the pixel of interest and some other prescribed conditions are satisfied, then the hole pixel detection unit 252Bd determines that the pixel of interest becomes an occlusion hole.

Note that the prescribed conditions herein are similar to those determined by the hole pixel detection unit 251 a except that a relation be right and left is reversed.

The common hole detection unit 252Be inputs therein the hole mask $P_2h$ from the hole mask expansion unit 251 Bd and the hole mask $P_3h$ from the hole pixel detection unit 252Bd. The common hole detection unit 252Be: calculates a logical multiply of the hole mask $P_2h$ and the hole mask $P_3h$ for each pixel; thereby creates the hole mask $P_4h$; and

outputs the created hole mask $P_4h$ to the hole filling processing unit 252Bc.

Note that the hole mask $P_4h$ indicates, as described above, a pixel which has not been validly copied by either the reference viewpoint video pixel copying unit 251 Bc or the residual video pixel copying unit 252Bb in the left specified viewpoint video $P_1$ and has become a hole without having a valid pixel value.

Referring back to FIG. 22, the right projected video synthesis unit $25B_R$ is similar to the left projected video synthesis unit $25B_L$ except that a positional relation between right and left with respect to the reference viewpoint is reversed, detailed description of which is thus omitted herefrom.

As described above, the encoding device 1 B according to the third embodiment: synthesizes and encodes a plurality of depth maps of a stereoscopic video of a plurality of systems into a single depth map at the reference viewpoint as a common viewpoint; and frame, encodes, and outputs a residual video as a bit stream. This allows encoding of the stereoscopic video at a high encoding efficiency.

Further, the decoding device 2B can also create a multi-view video by decoding the stereoscopic video encoded by the encoding device 1 B.

[Operations of stereoscopic video encoding device]

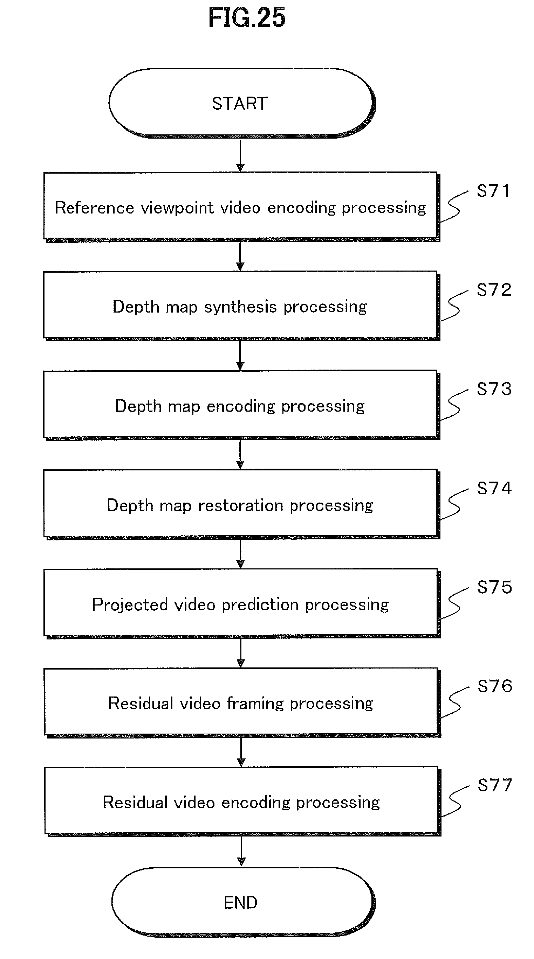

Next are described operations of the stereoscopic video encoding device 1 B according to the third embodiment with reference to FIG. 25 (as well as FIG. 19 where necessary).

(Reference viewpoint video encoding processing)

The reference viewpoint video encoding unit 11 of the encoding device 1 B: creates the encoded reference viewpoint video c by encoding the reference viewpoint video C inputted from outside using a prescribed encoding method; and outputs the created encoded reference viewpoint video c as a reference viewpoint video bit stream (step S71).

(Depth map synthesis processing)

The depth map synthesis unit 12B of the encoding device 1B: synthesizes the reference viewpoint depth map Cd, the left viewpoint depth map Ld, and the right viewpoint depth map Rd, each inputted from outside; and thereby creates a single depth map at a common viewpoint as the reference viewpoint (step S72). In this embodiment, step S72 includes three substeps to be described next.

Firstly, the left depth map projection unit 121 B and the right depth map projection unit 122B of the encoding device 1 B creates the common viewpoint depth map $C^Ld$ and the common viewpoint depth map $C^Rd$ by respectively projecting the left viewpoint depth map Ld and the right viewpoint depth map Rd to the reference viewpoint which is the common viewpoint;.

Secondly, the map synthesis unit 123B of the encoding device 1 B creates the synthesized depth map Gd by synthesizing three depth maps at the common viewpoint (reference viewpoint), namely, the reference viewpoint depth map Cd, the common viewpoint depth map $C^Ld$, and the common viewpoint depth map $C^Rd$.

Finally, the encoding device 1 B of the reduction unit 124 creates the reduced synthesized depth map $G_2d$ by reducing the synthesized depth map Gd.

(Depth map encoding processing)

The depth map encoding unit 13B of the encoding device 1B: creates the encoded depth map $g_2d$ by encoding the reduced synthesized depth map $G_2d$ created in step S72 using the prescribed encoding method; and outputs the created encoded depth map $g_2d$ as a depth map bit stream (step S73).

(Depth map restoration processing)

The depth map restoration unit 30 of the encoding device 1 B creates the decoded synthesized depth map G'd by restoring the encoded depth map $g_2d$ created in step S73 (step S74). In this embodiment, step S74 described above includes two substeps to be described next.

Firstly, the depth map decoding unit 30a of the encoding device 1 B creates the decoded reduced synthesized depth map $G_2'd$ by decoding the encoded depth map $g_2d$.

Secondly, the magnification unit 30b of the encoding device 1 B creates the decoded synthesized depth map G'd by magnifying the decoded reduced synthesized depth map $G_2'd$ to an original size thereof.

(Projected video prediction processing)

The left projected video prediction unit 15B$_L$ of the projected video prediction unit 15B of the encoding device 1B: creates the left residual video Lv using the decoded synthesized depth map G'd created in step S74 and the left viewpoint video L inputted from outside. Also, the right projected video prediction unit 15B$_R$ of the projected video prediction unit 15B of the encoding device 1B: creates the right residual video Rv using the decoded synthesized depth map G'd and the right viewpoint video R inputted from outside (step S75).

(Residual video framing processing)

The residual video framing unit 19B of the encoding device 1 B creates the framed residual video Fv by reducing and joining the two residual videos created in step S75, that is, the left residual video Lv and the right residual video Rv into a single framed image (step S76).

(Residual video encoding processing)

The residual video encoding unit 16B of the encoding device 1B: creates the encoded residual video fv by encoding the framed residual video Fv created in step S76 using the prescribed encoding method; and outputs the created encoded residual video fv as a residual video bit stream (step S77).

[Operations of stereoscopic video decoding device]

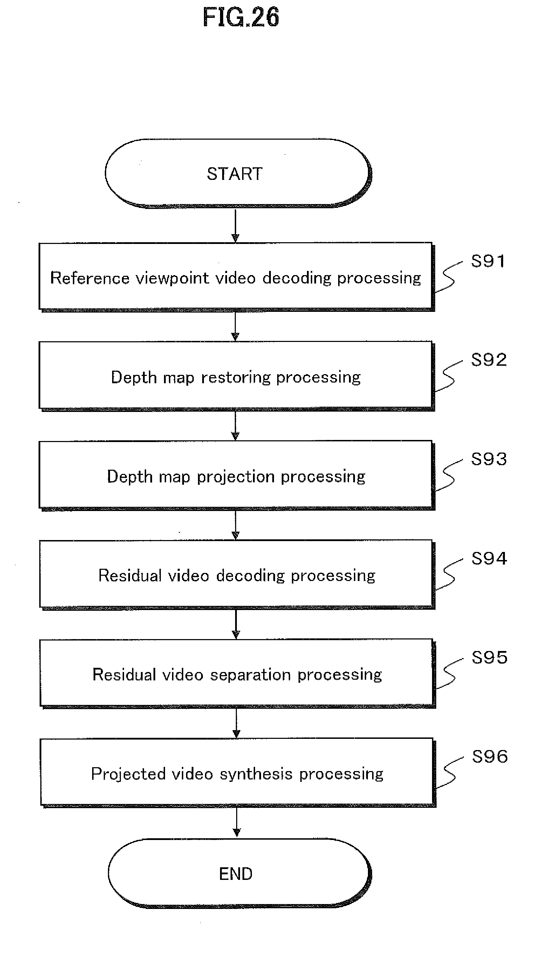

Next are described operations of the stereoscopic video decoding device 2B according to the third embodiment with reference to FIG. 26 (as well as FIG. 22 where necessary).

(Reference viewpoint video decoding processing)

The reference viewpoint video decoding unit 21 of the decoding device 2B: creates the reference viewpoint video C' by decoding the reference viewpoint video bit stream; and outputs the created reference viewpoint video C' as one of the videos constituting the multi-view video (step S91).

(Depth map restoration processing)

The depth map restoration unit 28 of the decoding device 2B creates the decoded synthesized depth map G'd by decoding the depth map bit stream (step S92). In this embodiment, step S92 includes two substeps to be described next.
Firstly, the depth map decoding unit 28a of the decoding device 2B creates the decoded reduced synthesized depth map G$_2$'d by decoding the encoded depth map g$_2$d transmitted as the depth map bit stream.
Secondly, the magnification unit 28b of the decoding device 2B creates the decoded synthesized depth map G'd by magnifying the decoded reduced synthesized depth map G$_2$'d to an original size thereof.

(Depth map projection processing)

The left depth map projection unit 23B$_L$ of the depth map projection unit 23B of the decoding device 2B creates the left specified viewpoint depth map Pd which is a depth map at the left specified viewpoint Pt by projecting the decoded synthesized depth map G'd created in step S92 to the left specified viewpoint Pt. Also, the right depth map projection unit 23B$_R$ thereof creates the right specified viewpoint depth map Qd which is a depth map at the right specified viewpoint Qt by projecting the decoded synthesized depth map G'd to the right specified viewpoint Qt (step S93).

(Residual video decoding processing)

The residual video decoding unit 24B of the decoding device 2B creates the framed residual video F'v by decoding the residual video bit stream (step S94).

(Residual video separation processing)

The separation unit 27Ba of the residual video separation unit 27B of the decoding device 2B: separates the decoded framed residual video F'v created in step S94, which has been created by joining a pair of residual videos, from each other. Further, the magnification unit 27Bb and the magnification unit 27Bc: magnify the respective separated residual videos to original sizes thereof; and thereby create the left residual video L'v and the right residual video R'v, respectively (step S95).

(Projected video synthesis processing)

The left projected video synthesis unit $25B_L$ of the decoding device 2B: synthesizes a pair of videos created by projecting the reference viewpoint video C' created in step S91 and the left residual video L'v created in step S95 each to the left specified viewpoint Pt, using the left specified viewpoint depth map Pd created in step S93; and thereby creates the left specified viewpoint video P which is a video at the left specified viewpoint Pt. Further, the right projected video synthesis unit $25B_R$ thereof: synthesizes a pair of videos created by projecting the reference viewpoint video C' created in step S91 and the created in step S95 right residual video R'v created in step S95 each to the right specified viewpoint Qt, using the right specified viewpoint depth map Qd created in step S93; and thereby creates the right specified viewpoint video Q which is a video at the right specified viewpoint Qt (step S96).

The decoding device 2B outputs the reference viewpoint video C' created in step S91 and the left specified viewpoint video P and the right specified viewpoint video Q created in step S96 as a multi-view video, to, for example, the stereoscopic video display device 4 illustrated in FIG. 1, in which the multi-view video is displayed as a multi-view stereoscopic video.

<Variation of Third Embodiment>

Next are described a stereoscopic video encoding device and a stereoscopic video decoding device according to a variation of the third embodiment of the present invention.

[Configuration of stereoscopic video encoding device]

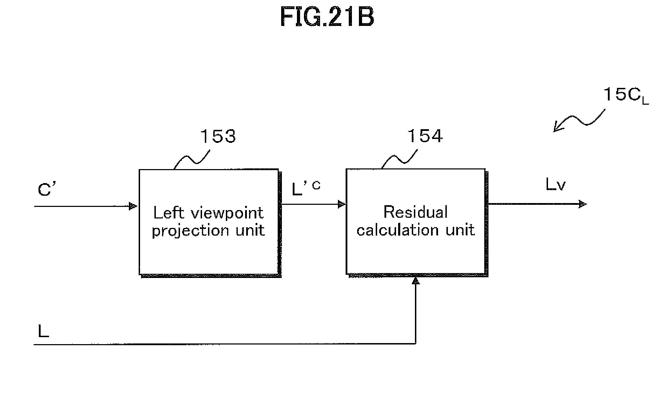

A configuration of the stereoscopic video encoding device according to this variation is described with reference to FIG. 19 and FIG. 21B.

The stereoscopic video encoding device (which may also be simply referred to as an "encoding device 1C" where appropriate, though an entire configuration thereof is not shown) according to this variation is similar to the projected video prediction unit 15B of the encoding device 1 B according to the third embodiment illustrated in FIG. 19 except that the stereoscopic video encoding device 1C creates the left residual video Lv by calculating, for each of pixels of a video of interest, a difference of pixel values between the left viewpoint video L and a video in which the decoding reference viewpoint video C' created by decoding the encoded reference viewpoint video c (subtraction type), in place of by segmenting a pixel in an area to constitute an occlusion hole from the left viewpoint video L (logical operation type). The stereoscopic video encoding device 1C similarly creates the right residual video Rv by calculating, for each of the pixels of the video of interest, a difference of pixel values between the right viewpoint video R and a video in which the decoding reference viewpoint video C' is projected to the right viewpoint.

Note that how to create the right residual video Rv is similar to how to create the left residual video Lv except: that the right viewpoint video R is used in place of the left viewpoint video L; and that a video in which the decoding reference viewpoint video C' is projected to the right viewpoint is used in place of a video in which the decoding reference viewpoint video C' is projected to the left viewpoint, detailed description of which is thus omitted herefrom where appropriate.

The encoding device 1C according to this variation includes a left projected video prediction unit $15C_L$ illustrated in FIG. 21B so as to create the left residual video Lv, in place of the left projected video prediction unit $15B_L$ according to the third embodiment illustrated in FIG. 21A. Note that a right projected video prediction unit not shown is also configured similarly.

The encoding device 1C is similar to the encoding device 1 B according to the third embodiment illustrated in FIG. 19 except that the encoding device 1C further includes a reference viewpoint video decoding unit (not shown) which decodes the encoded reference viewpoint video c created by the reference viewpoint video encoding unit 11. Note that the reference viewpoint video decoding unit is the same as the reference viewpoint video decoding unit 21 illustrated in FIG. 22.

As illustrated in FIG. 21B, the left projected video prediction unit $15C_L$ according to this variation includes the left viewpoint projection unit 153 and a residual calculation unit 154.

The left projected video prediction unit $15C_L$: inputs therein the decoding reference viewpoint video C' from the reference viewpoint video decoding unit not shown, and the decoded synthesized depth map G'd from the magnification unit 30b of the depth map restoration unit 30, and outputs the left residual video Lv to the reduction unit 19Ba of the residual video framing unit 19B.

The left viewpoint projection unit 153: inputs therein the decoded reference viewpoint video C' from the reference viewpoint video decoding unit not shown; creates a left viewpoint video L$^{'C}$ by projecting the decoded reference viewpoint video C' to the left viewpoint. The left viewpoint projection unit 153 outputs the created left viewpoint video L$^{'C}$ to the residual calculation unit 154. At this time, if a pixel in the left viewpoint video L$^{'C}$ which is not projected from the decoded reference viewpoint video C', that is, which becomes an occlusion hole, is present, the left viewpoint projection unit 153 sets a pixel value of the pixel at a prescribed value. The prescribed value is, for example, in a case of 8 bit data per component, preferably but not necessarily takes a value of "128" for each of the components, which is a median value in a range of values in which the pixel value can take. This results in a difference between the pixel value of each of the components and a pixel value of the left viewpoint video L of not more than 8 bit data including a sign, which can improve an encoding efficiency.

The residual calculation unit 154: inputs therein the left viewpoint video L$^{'C}$ from the left viewpoint projection unit 153; also inputs therein the left viewpoint video L from outside; and creates the left residual video Lv which is a difference between the left viewpoint video L and the left viewpoint video L$^{'C}$. More specifically, the residual calculation unit 154 creates the left residual video Lv which has a pixel value for each component of an entire video corresponds to a difference obtained by subtracting a pixel value of the left viewpoint video L$^{'C}$ from a pixel value of the left viewpoint video L.

The residual calculation unit 154 outputs the created left residual video Lv to the reduction unit 19Ba of the residual video framing unit 19B.

In this variation, when a residual video is created, the decoded reference viewpoint video C' is used. This means that the reference viewpoint video is in a condition same as that when a specified viewpoint video is restored by adding a residual video on the decoding device side. This makes it possible to create a multi-view video with a higher quality.

In creating a residual video, the reference viewpoint video C may be used in place of the decoded reference viewpoint video C'. This makes it possible to dispense with the reference viewpoint video decoding unit (not shown).

The configuration other than the described above of the encoding device 1C according to this variation is similar to that of the encoding device 1B according to the third embodiment, detailed description of which is thus omitted herefrom.

[Configuration of stereoscopic video decoding device]

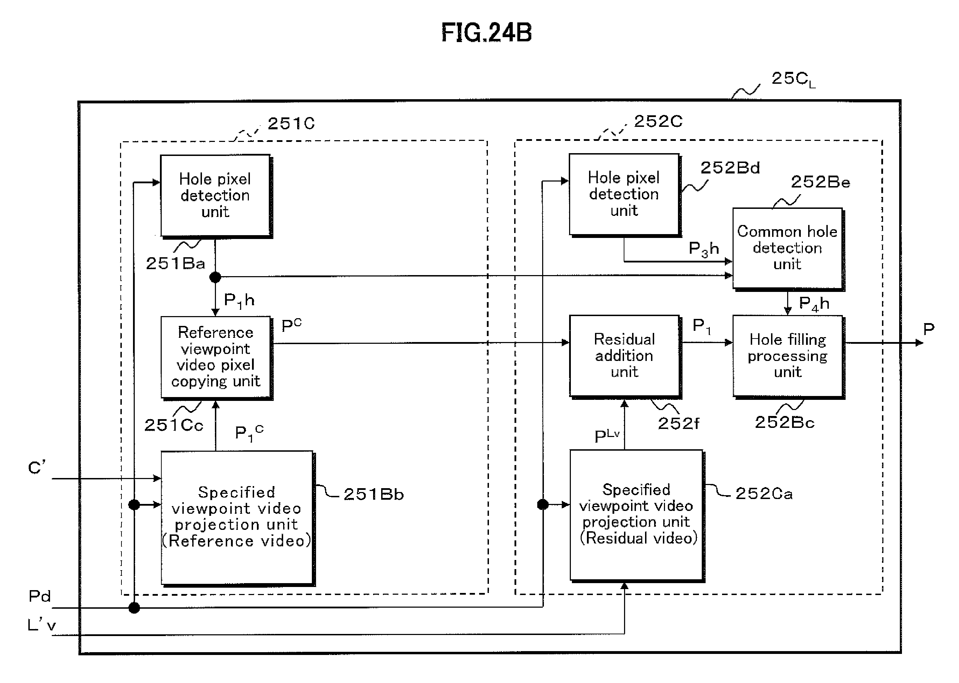

Next is described a configuration of the stereoscopic video decoding device according to this variation with reference to FIG. 22 and FIG. 24B. The stereoscopic video decoding device according to this variation creates a multi-view video by decoding a bit stream transmitted from the encoding device 1C according to this variation via the transmission path.

That is, the stereoscopic video decoding device (which may also be simply referred to as a "decoding device 2C" where appropriate, though an entire configuration thereof is not shown) according to this variation is similar to the decoding device 2B according to the third embodiment illustrated in FIG. 22 except that the projected video synthesis unit 25B creates the left specified viewpoint video P using the left residual video Lv created, in place of in the above-described subtraction type, in the above-described logical operation type.

Similarly, the decoding device 2C creates the right specified viewpoint video Q using the right residual video Rv created by calculating, for each pixel, a difference of pixel values between the right viewpoint video R and a video created by projecting the decoded reference viewpoint video C' to the right viewpoint.

Note that how to create the right specified viewpoint video Q is similar to how to create the left specified viewpoint video P except that the right residual video Rv is used in place of the left residual video Lv and that right and left of a projection direction with respect to the reference viewpoint is reversed, detailed description of which is thus omitted herefrom where appropriate.

The decoding device 2C according to this variation includes a left projected video synthesis unit 25C$_L$ illustrated in FIG. 24B so as to create the left specified viewpoint video P, in place of the left projected video synthesis unit 25B$_L$ according to the third embodiment illustrated in FIG. 24A. Note that a right projected video synthesis unit not shown is also configured similarly.

As illustrated in FIG. 24B, similarly to the left projected video synthesis unit 25B$_L$ illustrated in FIG. 24A, the left projected video synthesis unit 25C$_L$ according to this variation: inputs therein the reference viewpoint video C' from the reference viewpoint video decoding unit 21, the left residual video L'v from the magnification unit 27Bb of the residual video separation unit 27B, and the left specified viewpoint depth map Pd from the left depth map projection unit 23B$_L$ of the depth map projection unit 23B; and thereby creates the left specified viewpoint video P.

The left projected video synthesis unit 25C$_L$ is thus configured to include a reference viewpoint video projection unit 251C and a residual video projection unit 252C.

The reference viewpoint video projection unit 251C is similar to the reference viewpoint video projection unit 251 B illustrated in FIG. 24A except that the reference viewpoint video projection unit 251C: does not include the hole mask expansion unit 251 Bd; but includes a reference viewpoint video pixel copying unit 251 Cc in place of the reference viewpoint video pixel copying unit 251 Bc; and outputs the hole mask P$_1$h created by the hole pixel detection unit 251 Ba to the reference viewpoint video pixel copying unit 251Cc and the common hole detection unit 252Be.

Note that the same reference characters are given to components similar to those in the third embodiment, description of which is omitted where appropriate.

Note that when a residual video is created in the subtraction type, unlike in the logical operation type, all pixels of the residual video have valid pixel values. This excludes a possibility that, unlike the logical operation type, a portion without having a valid pixel is inappropriately used for synthesizing a specified viewpoint video, and also avoids necessity of expanding the hole mask $P_1h$.

The reference viewpoint video pixel copying unit 251 Cc inputs therein the left specified viewpoint projection video $P_1^C$ from the specified viewpoint video projection unit 251 Bb, and the hole mask $P_1h$ from the hole pixel detection unit 251 Ba. The reference viewpoint video pixel copying unit 251 Cc: references the hole mask $P_1h$; and creates the left specified viewpoint video $P^C$ by copying a pixel not to become an occlusion hole in the left specified viewpoint projection video $P_1^C$.

At this time, the reference viewpoint video pixel copying unit 251 Cc sets a pixel value of a pixel in the area to become the occlusion hole, at the above-described prescribed value at which the left viewpoint projection unit 153 (see FIG. 21 B) sets the pixel to become the occlusion hole. With this configuration, the residual addition unit 252f to be described later adds a pixel in the left specified viewpoint projection residual video $P^{Lv}$ also to a pixel having become an occlusion hole in the left specified viewpoint video $P^C$, which allows restoration of an appropriate pixel value.

The reference viewpoint video pixel copying unit 251 Cc outputs the created left specified viewpoint video $P^C$ to the residual addition unit 252f of the residual video projection unit 252C.

The residual video projection unit 252C is similar to the residual video projection unit 252B illustrated in FIG. 24A except that the residual video projection unit 252C: includes, in place of the specified viewpoint video projection unit 252Ba and the residual video pixel copying unit 252Bb, a specified viewpoint video projection unit 252Ca and the residual addition unit 252f, respectively; and inputs therein, in place of the hole mask $P_2h$, the hole mask $P_1h$ to the common hole detection unit 252Be.

Note that the same reference characters are given to components in this variation similar to those in the third embodiment, description of which is omitted herefrom where appropriate.

The specified viewpoint video projection unit 252Ca according to this variation is similar to the specified viewpoint video projection unit 252Ba according to the third embodiment except that, in the specified viewpoint video projection unit 252Ca, the left residual video L'v which is a target to be projected is created not in the logical operation type but in the subtraction type.

The specified viewpoint video projection unit 252Ca: creates the left specified viewpoint projection residual video $P^{Lv}$ by projecting the left residual video L'v to the left specified viewpoint using the left specified viewpoint depth map Pd; and outputs the created left specified viewpoint projection residual video $P^{Lv}$ to the residual addition unit 252f.

The specified viewpoint video projection unit 252Ca sets a pixel value of a pixel to become an occlusion hole when the left residual video L'v is projected to the left specified viewpoint, at a prescribed value. The prescribed value herein is set at "0" for each of all pixel components. With this configuration, even if the residual addition unit 252f to be described later adds a pixel having become an occlusion hole in the left specified viewpoint projection residual video $P^{Lv}$ created by the projection, to a pixel in the left specified viewpoint video $P^C$, an appropriate pixel value is restored. This is because a pixel which otherwise usually becomes an occlusion hole in the residual video has a valid pixel corresponding to the pixel in the reference viewpoint video.

The configuration other than the described above of the specified viewpoint video projection unit 252Ca is similar to that of the specified viewpoint video projection unit 252Ba, detailed description of which is thus omitted herefrom.

The residual addition unit 252f inputs therein the left specified viewpoint video $P^C$ from the reference viewpoint video pixel copying unit 251 Cc, and the left specified viewpoint projection residual video $P^{Lv}$ from the specified viewpoint video projection unit 252Ca. The residual addition unit 252f creates the left specified viewpoint video $P_1$ which is a video at the left specified viewpoint Pt by adding up a pixel in the left specified viewpoint projection residual video $P^{Lv}$ and a pixel corresponding thereto in the left specified viewpoint video $P^C$.

The residual addition unit 252f outputs the created left specified viewpoint video $P_1$ to the hole filling processing unit 252Bc.

The common hole detection unit 252Be inputs therein the hole mask $P_1h$ in the left specified viewpoint video Pc from the hole pixel detection unit 251 Ba, and the hole mask $P_3h$ in the left specified viewpoint projection residual video $P^{Lv}$ from the hole pixel detection unit 252Bd. The common hole detection unit 252Be: creates the hole mask $P_4h$ which is a common hole mask by calculating a logical multiply of the hole mask $P_1h$ and the hole mask $P_3h$ for each pixel; and outputs the created hole mask $P_4h$ to the hole filling processing unit 252Bc.

The hole filling processing unit 252Bc: references the hole mask $P_4h$ in the left specified viewpoint video $P_1$, indicating a pixel to which no valid pixel is copied by the reference viewpoint video pixel copying unit 251 Cc and to which no valid residual is added by the residual addition unit 252f; fills the pixel having become a hole with a valid pixel value of a surrounding pixel; and thereby creates the left specified viewpoint video P. The hole filling processing unit 252Bc outputs the created left specified viewpoint video P to the stereoscopic video display device 4 (see FIG. 1) as one of videos constituting the multi-view video.

The common hole detection unit 252Be according to this variation inputs therein the hole mask $P_1h$ from the hole pixel detection unit 251 Ba, and the hole mask $P_3h$ from the hole pixel detection unit 252Bd. The common hole detection unit 252Be: creates the hole mask $P_4h$ by calculating, for each pixel, a logical multiply of the hole mask $P_1h$ and the hole mask $P_3h$; and outputs the created hole mask $P_4h$ to the hole filling processing unit 252Bc.

Note that, as described above, the hole mask $P_4h$ indicates a pixel having become a hole without having a valid pixel value because no valid pixel is copied by the reference viewpoint video pixel copying unit 251 Cc at the left specified viewpoint video $P_1$ to the pixel, and no valid residual is added by the residual addition unit 252f to the pixel.

Operations of the encoding device 1C according to this variation are similar to those of the encoding device 1 B according to the third embodiment illustrated in FIG. 25 except that: an additional step is performed between the reference viewpoint video encoding processing step S71 and the projected video prediction processing step S75, in which a reference viewpoint video decoding unit (not shown) creates the decoded reference viewpoint video C' by decoding the encoded reference viewpoint video c created in step S71; and that, in the projected video prediction processing step S75, a projected video prediction unit (not shown) including the left projected video prediction unit $15C_L$ illustrated in FIG. 21B and a similarly-configured right projected video prediction unit (not shown) creates the left residual video Lv and the right residual video Rv in the subtraction type. The operations other than the described above performed by the encoding device 1C are similar to those performed by the encoding device 1 B according to the third embodiment, detailed description of which is thus omitted herefrom.

Operations of the decoding device 2C according to this variation are similar to those of the decoding device 2B according to the third embodiment illustrated in FIG. 26 except that, in the projection video synthesis processing step S96, a projected video synthesis unit (not shown) including the left projected video synthesis unit $25C_L$ illustrated in FIG. 24B and a similarly-configured right projected video synthesis unit (not shown) creates the left specified viewpoint video P and the right specified viewpoint video Q, using the left residual video Lv and the right residual video Rv in the subtraction type, respectively. Operations other than the described above performed by the decoding device 2C are similar to those performed by the decoding device 2B according to the third embodiment, detailed description of which is thus omitted herefrom.

If a residual video is created in the subtraction type as in this variation, though a data volume of the residual video increases compared to the creation in the logical operation type, a higher quality multi-view video can be created. This is because even a difference in color or the like which is too delicate to be approximated just by a projection of a reference viewpoint video can be compensated by a residual signal on a decoding device side.

Further, a configuration of the projected video prediction unit according to this variation which creates a residual video in the subtraction type can be applied to the projected video prediction unit 15 according to the first embodiment and the projected video prediction unit 15A according to the second embodiment. Similarly, a configuration of the projected video synthesis unit according to this variation which creates a specified viewpoint video in the subtraction type using a residual video can be applied to the projected video synthesis unit 25 according to the first embodiment and the projected video synthesis unit 25A according to the second embodiment.

<Fourth Embodiment>

Next is described a configuration of a stereoscopic video transmission system including a stereoscopic video encoding device and a stereoscopic video decoding device according to a fourth embodiment of the present invention.

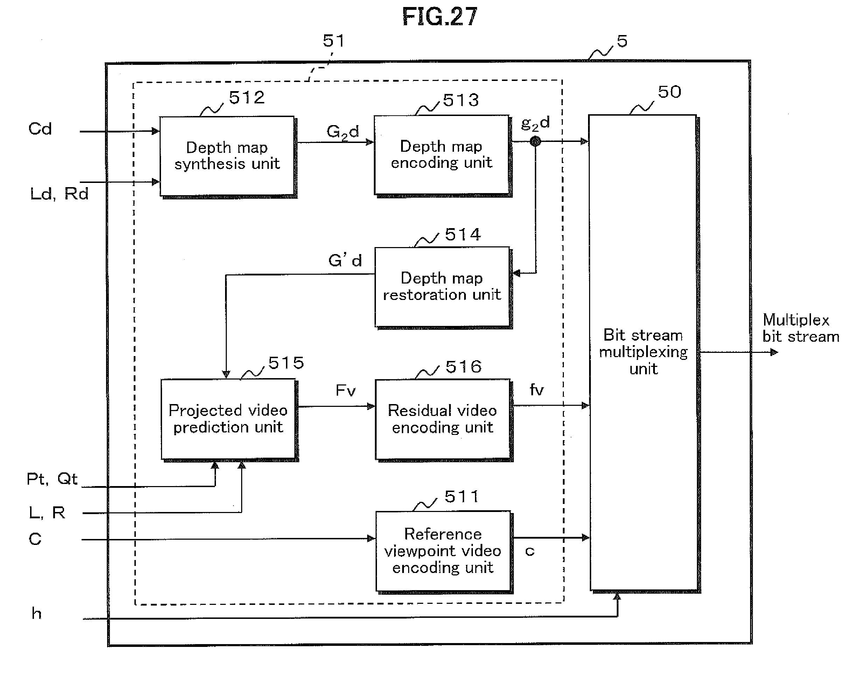

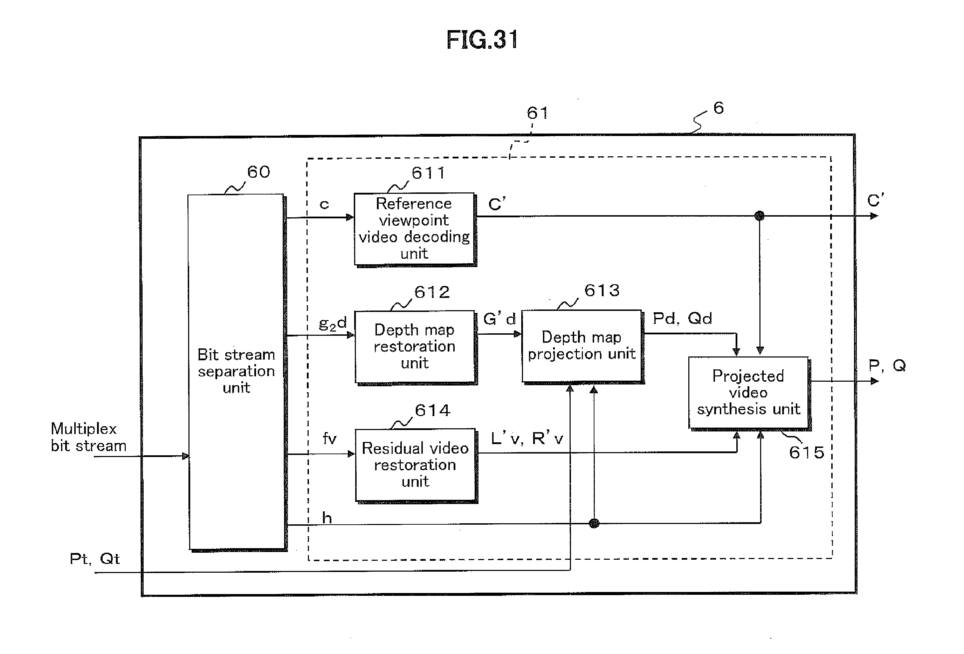

The stereoscopic video transmission system including the stereoscopic video encoding device and the stereoscopic video decoding device according to the fourth embodiment is similar to the stereoscopic video transmission system S illustrated in FIG. 1 except that the stereoscopic video transmission system according to the fourth embodiment includes, in place of the stereoscopic video encoding device 1 and the stereoscopic video decoding device 2, a stereoscopic video encoding device 5 (see FIG. 27) and a stereoscopic video decoding device 6 (see FIG. 31), respectively. A bit stream transmitted from the stereoscopic video encoding device 5 to the stereoscopic video decoding device 6 is a multiplex bit stream in which a reference viewpoint video bit stream, a depth map bit stream, a residual video bit stream, and auxiliary information required for synthesizing specified viewpoint videos are multiplexed.

Note that the stereoscopic video transmission system according to the fourth embodiment is similar to the stereoscopic video transmission system according to each of the above-described embodiments except that a bit stream is multiplexed in the fourth embodiment, detailed description of the other similar configuration of which is thus omitted herefrom.

[Configuration of stereoscopic video encoding device]

Next is described a configuration of the stereoscopic video encoding device 5 according to the fourth embodiment with reference to FIG. 27.

As illustrated in FIG. 27, the stereoscopic video encoding device 5 (which may also be simply referred to as an "encoding device 5" hereinafter where appropriate) according to the fourth embodiment includes a bit stream multiplexing unit 50 and an encoding processing unit 51.

The encoding processing unit 51 corresponds to the above-described encoding devices 1, 1A, 1B, 1C (which may also be referred to as "encoding device 1 and the like" hereinafter where appropriate) according to the first embodiment, the second embodiment, the third embodiment, and the variation thereof. The encoding processing unit 51: inputs therein a plurality of viewpoint videos C, L, and R, and the depth maps Cd, Ld, and Rd corresponding thereto, from outside (for example, the stereoscopic video creating device 3 illustrated in FIG. 1); and outputs a reference viewpoint video bit stream, a depth map bit stream, and a residual video bit stream to the bit stream multiplexing unit 50.

The bit stream multiplexing unit 50: creates a multiplex bit stream by multiplexing the bit streams outputted from the encoding processing unit 51 and auxiliary information h inputted from outside; and outputs the created multiplex bit stream to the decoding device 6 (see FIG. 31).

The encoding processing unit 51 corresponds to the encoding device 1 and the like as described above, and includes a reference viewpoint video encoding unit 511, a depth map synthesis unit 512, a depth map encoding unit 513, a depth map restoration unit 514, a projected video prediction unit 515, and a residual video encoding unit 516.

Next are described components of the encoding processing unit 51 with reference to FIG. 27 (see as well as FIG. 2, FIG. 12, and FIG. 19 where necessary). Note that each of the components of the encoding processing unit 51 can be configured by one or more corresponding components of the encoding device 1 and the like. Hence, a correspondence relation between the both components is shown herein, detailed description of which is thus omitted herefrom where appropriate.

The reference viewpoint video encoding unit 511: inputs therein the reference viewpoint video C from outside; creates the encoded reference viewpoint video c by encoding the reference viewpoint video C using a prescribed encoding method; and outputs the created encoded reference viewpoint video c to the bit stream multiplexing unit 50.

The reference viewpoint video encoding unit 511 corresponds to the reference viewpoint video encoding unit 11 of each of the encoding device 1 and the like.

The depth map synthesis unit 512: inputs therein the reference viewpoint depth map Cd, the left viewpoint depth map Ld, and the right viewpoint depth map Rd from outside; creates the synthesized depth map $G_2d$ by synthesizing the depth maps; and outputs the created synthesized depth map $G_2d$ to the depth map encoding unit 513. The number of the depth maps inputted from outside is not limited to three, and may be two or four or more. The synthesized depth map $G_2d$ may be a depth map subjected to be reduced, or a depth map subjected to framing of two or more synthesized depth maps and further to be reduced.

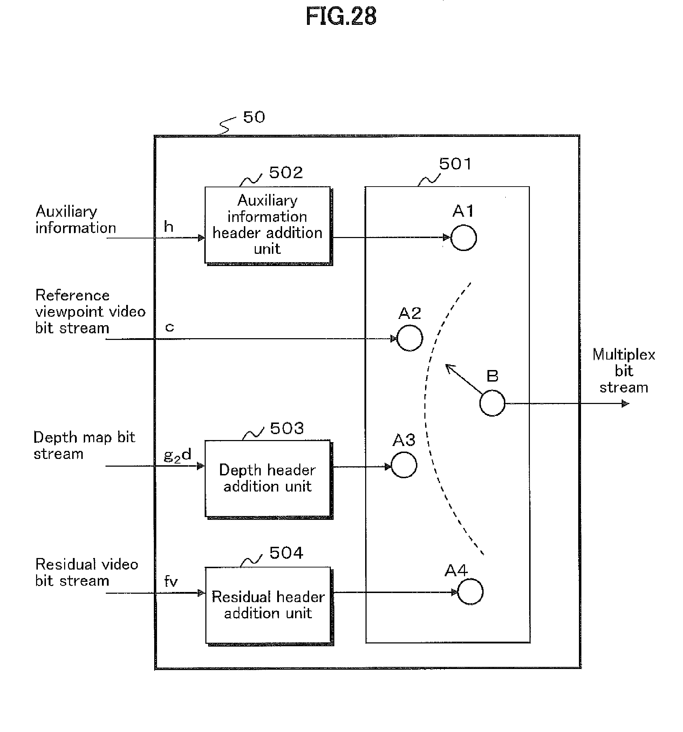

In FIG. 27, for convenience of explanation, data inputted and outputted to and from the components have, as an example, reference characters ($G_2d$, $g_2d$, $G_2'd$, Fv, fv, and c) assuming that the encoding processing unit 51 is configured similarly to the encoding device 1 B according to the third embodiment illustrated in FIG. 19. If the encoding device 1 and the like according to the other embodiments are used, the reference characters are to be replaced where necessary. The same is applied to FIG. 28 to be described later.

The depth map synthesis unit 512 corresponds to: the depth map synthesis unit 12 of the of the encoding device 1; the depth map synthesis unit 12A and the depth map framing unit 17 of the encoding device 1A; and the depth map synthesis unit 12B of each of the encoding devices 1 B and 1C.

The depth map encoding unit 513: inputs therein the synthesized depth map $G_2d$ from the depth map synthesis unit 512; creates the encoded depth map $g_2d$ by encoding the inputted synthesized depth map $G_2d$ using a prescribed encoding method; and outputs the created encoded depth map $g_2d$ to the depth map restoration unit 514 and the bit stream multiplexing unit 50.

The depth map encoding unit 513 corresponds to: the depth map encoding unit 13 of the encoding device 1; the depth map encoding unit 13A of the encoding device 1A; and the depth map encoding unit 13B of each of the encoding devices 1B and 1C.

The depth map restoration unit 514: inputs therein the encoded depth map $g_2d$ from the depth map encoding unit 513; and creates the decoded synthesized depth map G'd by decoding the encoded depth map $g_2d$. The depth map restoration unit 514 outputs the created decoded synthesized depth map G'd to the projected video prediction unit 515.

An encoded depth map which is inputted into the depth map restoration unit 514 is not limited to a single synthesized depth map, and may be a depth map created by framing and further reducing a plurality of depth maps. If the encoded depth map having been framed is inputted, the depth map restoration unit 514 decodes and then separates the encoded depth map into individual synthesized depth maps, and outputs the individual synthesized depth maps. If the encoded depth map having been reduced is inputted, the depth map restoration unit 514 decodes or separates the encoded depth map, magnifies the decoded or separated depth map to an original size thereof, and outputs the magnified depth map.

The depth map restoration unit 514 corresponds to: the depth map decoding unit 14 of the encoding device 1;

the depth map decoding unit 14A and the depth map separation unit 18 of the encoding device 1A; and the depth map restoration unit 30 of each of the encoding devices 1B and 1C.

The projected video prediction unit 515: inputs therein the decoded synthesized depth map G'd from the depth map restoration unit 514, the left viewpoint video L, the right viewpoint video R, as well as information on the specified viewpoints Pt and Qt where necessary, from outside; and thereby creates the residual video Fv. The projected video prediction unit 515 outputs the created residual video Fv to the residual video encoding unit 516.

The created residual video herein may be a single residual video, a framed residual video created by framing residual videos between the reference viewpoint and a plurality of other viewpoints, or a framed and reduced residual video created by further reducing the framed residual video. In any of those cases, the created residual video is outputted as a single viewpoint video to the residual video encoding unit 516.

The projected video prediction unit 515 corresponds to: the projected video prediction unit 15 of the encoding device 1; the projected video prediction unit 15A and the residual video framing unit 19 of the encoding device 1A; the projected video prediction unit 15B and the residual video framing unit 19B of the encoding device 1B; and the projected video prediction unit 15C (not shown) of the encoding device 1C.

If the encoding device 1C according to the variation of the third embodiment is used as the encoding processing unit 51, the encoding processing unit 51 is configured to further include a reference viewpoint video decoding unit (not shown). The reference viewpoint video decoding unit (not shown): creates the decoded reference viewpoint video C' by decoding the encoded reference viewpoint video c outputted from the reference viewpoint video encoding unit 511; and outputs the created decoded reference viewpoint video C' to the projected video prediction unit 515.

The reference viewpoint video decoding unit (not shown) used herein may be similar to the reference viewpoint video decoding unit 21 illustrated in FIG. 7.

Another configuration is also possible in which the projected video prediction unit 515 inputs therein and uses the reference viewpoint video C without the reference viewpoint video decoding unit.

The residual video encoding unit 516: inputs therein the residual video Fv from the projected video prediction unit 515; and creates the encoded residual video fv by encoding the inputted residual video Fv using a prescribed encoding method. The residual video encoding unit 516 outputs the created encoded residual video fv to the bit stream multiplexing unit 50.

The residual video encoding unit 516 corresponds to: the residual video encoding unit 16 of the encoding device 1; the residual video encoding unit 16A of the encoding device 1A; and the residual video encoding unit 16B of each of the encoding devices 1 B and 1C.

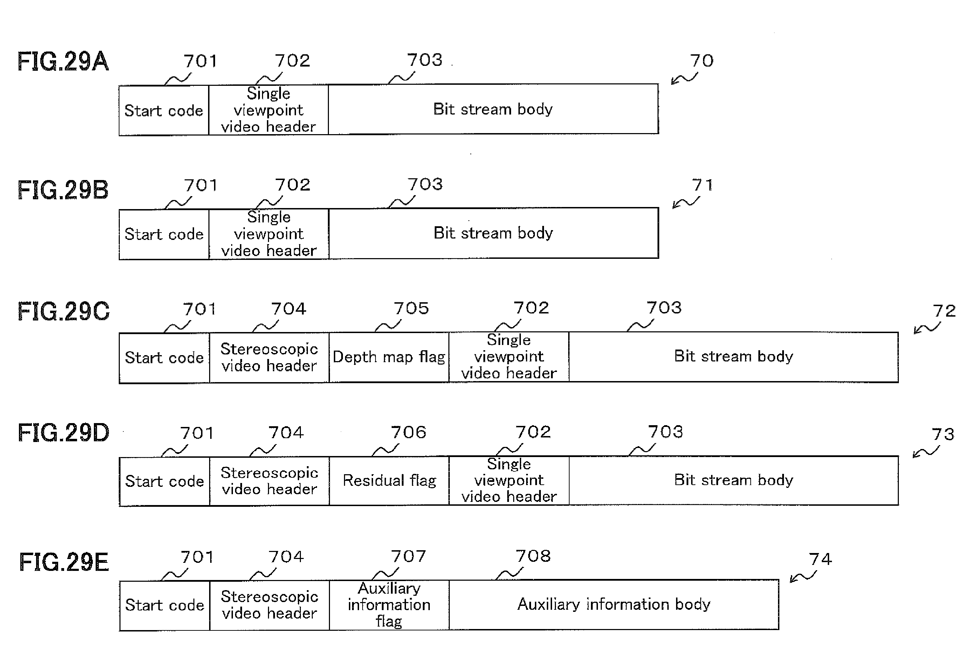

Next is described a configuration of the bit stream multiplexing unit 50 with reference to FIG. 28 and FIG. 29 (as well as FIG. 27 where necessary).

As illustrated in FIG. 28, the bit stream multiplexing unit 50 includes a switch (switching unit) 501, an auxiliary information header addition unit 502, a depth header addition unit 503, and a residual header addition unit 504.

In FIG. 28, for convenience of explanation, the bit streams are described assuming that the encoding device 1 B is used as the encoding processing unit 51. The configuration is not, however, limited to this. If the encoding device 1 and the like according to the other embodiments are used, signal names such as residual video Fv are replaced appropriately.

The bit stream multiplexing unit 50: inputs therein the reference viewpoint video bit stream, the depth map bit stream, and the residual video bit stream from the encoding processing unit 51; also inputs therein auxiliary information h showing an attribute of a video contained in each of the bit streams, from outside (for example, the stereoscopic video creating device 3 illustrated in FIG. 1); adds respective identification information to the bit streams and the auxiliary information h for identifying each of the bit streams and the auxiliary information; and thereby creates a multiplex bit stream.

The switch (switching unit) 501: switches connection between four input terminals A1 to A4 and one output terminal B; selects one of signals inputted into the input terminals A1 to A4; outputs the selected signal from the output terminal B; and thereby multiplexes and outputs the bit streams inputted into the four input terminals A1 to A4 as a multiplex bit stream.

Herein, a bit stream generated from the auxiliary information to which a prescribed header is added by the auxiliary information header addition unit 502 is inputted to the input terminal A1. The encoded reference viewpoint video c as a reference viewpoint video bit stream is inputted from the reference viewpoint video encoding unit 511 of the encoding processing unit 51 to the input terminal A2. A depth map bit stream to which a prescribed header is added by the depth header addition unit 503 is inputted to the input terminal A3. A residual video bit stream to which a prescribed header is added by the residual header addition unit 504 is inputted to the input terminal A4.

Below is described a data structure of a bit stream.

In the encoding device 5 according to this embodiment, a bit stream created by each of the reference viewpoint video encoding unit 511, the depth map encoding unit 513, and the residual video encoding unit 516 has a header indicative of being encoded as a single viewpoint video.

When the reference viewpoint video encoding unit 511, the depth map encoding unit 513, and the residual video encoding unit 516 encode data as a single viewpoint video using, for example, MPEG-4 AVC encoding method, respective bit streams 70 outputted from those decoding units each have, as illustrated in FIG. 29A, the same header in accordance with a "single viewpoint video" bit stream structure defined in a specification of the encoding method.

More specifically, the bit stream 70 has: at a head thereof, a unique start code 701 (for example, a 3-byte length data "001"); subsequently, a single viewpoint video header (first identification information) 702 (for example, a 1-byte data with "00001" at five lower bits) indicating a bit stream of a single viewpoint video; and then, a bit stream body 703 as the single viewpoint video. When a bit stream ends can be recognized by, for example, detecting an end code having consecutive "0"s of not smaller than 3 bytes.

Note that the bit stream body 703 is encoded such that no bit string identical to the start code and the end code is contained.

In the above-described example, a 3-byte length "000" as the end code may be added to the end of the bit stream as a footer, or a 1-byte "0" may be added instead. The addition of the 1-byte "0" combined with initial 2 bytes of "00" as a start code of a subsequent bit stream makes 3 bytes of "000", by which an end of the bit stream can be recognized.

Alternatively, a start code of a bit stream may be defined as 4 byte with the higher 3 bytes of "000" and the lower 1 byte of "1", without adding "0" to the end thereof. The initial 3 bytes of "000" as the start code of the bit stream makes it possible to recognize an end of a previous bit stream.

Each of bit streams of 3 systems inputted from the encoding processing unit 51 to the bit stream multiplexing unit 50 has the structure of the bit stream 70 illustrated in FIG. 29A. The bit stream multiplexing unit 50 then adds, to an existent header given by the encoding unit, as identification information, a header and a flag for identifying which of the bit streams of 3 systems inputted from the encoding processing unit 51 is based on a reference viewpoint video, a depth map, or a residual video. In addition to those bit streams, the bit stream multiplexing unit 50 also adds a header and a flag for identifying auxiliary information on a stereoscopic video, with respect to the auxiliary information which is required for synthesizing a multi-view video by the decoding device 6 (see FIG. 31) according to this embodiment.

More specifically, the bit stream multiplexing unit 50 outputs a bit stream outputted from the reference viewpoint video encoding unit 511 as it is as a reference viewpoint video bit stream via the switch 501, without any change in a structure of the bit stream 71 as illustrated in FIG. 29B. With this configuration, if the bit stream is received by an existent decoding device for decoding a single viewpoint video, the bit stream can be decoded as a single viewpoint video in a same manner as previously, which can maintain compatibility as a decoding device of videos.

The depth header addition unit 503: inputs therein the encoded depth map $g_2d$ as a depth bit stream from the depth map encoding unit 513 of the encoding processing unit 51; creates a bit stream having a structure of a bit stream 72 illustrated in FIG. 29C by inserting prescribed identification information to an existing header; and outputs the created bit stream to the switch 501.

More specifically, the depth header addition unit 503: detects the start code 701 of a single viewpoint video bit stream contained in the depth map bit stream inputted from the depth map encoding unit 513; and inserts, immediately after the detected start code 701, a 1 byte of a "stereoscopic video header (second identification information) 704" indicating that the depth map bit stream is a data on a stereoscopic video. A value of the stereoscopic video header 704 is specified to have, for example, lower 5 bits values of, for example, "11000" which is a header value not having been specified in the MPEG-4 AVC. This shows that a bit stream in and after the stereoscopic video header 704 is a bit stream on a stereoscopic video of the present invention. Further, when an existent decoding device for decoding a single viewpoint video receives a bit stream having the stereoscopic video header 704, the above-described allocation of a unique value to the stereoscopic video header 704 makes it possible to ignore a bit stream after the stereoscopic video header 704 as unknown data. This can prevent a false operation of the existent decoding device.

The depth header addition unit 503: further inserts a 1 byte of a depth flag (third identification information) 705 after the stereoscopic video header 704, so as to indicate that the bit stream in and after the stereoscopic video header 704 is a depth map bit stream; and multiplies and outputs the bit stream with other bit streams via the switch 501. As the depth flag 705, for example, a value of an 8-bit "100000000" can be assigned.

This makes it possible for the decoding device 6 (see FIG. 31) of the present invention to identify that the bit stream is a depth map bit stream.

The residual header addition unit 504: inputs therein the encoded residual video fv as a residual video bit stream from the residual video encoding unit 516 of the encoding processing unit 51; creates a bit stream having a structure of the bit stream 73 illustrated in FIG. 29D by inserting prescribed identification information into an existent header; and outputs the created bit stream to the switch 501.

More specifically, the residual header addition unit 504, similarly to the depth header addition unit 503: detects the start code 701 of a single viewpoint video bit stream contained in the residual video bit stream inputted from the residual video encoding unit 516; and inserts, immediately after the detected start code 701, a 1-byte of the stereoscopic video header 704 (for example, a value of the lower 5 bits is "11000") indicating that the residual video bit stream is data on a stereoscopic video and also a 1-byte residual flag (fourth identification information) 706 indicating that the bit stream is data on a residual video; and multiplies and outputs the bit stream with other bit streams via the switch 501.

As the residual flag 706, a value different from the depth flag 705, for example, a value of an 8-bit "10100000" can be assigned.

Similarly to the above-described depth map bit stream, insertion of the stereoscopic video header 704 can prevent a false operation of the existent decoding device that decodes a single viewpoint video. Further, insertion of the residual flag 706 makes it possible for the decoding device 6 (see FIG. 31) of the present invention to identify that the bit stream is a residual video map bit stream.

The auxiliary information header addition unit 502: inputs therein auxiliary information h which is information required for synthesizing a multi-view video by the decoding device 6, from outside (for example, the stereoscopic video creating device 3 illustrated in FIG. 1); adds a prescribed header; thereby creates a bit stream having a structure of the bit stream 74 illustrated in FIG. 29E; and outputs the created bit stream to the switch 501.

The auxiliary information header addition unit 502: adds the above-described start code 701 (for example, a 3-byte data "001") to a head of the auxiliary information h inputted from outside; and also adds, immediately after the added start code 701, a stereoscopic video header 704 (for example, a lower 5-bit value is "11000") indicating that a bit string thereafter is a data on a stereoscopic video. The auxiliary information header addition unit 502 also adds, after the stereoscopic video header 704, a 1-byte of an auxiliary information flag (fifth identification information) 707 indicating that a data thereafter is the auxiliary information.

As the auxiliary information flag 707, a value different from the depth flag 705 or the residual flag 706 can be assigned such as, for example, a value of an 8-bit "11000000".

As described above, the auxiliary information header addition unit 502: adds the start code 701, the stereoscopic video header 704, and the auxiliary information flag 707 to the auxiliary information body for a bit stream of interest; multiplexes the bit stream with other bit streams, and outputs the multiplexed bit stream via the switch 501.

Similarly to the above-described depth map bit stream and residual video bit stream, insertion of the stereoscopic video header 704 can prevent a false operation of an existent decoding device that decodes a single viewpoint video. Further, insertion of the auxiliary information flag 707 makes it possible for the decoding device 6 (see FIG. 31) of the present invention to identify that the bit stream is an auxiliary information bit stream required for synthesizing a multi-view video.

The switch 501: switches among the auxiliary information bit stream, the reference viewpoint video bit stream, the depth map bit stream, and the residual video bit stream so as to be selected in this order; and thereby outputs those bit streams as a multiplex bit stream.

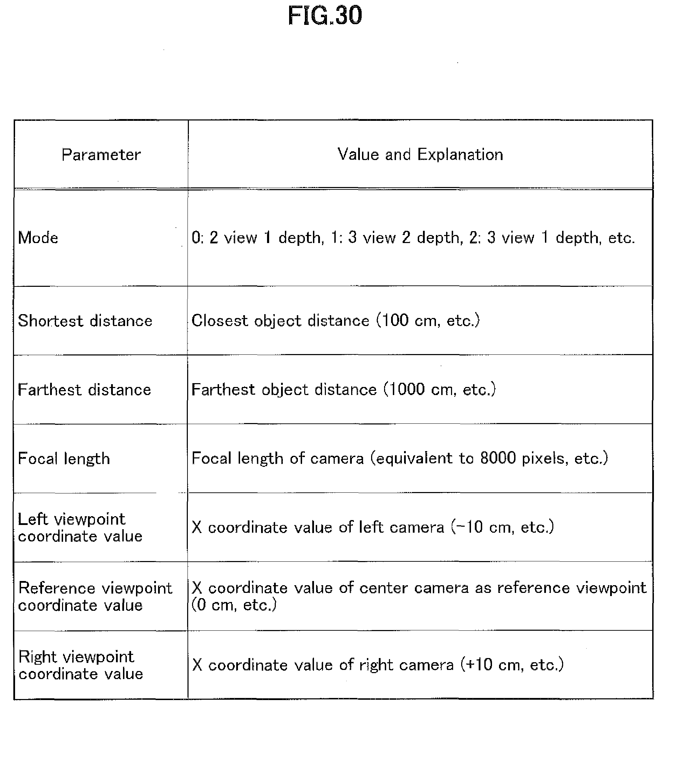

Next is described a specific example of a constituting the auxiliary information with reference to FIG. 30.

The auxiliary information is information showing an attribute of the multi-view video encoded and outputted by the encoding device 5. The auxiliary information contains information on, for example, a mode, a shortest distance, a farthest distance, a focal length, and respective positions of a reference viewpoint and an auxiliary viewpoint, and is outputted from the encoding device 5 to the decoding device 6 in association with the multi-view video.

The decoding device 6 references the auxiliary information where necessary, when the decoding device 6: projects the depth map, the reference viewpoint video, and the residual video obtained by decoding the bit stream inputted from the encoding device 5, to a specified viewpoint; and synthesizes a projected video at the specified viewpoint.

The above-described decoding device 2 and the like according to the other embodiments also reference the auxiliary information where necessary in projecting a depth map, a video, or the like to other viewpoint.

For example, the auxiliary information contains information indicating a position of a viewpoint as illustrated in FIG. 5 and is used when a shift amount in projecting a depth map or a video is calculated.

The auxiliary information required when the decoding device 6 (see FIG. 31) of the present invention synthesizes a multi-view video includes, as the auxiliary information body 708 illustrated in FIG. 29E, for example, a name and a value of a parameter arranged with a space therebetween as illustrated in FIG. 30. Or, an order of parameters is made fixed, and only the values thereof may be arranged with a space therebetween. Alternatively, data lengths and a sorting order of the parameters may be pre-set according to which the parameters are arranged such that types of the parameters can be identified according to the number of bytes counting from a head of the parameter.

Next are described the parameters illustrated in FIG. 30.

The "mode" used herein represents in which mode a stereoscopic video is created, for example, whether an encoded residual video and a synthesized depth map is created in the mode of: "2 view 1 depth" created by the encoding device 1 according to the first embodiment; or "3 view 2 depth" created by the encoding device 1A according to the second embodiment; or "3 view 1 depth" created by the encoding device 1 B according to the third embodiment. In order to distinguish one mode from another, for example, values of "0", "1", "2", and the like are assigned according to the respective embodiments.

Note that the "view" used herein is a total number of viewpoints of a video contained in a reference viewpoint video bit stream and a residual video bit stream. The "depth" used herein is the number of viewpoints of a synthesized depth map contained in a depth map bit stream.

The "shortest distance" is a distance between a camera and an object closest to the camera of all objects caught by the camera as a multi-view video inputted from outside. The "farthest distance" is a distance between a camera and an object farthest from the camera of all the objects caught as the multi-view video inputted from outside. Both the distances are used for converting a value of a depth map into an amount of parallax when the decoding device 6 (see FIG. 31) synthesizes specified viewpoint videos, so as to determine an amount by which a pixel is shifted.

The "focal length" is a focal length of a camera which captures the inputted multi-view video and is used for determining a position of the specified viewpoint video synthesized by the decoding device 6 (see FIG. 31). Note that the focal length can be determined in terms of, but not limited to, an imaging element of the camera used for capturing the multi-view video or a pixel size of a stereoscopic video display device used.

The "left viewpoint coordinate value", the "reference viewpoint coordinate value", and the "right viewpoint coordinate value" represent x coordinates of a camera capturing a left viewpoint video, a centrally-positioned reference viewpoint video, and a right viewpoint video, respectively, and are used for determining a position of the specified viewpoint video synthesized by the decoding device 6 (see FIG. 31).

The auxiliary information may include, not limited to the above-described parameters, other parameters. For example, if a center position of an imaging element in the camera is displaced from an optical axis of the camera, the auxiliary information may include a value indicating an amount of the displacement. The value can be used for correcting a position of the synthesized video.

If a parameter which changes with progress of frames of a bit stream is present, the auxiliary information may include changing and unchanging parameters, which may be inserted into a multiplex bit stream as two different pieces of the auxiliary information. For example, the auxiliary information containing a parameter which does not change all the way through the bit stream of a stereoscopic video, such as the mode and the focal length, is inserted at a head of the bit streams only once. On the other hand, the auxiliary information containing a parameter which possibly changes with progress of frames, such as the shortest distance, the farthest distance, the left viewpoint coordinate, and the right viewpoint coordinate may be inserted in an appropriate frame of the bit stream, as another auxiliary information.

In this case, the start code 701 (see FIG. 29) in the bit stream is assumed to be given to each of the frames. In order to distinguish types of the auxiliary information, a plurality of types of an auxiliary information flag 707 are defined such as, for example, 8 bit values of "11000000" and "11000001", and the auxiliary information containing the parameter which changes at some point is inserted in an appropriate frame in a manner similar to the described above. With this configuration, inappropriate duplication of the auxiliary information can be prevented, which can improve efficiency in encoding.

When the auxiliary information which changes with progress of frames is inserted in an appropriate frame in a bit stream, the auxiliary information is preferably but not necessarily outputted as a multiplex bit stream of a reference viewpoint video bit stream, a depth map bit stream, a residual video bit stream, and auxiliary information belonging to each of the frames. This can reduce a delay time when the decoding device 6 (see FIG. 31) creates a multi-view video using the auxiliary information.

[Configuration of stereoscopic video decoding device]

Next is described the stereoscopic video decoding device 6 according to the fourth embodiment with reference to FIG. 31. The stereoscopic video decoding device 6 creates a multi-view video by decoding a bit stream transmitted from the stereoscopic video encoding device 5 illustrated in FIG. 27 via the transmission path.

As illustrated in FIG. 31, the stereoscopic video decoding device 6 (which may also be simply referred to as the "decoding device 6" hereinafter where appropriate) according to the fourth embodiment includes a bit stream separation unit 60 and a decoding processing unit 61.

The bit stream separation unit 60: inputs therein a multiplex bit stream from the encoding device 5 (see FIG. 27); and separates the inputted multiplex bit stream into a reference viewpoint video bit stream, a depth map bit stream, a residual video bit stream, and an auxiliary information. The bit stream separation unit 60 outputs the separated reference viewpoint video bit stream to the reference viewpoint video decoding unit 611, the separated depth map bit stream to the depth map restoration unit 612, the separated residual video bit stream to a residual video restoration unit 614, and the separated auxiliary information to a depth map projection unit 613 and a projected video synthesis unit 615.

The decoding processing unit 61 also: inputs therein the reference viewpoint video bit stream, the depth map bit stream, and the residual video bit stream from the bit stream separation unit 60, as well as the specified viewpoints Pt and Qt with regard to multi viewpoints to be synthesized, from outside (for example, the stereoscopic video display device 4 illustrated in FIG. 1); decodes the reference viewpoint video C'; and creates a multi-view video (C', P, Q) by synthesizing the left specified viewpoint video P and the right specified viewpoint video Q.

The decoding processing unit 61 also outputs the created multi-view video to, for example, the stereoscopic video display device 4 illustrated in FIG. 1. The stereoscopic video display device 4 displays the multi-view video in a visible manner.

In the decoding device 6 according to this embodiment, description is made assuming that the reference viewpoint video bit stream, the depth map bit stream, and the residual video bit stream to be inputted: are encoded using the MPEG-4 AVC encoding method in accordance with the above-described encoding device 5; and each have the bit stream structure illustrated in FIG. 29.

First is described the decoding processing unit 61.

The decoding processing unit 61 corresponds to the above-described decoding devices 2, 2A, 2B, and 2C (which may also be simply referred to as the "decoding device 2 and others" hereinafter where appropriate) according to the first embodiment, the second embodiment, the third embodiment, and the variation thereof, respectively; and includes the reference viewpoint video decoding unit 611, the depth map restoration unit 612, the depth map projection unit 613, the residual video restoration unit 614, and the projected video synthesis unit 615.

Next are described components of the decoding processing unit 61 with reference to FIG. 31 (as well as FIG. 7, FIG. 14, and FIG. 22 where necessary). Note that each of the components of the decoding processing unit 61 can be configured by one or more corresponding components of the decoding device 2 and others. Hence, a correspondence relation between the both components is shown herein, detailed description of which is thus omitted herefrom where appropriate.

The reference viewpoint video decoding unit 611: inputs therein the encoded reference viewpoint video c as a reference viewpoint video bit stream from the bit stream separation unit 60; creates the decoded reference viewpoint video C' by decoding the inputted encoded reference viewpoint video c in accordance with the encoding method used; and outputs the created decoded reference viewpoint video C' as a reference viewpoint video of a multi-view video to outside (for example, the stereoscopic video display device 4 illustrated in FIG. 1).

The reference viewpoint video decoding unit 611 corresponds to the reference viewpoint video decoding unit 21 of the decoding device 2 and others.

The depth map restoration unit 612: inputs therein the encoded depth map $g_2d$ from the bit stream separation unit 60 as a depth map bit stream; creates the decoded synthesized depth map G'd by decoding the inputted encoded depth map $g_2d$ in accordance with an encoding method used; and outputs the created decoded synthesized depth map G'd to the depth map projection unit 613.

Note that, if an inputted encoded synthesized depth map has been framed, the depth map restoration unit 612 decodes the encoded synthesized depth map, and separates the framed decoded depth map. On the other hand, if the inputted encoded synthesized depth map has been reduced, the depth map restoration unit 612 decodes or separates the encoded synthesized depth map, magnifies the decoded or separated synthesized depth map to an original size thereof, and outputs the magnified synthesized depth map to the depth map projection unit 613.

The depth map restoration unit 612 corresponds to the depth map decoding unit 22 of the decoding device 2, the depth map decoding unit 22A and the depth map separation unit 26 of the decoding device 2A, and the depth map restoration unit 28 of each of the decoding devices 2B, 2C.

The depth map projection unit 613: inputs therein the decoded synthesized depth map G'd from the depth map restoration unit 612, the auxiliary information h from the bit stream separation unit 60, and the left specified viewpoint Pt and the right specified viewpoint Qt from outside (for example, the stereoscopic video display device 4 illustrated in FIG. 1); thereby creates the left specified viewpoint depth map Pd and the right specified viewpoint depth map Qd which are depth maps at the left specified viewpoint Pt and the right specified viewpoint Qt, respectively; and outputs the created left specified viewpoint depth map Pd and the created right specified viewpoint depth map Qd to the projected video synthesis unit 615.

Note that the number of the specified viewpoints that the depth map projection unit 613 inputs therein from outside is not limited to two and may be one or three or more. The number of the encoded synthesized depth maps that the depth map projection unit 613 inputs therein from the depth map restoration unit 612 is not limited to one and may be two or more. The depth map projection unit 613 is configured to create a specified viewpoint depth map corresponding to each of inputted specified viewpoints and output the created specified viewpoint depth map to the projected video synthesis unit 615.

The depth map projection unit 613 corresponds to the depth map projection unit 23 of the decoding device 2, the depth map projection unit 23A of the decoding device 2A, and the depth map projection unit 23B of each of the decoding devices 2B, 2C.

The residual video restoration unit 614: inputs therein the encoded residual video fv as a residual video bit stream from the bit stream separation unit 60; creates the left residual video L'v and the right residual video R'v by decoding the inputted encoded residual video fv in accordance with an encoding method used; and outputs the created left residual video L'v and the created right residual video R'v to the projected video synthesis unit 615.

Note that, if an inputted encoded residual video has been framed, the residual video restoration unit 614 decodes the framed residual video, and separates the decoded residual video. If the inputted encoded residual video has been reduced, the residual video restoration unit 614 decodes or separates the encoded residual video, magnifies the decoded or separated residual video to an original size thereof, and outputs the magnified residual video to the projected video synthesis unit 615.

The residual video restoration unit 614 corresponds to the residual video decoding unit 24 of the decoding device 2, the residual video decoding unit 24A and the residual video separation unit 27 of the decoding device 2A, and the residual video decoding unit 24B and the residual video separation unit 27B of each of the decoding devices 2B, 2C.

The projected video synthesis unit 615: inputs therein the decoded reference viewpoint video C' from the reference viewpoint video decoding unit 611, the left and right specified viewpoint depth maps Pd, Qd from the depth map projection unit 613, the left residual video L'v and the right residual video R'v from the residual video restoration unit 614, and the auxiliary information h from the bit stream separation unit; and thereby creates the specified viewpoint videos P, Q at the left and right specified viewpoints Pt and Qt, respectively. The projected video synthesis unit 615 outputs the created specified viewpoint videos P, Q as specified viewpoint videos of a multi-view video to outside (for example, the stereoscopic video display device 4 illustrated in FIG. 1).

The projected video synthesis unit 615 corresponds to the projected video synthesis unit 25 of the decoding device 2, the projected video synthesis unit 25A of the decoding device 2A, and the projected video synthesis unit 25B of each of the decoding devices 2B, 2C.

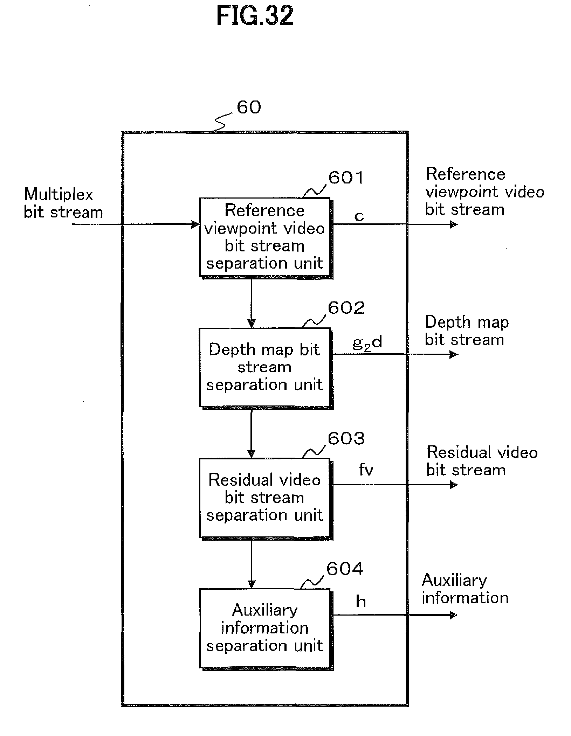

Next is described the bit stream separation unit 60 with reference to FIG. 32 (as well as FIG. 29 and FIG. 31 where necessary).

The bit stream separation unit 60: separates the multiplex bit stream inputted from the encoding device 5 (see FIG. 27) into a specified viewpoint video bit stream, a depth map bit stream, a residual video bit stream, and auxiliary information; and outputs the separated bit streams and information to the respective appropriate components of the decoding processing unit 61. The bit stream separation unit 60 includes, as illustrated in FIG. 32, a reference viewpoint video bit stream separation unit 601, a depth map bit stream separation unit 602, a residual video bit stream separation unit 603, and an auxiliary information separation unit 604.

The reference viewpoint video bit stream separation unit 601: inputs therein the multiplex bit stream from the encoding device 5 (see FIG. 27); separates the reference viewpoint video bit stream from the multiplex bit stream; and outputs the encoded reference viewpoint video c separated as the reference viewpoint video bit stream to the reference viewpoint video decoding unit 611.

If the inputted multiplex bit stream is a bit stream other than the reference viewpoint video bit stream, the reference viewpoint video bit stream separation unit 601 transfers the multiplex bit stream to the depth map bit stream separation unit 602.

More specifically, the reference viewpoint video bit stream separation unit 601 checks a value in the inputted multiplex bit stream from a beginning thereof, to thereby searches for a 3-byte value "001" which is the start code 701 specified by the MPEG-4 AVC encoding method. Upon detection of the start code 701, the reference viewpoint video bit stream separation unit 601 checks a value of a 1-byte header located immediately after the start code 701 and determines whether or not the 1-byte header value is a value indicating the stereoscopic video header 704 (for example, whether or not lower 5 bits thereof are "11000").

If the header is not the stereoscopic video header 704, the reference viewpoint video bit stream separation unit 601: determines a bit string from the start code 701 until the 3-byte "000" end code is detected, as a reference viewpoint video bit stream; and outputs the reference viewpoint video bit stream to the reference viewpoint video decoding unit 611.

On the other hand, if the header immediately after the start code 701 is the stereoscopic video header 704, the reference viewpoint video bit stream separation unit 601 transfers the bit stream starting from and including the start code 701 until the end code (for example, a 3-byte "000") is detected, to the depth map bit stream separation unit 602.

The depth map bit stream separation unit 602: receives the multiplex bit stream from the reference viewpoint video bit stream separation unit 601; separates the depth map bit stream from the inputted multiplex bit stream; and outputs the encoded depth map $g_2d$ separated as the depth map bit stream to the depth map restoration unit 612.

If the inputted multiplex bit stream is a bit stream other than the depth map bit stream, the depth map bit stream separation unit 602 transfers the multiplex bit stream to the residual video bit stream separation unit 603.

More specifically, the depth map bit stream separation unit 602, similarly to the above-described reference viewpoint video bit stream separation unit 601: detects the start code 701 in the multiplex bit stream; and, if the 1-byte header immediately thereafter is the stereoscopic video header 704, determines whether or not a flag of a 1 byte further immediately after the stereoscopic video header 704 is the depth flag 705.

If the flag has a value indicating the depth flag 705 (for example, an 8-bit "10000000"), the depth map bit stream separation unit 602 outputs, as a depth map bit stream, a bit stream in which the start code 701 is kept unchanged and the 1-byte stereoscopic video header 704 and the 1-byte depth flag 705 are deleted, to the depth map restoration unit 612 until the end code (for example, the 3-byte "000") is detected.

That is, the depth map bit stream separation unit 602: deletes the stereoscopic video header 704 and the depth flag 705 inserted by the bit stream multiplexing unit 50 of the encoding device 5 (see FIG. 27), from the depth map bit stream separated from the multiplex bit stream; thereby restores the depth map bit stream to a bit stream having a structure of a single viewpoint video bit stream illustrated in FIG. 29A; and outputs the restored bit stream to the depth map restoration unit 612.

With this configuration, the depth map restoration unit 612 can decode the depth map bit stream inputted from the depth map bit stream separation unit 602 as a single viewpoint video.

On the other hand, if a flag immediately after the stereoscopic video header 704 is not the depth flag 705, the depth map bit stream separation unit 602 transfers the bit stream starting from the start code 701 until the end code is detected, with the end code being included in the transfer, to the residual video bit stream separation unit 603.

The residual video bit stream separation unit 603: inputs therein the multiplex bit stream from the depth map bit stream separation unit 602; separates the residual video bit stream from the inputted multiplex bit stream; and outputs the encoded residual video fv separated as the residual video bit stream to the residual video restoration unit 614.

If an inputted multiplex bit stream is a bit stream other than the residual video bit stream, the residual video bit stream separation unit 603 transfers the multiplex bit stream to the auxiliary information separation unit 604.

More specifically, the residual video bit stream separation unit 603, similarly to the above-described reference viewpoint video bit stream separation unit 601: detects the start code 701 in the multiplex bit stream,; and, if the 1-byte header immediately after the start code 701 is the stereoscopic video header 704, determines whether or not a 1 byte flag further immediately after the 1-byte header is the residual flag 706.

If the flag has a value indicating the residual flag 706 (for example, an 8-bit "10100000"), the residual video bit stream separation unit 603 outputs, as a residual video bit stream, a bit stream in which the start code 701 is kept unchanged and the 1-byte stereoscopic video header 704 and the 1-byte residual flag 706 are deleted, to the residual video restoration unit 614 until the end code (for example, a 3-byte "000") is detected.

That is, the residual video bit stream separation unit 603: deletes the stereoscopic video header 704 and the residual flag 706 inserted by the bit stream multiplexing unit 50 of the encoding device 5 (see FIG. 27), from the residual video bit stream separated from the multiplex bit stream; thereby restores the residual video bit stream to a bit stream having a structure of the single viewpoint video bit stream illustrated in FIG. 29A; and outputs the restored bit stream to the residual video restoration unit 614.

With this configuration, the residual video restoration unit 614 can decode the residual video bit stream inputted from the residual video bit stream separation unit 603 as a single viewpoint video.

On the other hand, if a flag immediately after the stereoscopic video header 704 is not the residual flag 706, the residual video bit stream separation unit 603 transfers a bit stream starting from the start code 701 until the end code is detected, with the end code being included in the transfer, to the auxiliary information separation unit 604.

The auxiliary information separation unit 604: inputs therein the multiplex bit stream from the residual video bit stream separation unit 603; separates the auxiliary information h from the inputted multiplex bit stream; and outputs the separated auxiliary information h to the depth map projection unit 613 and the projected video synthesis unit 615.

If the inputted multiplex bit stream is a bit stream other than the auxiliary information h, the auxiliary information separation unit 604 ignores the bit stream as unknown data.

More specifically, similarly to the above-described reference viewpoint video bit stream separation unit 601, the auxiliary information separation unit 604: detects the start code 701 in the multiplex bit stream; and, if a 1-byte header immediately after the detected start code 701 is the stereoscopic video header 704, determines whether or not a 1-byte flag further immediately after the 1-byte header is the auxiliary information flag 707.

If the flag has a value indicating the auxiliary information flag 707 (for example, an 8-bit "11000000"), the auxiliary information separation unit 604 separates a bit string from a bit subsequent to the auxiliary information flag 707 until the end code is detected, as the auxiliary information h.

The auxiliary information separation unit 604 outputs the separated auxiliary information h to the depth map projection unit 613 and the projected video synthesis unit 615.

If the inputted multiplex bit stream is a bit stream other than the auxiliary information, the auxiliary information separation unit 604 ignores the multiplex bit stream as unknown data.

Note that an order of separating the multiplex bit stream into the respective bit streams by the reference viewpoint video bit stream separation unit 601, the depth map bit stream separation unit 602, the residual video bit stream separation unit 603, and the auxiliary information separation unit 604 of the bit stream separation unit 60 is not limited to the order exemplified in FIG. 32 and may be arbitrarily changed. Further, those separation processings may be performed in parallel.

[Operations of stereoscopic video encoding device]

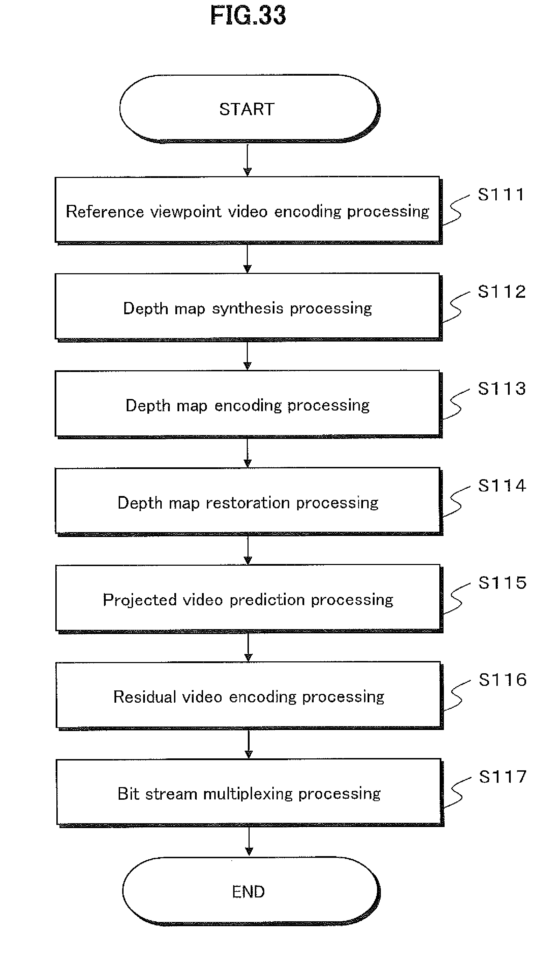

Next are described operations of the encoding device 5 with reference to FIG. 33 (as well as FIG. 27 to FIG. 29 where necessary).

(Reference viewpoint video encoding processing)

As illustrated in FIG. 33, the reference viewpoint video encoding unit 511 of the encoding device 5: inputs therein the reference viewpoint video C from outside; creates the encoded reference viewpoint video c by encoding the reference viewpoint video C using a prescribed encoding method; and outputs the created encoded reference viewpoint video c to the bit stream multiplexing unit 50 as a reference viewpoint video bit stream (step S111).

(Depth map synthesis processing)

The depth map synthesis unit 512 of the encoding device 5: inputs therein the reference viewpoint depth map Cd, the left viewpoint depth map Ld, and the right viewpoint depth map Rd from outside; creates the synthesized depth map $G_2d$ by synthesizing the inputted depth maps accordingly; and outputs the created synthesized depth map $G_2d$ to the depth map encoding unit 513 (step S112).

(Depth map encoding processing)

The depth map encoding unit 513 of the encoding device 5: inputs therein the synthesized depth map $G_2d$ from the depth map synthesis unit 512; creates the encoded depth map $g_2d$ by encoding the synthesized depth map $G_2d$ using a prescribed encoding method; and outputs the created encoded depth map $g_2d$ as a depth map bit stream to the depth map restoration unit 514 and the bit stream multiplexing unit 50 (step S113).

(Depth map restoration processing)

The depth map restoration unit 514 of the encoding device 5: inputs therein the encoded depth map $g_2d$ from the depth map encoding unit 513; and creates the decoded synthesized depth map G'd by decoding the encoded depth map $g_2d$. The depth map restoration unit 514 outputs the created decoded synthesized depth map G'd to the projected video prediction unit 515 (step S114).

(Projected video prediction processing)

The projected video prediction unit 515 of the encoding device 5: inputs therein the decoded synthesized depth map G'd from the depth map restoration unit 514, and the left viewpoint video L, the right viewpoint video R, as well as information on the specified viewpoints Pt and Qt from outside where necessary; and thereby creates the residual video Fv. The projected video prediction unit 515 then outputs the created residual video Fv to the residual video encoding unit 516 (step S115).

(Residual video encoding processing)

The residual video encoding unit 516 of the encoding device 5: inputs therein the residual video Fv from the projected video prediction unit 515; and creates the encoded residual video fv by encoding the inputted residual video Fv using a prescribed encoding method. The residual video encoding unit 516 then outputs the created encoded residual video fv to the bit stream multiplexing unit 50 as a residual video bit stream (step S116).

(Bit stream multiplexing processing)

The bit stream multiplexing unit 50 of the encoding device 5: multiplexes the reference viewpoint video bit stream which is generated from the encoded reference viewpoint video c created in step S111, the depth map bit stream which is generated from the encoded depth map $g_2d$ created in step S113, the residual video bit stream which is generated from the encoded residual video fv created in step S116, and the auxiliary information h inputted together with the reference viewpoint video C from outside, into a multiplex bit stream; and outputs the multiplex bit stream to the decoding device 6 (see FIG. 31) (step S117).

Note that the bit stream multiplexing unit 50 multiplexes the reference viewpoint video bit stream as it is without changing an existing header thereof.

In the multiplexing, the depth header addition unit 503 of the bit stream multiplexing unit 50 inserts the stereoscopic video header 704 and the depth flag 705 immediately after the start code 701 of an existing header of the depth map bit stream.

In the multiplexing, the residual header addition unit 504 of the bit stream multiplexing unit 50 inserts the stereoscopic video header 704 and the residual flag 706 immediately after the start code 701 of an existing header of the residual video bit stream.

In the multiplexing, the auxiliary information header addition unit 502 of the bit stream multiplexing unit 50 adds the start code 701, the stereoscopic video header 704, and the auxiliary information flag 707, as a header, to the auxiliary information h.

As described above, the encoding device 5 outputs the multiplex bit stream in which the reference viewpoint video bit stream, the depth map bit stream, the residual video bit stream, and the bit stream generate from the auxiliary information corresponding to those bit streams, to the decoding device 6 (see FIG. 31).

[Operations of stereoscopic video decoding device]

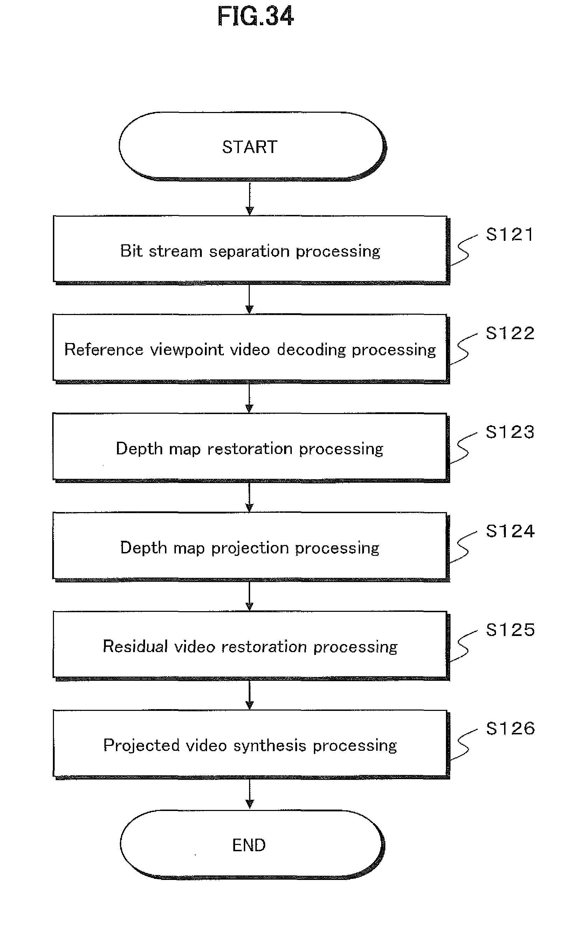

Next are described operations of the decoding device 6 with reference to FIG. 34 (as well as FIG. 29, FIG. 31, and FIG. 32 where necessary).

(Bit stream separation processing)

As illustrated in FIG. 34, the bit stream separation unit 60 of the decoding device 6: inputs therein the multiplex bit stream from the encoding device 5 (see FIG. 27); separates the inputted multiplex bit stream into the reference viewpoint video bit stream, the depth map bit stream, the residual video bit stream, and the auxiliary information h. The bit stream separation unit 60 outputs: the separated reference viewpoint video bit stream to the reference viewpoint video decoding unit 611, the separated depth map bit stream to the depth map restoration unit 612; the separated residual video bit stream to the residual video restoration unit 614; and the separated auxiliary information h to the depth map projection unit 613 and the projected video synthesis unit 615 (step S121).

Note that the reference viewpoint video bit stream separation unit 601 of the bit stream separation unit 60 separates a bit stream whose header immediately after the start code 701 is not the stereoscopic video header 704, as the reference viewpoint video bit stream.

The depth map bit stream separation unit 602 of the bit stream separation unit 60: separates a bit stream whose header immediately after the start code 701 is the stereoscopic video header 704, and at the same time, whose flag further immediately after the header 704 is the depth flag 705, as the depth map bit stream; deletes the stereoscopic video header 704 and the depth flag 705 from the separated bit stream; and outputs the created bit stream.

The residual video bit stream separation unit 603 of the bit stream separation unit 60: separates a bit stream whose header immediately after the start code 701 is the stereoscopic video header 704, and at the same time, whose flag further immediately after the header 704 is the residual flag 706, as the residual video bit stream; deletes the stereoscopic video header 704 and the residual flag 706 from the separated bit stream; and outputs the created bit stream.

The auxiliary information separation unit 604 of the bit stream separation unit 60: separates a bit stream whose header immediately after the start code 701 is the stereoscopic video header 704, and at the same time, whose flag further immediately after the header 704 is the auxiliary information flag 707, as an auxiliary information stream; and outputs the auxiliary information body 708 as the auxiliary information h.

(Reference viewpoint video decoding processing)

The reference viewpoint video decoding unit 611 of the decoding device 6: inputs therein the encoded reference viewpoint video c from the bit stream separation unit 60 as the reference viewpoint video bit stream; creates the decoded reference viewpoint video C' by decoding the inputted encoded reference viewpoint video c in accordance with the encoding method used; and outputs the created decoded reference viewpoint video C' as a reference viewpoint video of a multi-view video to outside (step S122).

(Depth map restoration processing)

The depth map restoration unit 612 of the decoding device 6: inputs therein the encoded depth map $g_2d$ from the bit stream separation unit 60 as the depth map bit stream; creates the decoded synthesized depth map G'd by decoding the inputted encoded depth map $g_2d$ in accordance with the encoding method used; and outputs the created decoded synthesized depth map G'd to the depth map projection unit 613 (step S123).

(Depth map projection processing)

The depth map projection unit 613 of the decoding device 6: inputs therein the decoded synthesized depth map G'd from the depth map restoration unit 612, the auxiliary information h from the bit stream separation unit 60, and the left specified viewpoint Pt and the right specified viewpoint Qt from outside; creates the left specified viewpoint depth map Pd and the right specified viewpoint depth map Qd which are depth maps at the left specified viewpoint Pt and the right specified viewpoint Qt, respectively; and outputs the created left specified viewpoint depth map Pd and the created right specified viewpoint depth map Qd to the projected video synthesis unit 615 (step S124).

**EP 2 797 327 A1**

(Residual video restoration processing)

The residual video restoration unit 614 of the decoding device 6: inputs therein the encoded residual video fv from the bit stream separation unit 60 as the residual video bit stream; creates the left residual video L'v and the right residual video R'v by decoding the inputted encoded residual video fv in accordance with the encoding method used; and outputs the created left residual video L'v and the created right residual video R'v to the projected video synthesis unit 615 (step S125).

(Projection video synthesis processing)

The projected video synthesis unit 615 of the decoding device 6: inputs therein the decoding reference viewpoint video C' from the reference viewpoint video decoding unit 611, the left and right specified viewpoint depth maps Pd, Qd from the depth map projection unit 613, the left residual video L'v and the right residual video R'v from the residual video restoration unit 614, and the auxiliary information h from the bit stream separation unit 60; and thereby creates the specified viewpoint videos P, Q at the left and right specified viewpoints Pt and Qt, respectively. The projected video synthesis unit 615 outputs the created specified viewpoint videos P, Q to outside as a specified viewpoint video of the multi-view video (step S126).

As described above, the decoding device 6: separates the multiplex bit stream inputted from the encoding device 5 (see FIG. 27) into the reference viewpoint video bit stream, the depth map bit stream, the residual video bit stream, and the auxiliary information h; and creates a stereoscopic video using data on those separated bit streams.

The stereoscopic video encoding devices 1, 1A, 1 B, 1C, and 5, and the stereoscopic video decoding devices 2, 2A, 2B, 2C, and 6 according to the first, second, third, fourth, and variations thereof can be configured using dedicated hardware. The configuration is not, however, limited to this. For example, those units can be realized by making a generally-available computer execute a program and making the computer operate an arithmetic unit or a storage unit therein. Such a program (a stereoscopic video encoding program and a stereoscopic video decoding program) can be distributed via a communication line or by writing to a recording medium such as a CD-ROM.

In the present invention, a glasses-free stereoscopic video which requires a number of viewpoint videos can be efficiently compression encoded into a few viewpoint videos and depth maps corresponding thereto in a transmittable manner. This allows the stereoscopic video at high efficiency and quality to be provided at low cost. Thus, a stereoscopic video storage and transmission device or service to which the present invention is applied can easily store and transmit necessary data, even if the data is a glasses-free stereoscopic video which requires a number of viewpoint videos, and can also provide a high-quality stereoscopic video.

Further, the present invention can be widely applied to a stereoscopic television broadcasting service, a stereoscopic video recorder, a 3D movie, an educational device and a display device using a stereoscopic video, an Internet service, and the like, and can demonstrate its effect. The present invention can also be applied to a free viewpoint television or a free viewpoint movie in which a viewer can freely change a position of his/her viewpoint, and can achieve its effectiveness.

Further, a multi-view video created by the stereoscopic video encoding device of the present invention can make it possible for an existent decoding device which cannot otherwise decode the multi-view video to utilize the multi-view video as a single viewpoint video.

DESCRIPTION OF REFERENCE NUMERALS

| | |
|---|---|
| 1, 1A, 1B | stereoscopic video encoding device |
| 11 | reference viewpoint video encoding unit |
| 12, 12A, 12B | depth map synthesis unit |
| 121, 122 | intermediate viewpoint projection unit |
| 123 | map synthesis unit |
| 13, 13A, 13B | depth map encoding unit |
| 14, 14A, | 30a depth map decoding unit |
| 15, 15A, 15B, 15C | projected video prediction unit |
| 151, 151B | occlusion hole detection unit |
| 1511 | first hole mask creation unit |
| 1511 | a left viewpoint projection unit (left viewpoint projection unit (auxiliary viewpoint projection unit) |
| 1511b | first hole pixel detection unit (hole pixel detection unit) |
| 1512 | second hole mask creation unit |

| | |
|---|---|
| 1512a | second hole pixel detection unit |
| 1512b | left viewpoint projection unit (second auxiliary viewpoint projection unit) |
| 1513 | third hole mask creation unit |
| 1513a | specified viewpoint projection unit |
| 1513b | third hole pixel detection unit |
| 1513c | left viewpoint projection unit (third auxiliary viewpoint projection unit) |
| 1514 | hole mask synthesis unit |
| 1515 | hole mask expansion unit |
| 152 | residual video segmentation unit |
| 153 | left viewpoint projection unit (auxiliary viewpoint projection unit) |
| 154 | residual calculation unit |
| 16, 16A, 16B | residual video encoding unit |
| 17 | depth map framing unit |
| 18 | depth map separation unit |
| 19, 19B | residual video framing unit |
| 2, 2A, 2B | stereoscopic video decoding device |
| 21 | reference viewpoint video decoding unit |
| 22, 22A, 28a | depth map decoding unit |
| 23, 23A, 23B | depth map projection unit |
| 24, 24A, 24B | residual video decoding unit |
| 25, 25A, 25B, 25C | projected video synthesis unit |
| 251, 251B, 251C | reference viewpoint video projection unit |
| 251a | hole pixel detection unit |
| 251b | specified viewpoint video projection unit |
| 251c | reference viewpoint video pixel copying unit |
| 251d | median filter |
| 251e | hole mask expansion unit |
| 252, 252B, 252C | residual video projection unit |
| 252a | specified viewpoint video projection unit |
| 252b | residual video pixel copying unit |
| 252c | hole filling processing unit |
| 252f | residual addition unit |
| 26 | depth map separation unit |
| 27, 27B | residual video separation unit |
| 28 | depth map restoration unit |
| 30 | depth map restoration unit |
| 5 | stereoscopic video encoding device |
| 50 | bit stream multiplexing unit |
| 501 | switch (switching unit) |
| 502 | auxiliary information header addition unit |
| 503 | depth header addition unit |
| 504 | residual header addition unit |
| 51 | encoding processing unit |
| 511 | reference viewpoint video encoding unit |
| 512 | depth map synthesis unit |
| 513 | depth map encoding unit |
| 514 | depth map restoration unit |
| 515 | projected video prediction unit |
| 516 | residual video encoding unit |
| 6 | stereoscopic video decoding device |
| 60 | bit stream separation unit |
| 601 | reference viewpoint video bit stream separation unit |
| 602 | depth map bit stream separation unit |
| 603 | residual video bit stream separation unit |
| 604 | auxiliary information separation unit |
| 61 | decoding processing unit |
| 611 | reference viewpoint video decoding unit |
| 612 | depth map restoration unit |

| 613 | depth map projection unit |
| 614 | residual video restoration unit |
| 615 | projected video synthesis unit |
| 701 | start code |
| 702 | single viewpoint video header (first identification information) |
| 703 | bit stream body |
| 704 | stereoscopic video header (second identification information) |
| 705 | depth flag (third identification information) |
| 706 | residual flag (fourth identification information) |
| 707 | auxiliary information flag (fifth identification information) |
| 708 | auxiliary information body |

**Claims**

1. A stereoscopic video encoding device encoding a multi-view video and a depth map which is a map showing information on a depth value for each pixel, the depth value representing a parallax between different viewpoints of the multi-view video, the stereoscopic video encoding device comprising:

   a reference viewpoint video encoding unit that encodes a reference viewpoint video which is a video at a reference viewpoint of the multi-view video and outputs the encoded reference viewpoint video as a reference viewpoint video bit stream;
   an intermediate viewpoint depth map synthesis unit that creates an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint;
   a depth map encoding unit that encodes the intermediate viewpoint depth map and outputs the encoded intermediate viewpoint depth map as a depth map bit stream;
   a depth map decoding unit that creates a decoded intermediate viewpoint depth map by decoding the encoded intermediate viewpoint depth map;
   a projected video prediction unit that creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map; and
   a residual video encoding unit that encodes the residual video and outputs the encoded residual video as a residual video bit stream,
   wherein the projected video prediction unit comprises:

      an occlusion hole detection unit that detects a pixel to become an occlusion hole when the reference viewpoint video is projected to the auxiliary viewpoint, using the decoded intermediate viewpoint depth map; and
      a residual video segmentation unit that creates the residual video by segmenting, from the auxiliary viewpoint video, the pixel to become an occlusion hole detected by the occlusion hole detection unit.

2. The stereoscopic video encoding device according to claim 1,
   wherein the occlusion hole detection unit comprises:

      an auxiliary viewpoint projection unit that creates an auxiliary viewpoint projected depth map which is a depth map at the auxiliary viewpoint by projecting the decoded intermediate viewpoint depth map to the auxiliary viewpoint; and
      a hole pixel detection unit that compares, for each pixel of the auxiliary viewpoint projected depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest as a pixel to become an occlusion hole.

3. The stereoscopic video encoding device according to claim 2,

wherein the occlusion hole detection unit further comprises a hole mask expansion unit that expands a hole mask which indicates a position of the pixel detected by the hole pixel detection unit, by a prescribed number of pixels; and wherein the residual video segmentation unit creates the residual video by segmenting a pixel contained in the hole mask expanded by the hole mask expansion unit, from the auxiliary viewpoint video.

4. The stereoscopic video encoding device according to claim 2 or 3,
wherein the occlusion hole detection unit further comprises:

a second hole pixel detection unit that compares, for each pixel of the decoded intermediate viewpoint depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest as a pixel to become an occlusion hole;
a second auxiliary viewpoint projection unit that projects a result detected by the second hole pixel detection unit, to the auxiliary viewpoint; and
a hole mask synthesis unit that determines a logical add of a result detected by the hole pixel detection unit and the result detected by the second hole pixel detection unit obtained by projection by the second auxiliary viewpoint projection unit, as a result detected by the occlusion hole detection unit.

5. The stereoscopic video encoding device according to claim 4,
wherein the occlusion hole detection unit further comprises:

a specified viewpoint projection unit that creates a specified viewpoint depth map which is a depth map at an arbitrary specified viewpoint by projecting the decoded intermediate viewpoint depth map to the specified viewpoint position;
a third hole pixel detection unit that compares, for each pixel of the specified viewpoint depth map, a depth value of a pixel of interest as a target to be determined whether or not the pixel becomes an occlusion hole, to a depth value of a pixel away from the pixel of interest toward the reference viewpoint by a prescribed number of pixels, and, if the depth value of the pixel away from the pixel of interest is larger than that of the pixel of interest by a prescribed value or more, detects the pixel of interest, as a pixel to become an occlusion hole; and
a third auxiliary viewpoint projection unit that projects a result detected by the third hole pixel detection unit, to the auxiliary viewpoint,

wherein the hole mask synthesis unit determines a logical add of the result detected by the hole pixel detection unit, the result detected by the second hole pixel detection unit obtained by the projection by the second auxiliary viewpoint projection unit, and the result detected by the third hole pixel detection unit obtained by the projection by the third auxiliary viewpoint projection unit, as a result of detected by the occlusion detection by the detection unit.

6. The stereoscopic video encoding device according to any of claims 1 to 5, further comprising:

a depth map framing unit that creates a framed depth map by reducing and joining a plurality of the intermediate viewpoint depth maps between the reference viewpoint and each of a plurality of the auxiliary viewpoints of the multi-view video, and framing the reduced and joined depth maps into a single framed image;
a depth map separation unit that creates a plurality of the intermediate viewpoint depth maps each having a size same as that of the reference viewpoint video by separating a plurality of the framed reduced intermediate viewpoint depth maps from the framed depth map; and
a residual video framing unit that creates a framed residual video by reducing and joining a plurality of the residual videos from the reference viewpoint video at a plurality of the auxiliary viewpoints of the multi-view video, and framing the reduced and joined residual videos into a single framed image,
wherein the intermediate viewpoint depth map synthesis unit creates a plurality of the intermediate viewpoint depth maps at respective intermediate viewpoints between the reference viewpoint and each of a plurality of the auxiliary viewpoints,
wherein the depth map framing unit creates the framed depth map by reducing and joining a plurality of the intermediate viewpoint depth maps created by the intermediate viewpoint depth map synthesis unit,
wherein the depth map encoding unit encodes the framed depth map and outputs the encoded framed depth map as the depth map bit stream,
wherein the depth map decoding unit creates a decoded framed depth map by decoding the framed depth map encoded by the depth map encoding unit,

wherein the depth map separation unit creates the decoded intermediate viewpoint depth maps each having a size same as that of the reference viewpoint video, by separating a plurality of the reduced intermediate viewpoint depth maps from the decoded framed depth map,

wherein the projected video prediction unit that creates the residual video from the auxiliary viewpoint video at the auxiliary viewpoint, using the decoded intermediate viewpoint depth map created by the depth map separation unit,

wherein the residual video framing unit creates the framed residual video by reducing and joining a plurality of the residual videos created by the projected video prediction unit, and

wherein the residual video encoding unit encodes the framed residual video and outputs the encoded framed residual video as the residual video bit stream.

7. A stereoscopic video decoding device recreating a multi-view video by decoding a bit stream in which the multi-view video and a depth map which is a map showing information on a depth value for each pixel have been encoded, the depth value representing a parallax between different viewpoints of the multi-view video, the stereoscopic video decoding device comprising:

a reference viewpoint video decoding unit that creates a decoded reference viewpoint video by decoding a reference viewpoint video bit stream in which a reference viewpoint video which is a video constituting the multi-view video at a reference viewpoint is encoded;

a depth map decoding unit that creates a decoded intermediate viewpoint depth map by decoding a depth map bit stream in which an intermediate viewpoint depth map is encoded, the intermediate viewpoint depth map being a depth map at an intermediate viewpoint between the reference viewpoint and an auxiliary viewpoint which is away from the reference viewpoint;

a residual video decoding unit that creates a decoded residual video by decoding a residual video bit stream in which a residual video is encoded, the residual video being, when the reference viewpoint video is projected to a viewpoint other than the reference viewpoint, created by segmenting, from the auxiliary viewpoint video, a pixel to become an occlusion hole which constitutes a pixel area in which the pixel is not projectable;

a depth map projection unit that creates a specified viewpoint depth map which is a depth map at a specified viewpoint which is a viewpoint specified as one of the viewpoints of the multi-view video from outside by projecting the decoded intermediate viewpoint depth map to the specified viewpoint; and

a projected video synthesis unit that creates a specified viewpoint video which is a video at the specified viewpoint by synthesizing the decoded reference viewpoint video and a video in which the decoded residual video projected to the specified viewpoint, using the specified viewpoint depth map,

wherein the projected video synthesis unit comprises:

a reference viewpoint video projection unit that detects a pixel to become an occlusion hole which constitutes a pixel area in which, when the decoded reference viewpoint video is projected to the specified viewpoint, the pixel is not projectable, using the specified viewpoint depth map, and, on the other hand, sets a pixel not to become the occlusion hole, as a pixel of the specified viewpoint video, when the decoded reference viewpoint video is projected to the specified viewpoint, using the specified viewpoint depth map; and

a residual video projection unit that sets the pixel to become the occlusion hole, as a pixel of the specified viewpoint video, by projecting the decoded residual video to the specified viewpoint using the specified viewpoint depth map.

8. The stereoscopic video decoding device according to claim 7,

wherein the reference viewpoint video projection unit comprises a hole pixel detection unit that: compares, for each pixel of the specified viewpoint depth map, a depth value of a pixel of interest as a target to be determined whether or not the pixel becomes an occlusion hole, to a depth value of a pixel away from the pixel of interest toward the reference viewpoint by a prescribed number of pixels; and, if the depth value of the pixel away from the pixel of interest is larger than that of the pixel of interest by a prescribed value or more, detects the pixel of interest as a pixel to become an occlusion hole.

9. The stereoscopic video decoding device according to claim 8,

wherein the reference viewpoint video projection unit further comprises a hole mask expansion unit that expands an occlusion hole composed of the pixel detected by the hole pixel detection unit, by a prescribed number of pixels, and wherein the residual video projection unit sets the pixel in the occlusion hole expanded by the hole mask expansion unit, as a pixel of the specified viewpoint video, by projecting the decoded residual video to the specified viewpoint.

**10.** The stereoscopic video decoding device according to claim 9,
wherein the residual video projection unit further comprises a hole filling processing unit that: detects, in the specified viewpoint video, a pixel not contained in the residual video; and interpolates a pixel value of the not-contained pixel with a pixel value of a surrounding pixel.

**11.** The stereoscopic video decoding device according to any one of claims 7 to 10, further comprising:

a depth map separation unit that creates a plurality of the intermediate viewpoint depth maps each having a size same as that of the reference viewpoint video by separating, for each of the intermediate viewpoints, a framed depth map which is a single framed image created by reducing and joining a plurality of the intermediate viewpoint depth maps at respective intermediate viewpoints between the reference viewpoint and each of a plurality of the auxiliary viewpoints; and
a residual video separation unit that creates a plurality of the decoded residual videos each having a size same as that of the reference viewpoint video by separating a framed residual video which is a single framed image created by reducing and joining a plurality of the residual videos at a plurality of the auxiliary viewpoints,
wherein the depth map decoding unit creates a decoded framed depth map by decoding the depth map bit stream in which the framed depth map is encoded,
wherein the residual video decoding unit creates a decoded framed residual video by decoding the residual video bit stream in which the framed residual video is encoded.
wherein the depth map separation unit creates a plurality of the decoded intermediate viewpoint depth maps each having a size same as that of the reference viewpoint video by separating a plurality of the reduced intermediate viewpoint depth maps from the decoded framed depth map,
wherein the residual video separation unit creates a plurality of the decoded residual videos in respective sizes thereof same as that of the reference viewpoint video by separating a plurality of the reduced residual videos from the decoded framed residual video,
wherein the depth map projection unit creates a specified viewpoint depth map which is a depth map at the specified viewpoint by projecting, for each of a plurality of the specified viewpoints, respective decoded intermediate viewpoint depth maps to the specified viewpoints, and
wherein the projected video synthesis unit creates a specified viewpoint video which is a video at the specified viewpoint by synthesizing, for each of a plurality of the specified viewpoints, a plurality of videos in which each of the decoded reference viewpoint video and the decoded residual videos corresponding thereto are projected to the respective specified viewpoints, using the specified viewpoint depth maps.

**12.** A stereoscopic video encoding method encoding a multi-view video and a depth map which is a map showing information on a depth value for each pixel have been encoded, the depth value representing a parallax between different viewpoints of the multi-view video, the stereoscopic video encoding method comprising:

a reference viewpoint video encoding processing step of encoding a reference viewpoint video which is a video at a reference viewpoint of the multi-view video and outputs the encoded reference viewpoint video as a reference viewpoint video bit stream;
an intermediate viewpoint depth map synthesis processing step of creating an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint;
a depth map encoding processing step of encoding the intermediate viewpoint depth map and outputting the encoded intermediate viewpoint depth map as a depth map bit stream;
a depth map decoding processing step of creating a decoded intermediate viewpoint depth map by decoding the encoded intermediate viewpoint depth map;
a projected video prediction processing step of creating a residual video by segmenting, from the auxiliary viewpoint video, a pixel which becomes an occlusion hole which constitutes a pixel area not projectable when the reference viewpoint video is projected to a viewpoint other than the reference viewpoint, using the decoded intermediate viewpoint depth map; and
a residual video encoding processing step of encoding the residual video and outputting the encoded residual video as a residual video bit stream,
wherein the projected video prediction processing step comprises:

an occlusion hole detection processing step of detecting a pixel to become an occlusion hole when the reference viewpoint video is projected to the auxiliary viewpoint, using the decoded intermediate viewpoint depth map; and

a residual video segmentation processing step of creating the residual video by segmenting, from the auxiliary viewpoint video, the pixel to become an occlusion hole detected by the occlusion hole detection unit.

**13.** A stereoscopic video decoding method recreating a multi-view video by decoding a bit stream in which the multi-view video and a depth map which is a map showing information on a depth value for each pixel have been encoded, the depth value representing a parallax between different viewpoints of the multi-view video, the stereoscopic video decoding method comprising:

a reference viewpoint video decoding processing step of creating a decoded reference viewpoint video by decoding a reference viewpoint video bit stream in which a reference viewpoint video which is a video constituting the multi-view video at a reference viewpoint is encoded;

a depth map decoding processing step of creating a decoded intermediate viewpoint depth map by decoding a depth map bit stream in which an intermediate viewpoint depth map which is a depth map at an intermediate viewpoint between the reference viewpoint and an auxiliary viewpoint which is away from the reference viewpoint is encoded;

a residual video decoding processing step of creating a decoded residual video by decoding a residual video bit stream in which a residual video is encoded which, when the reference viewpoint video is projected to a viewpoint other than the reference viewpoint, a pixel to become an occlusion hole as a pixel area in which the pixel is not projectable is segmented from the auxiliary viewpoint video;

a depth map projection processing step of creating a specified viewpoint depth map which is a depth map at a specified viewpoint which is a viewpoint specified as one of the viewpoints of the multi-view video from outside by projecting the decoded intermediate viewpoint depth map to the specified viewpoint; and

a projected video synthesis processing step of creating a specified viewpoint video which is a video at the specified viewpoint by synthesizing a video created by projecting the decoded reference viewpoint video and a video created by projecting the decoded residual video to the specified viewpoint, using the specified viewpoint depth map,

wherein the projected video synthesis processing step comprises:

a reference viewpoint video projection processing step of detecting a pixel to become an occlusion hole which constitutes a pixel area in which, when the decoded reference viewpoint video is projected to the specified viewpoint, the pixel is not projectable, using the specified viewpoint depth map, and, on the other hand, when the decoded reference viewpoint video is projected to the specified viewpoint, sets a pixel not to become the occlusion hole as a pixel of the specified viewpoint video, using the specified viewpoint depth map; and

a residual video projection processing step of setting the pixel to become the occlusion hole, as a pixel of the specified viewpoint video, by projecting the decoded residual video to the specified viewpoint using the specified viewpoint depth map.

**14.** A stereoscopic video encoding program for causing a computer serving as, so as to encode a multi-view video and a depth map which is a map showing information on a depth value for each pixel, the depth value representing a parallax between different viewpoints of the multi-view video:

a reference viewpoint video encoding unit that encodes a reference viewpoint video which is a video at a reference viewpoint of the multi-view video and outputs the encoded reference viewpoint video as a reference viewpoint video bit stream;

an intermediate viewpoint depth map synthesis unit that creates an intermediate viewpoint depth map which is a depth map at an intermediate viewpoint between the reference viewpoint and an auxiliary viewpoint which is a viewpoint other than the reference viewpoint of the multi-view video, by using a reference viewpoint depth map which is a depth map at the reference viewpoint and an auxiliary viewpoint depth map which is a depth map at the auxiliary viewpoint;

a depth map encoding unit that encodes the intermediate viewpoint depth map and outputs the encoded intermediate viewpoint depth map as a depth map bit stream;

a depth map decoding unit that creates a decoded intermediate viewpoint depth map by decoding the encoded intermediate viewpoint depth map;

a projected video prediction unit that creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map; and
a residual video encoding unit that encodes the residual video and outputs the encoded residual video as a residual video bit stream, and
in the projected video prediction unit:

an occlusion hole detection unit that detects a pixel to become an occlusion hole which constitutes a pixel area in which the pixel is not projectable when the reference viewpoint video is projected to the auxiliary viewpoint, using the decoded intermediate viewpoint depth map; and
a residual video segmentation unit that creates the residual video by segmenting, from the auxiliary viewpoint video, the pixel to become the occlusion hole detected by the occlusion hole detection unit.

15. A stereoscopic video decoding program for causing a computer serving as, so as to recreate a multi-view video by decoding a bit stream in which the multi-view video and a depth map which is a map showing information on a depth value for each pixel have been encoded, the depth value representing a parallax between different viewpoints of the multi-view video:

a reference viewpoint video decoding unit that creates a decoded reference viewpoint video by decoding a reference viewpoint video bit stream in which a reference viewpoint video which is a video constituting the multi-view video at a reference viewpoint is encoded;
a depth map decoding unit that creates a decoded intermediate viewpoint depth map by decoding a depth map bit stream in which an intermediate viewpoint depth map which is a depth map at an intermediate viewpoint between the reference viewpoint and an auxiliary viewpoint which is away from the reference viewpoint is encoded;
a residual video decoding unit that creates a decoded residual video by decoding a residual video bit stream in which a residual video is encoded, the residual video being, when the reference viewpoint video is projected to a viewpoint other than the reference viewpoint, a pixel to become an occlusion hole as a pixel area in which the pixel is not projectable is segmented from the auxiliary viewpoint video;
a depth map projection unit that creates a specified viewpoint depth map which is a depth map at a specified viewpoint which is a viewpoint specified as one of the viewpoints of the multi-view video from outside by projecting the decoded intermediate viewpoint depth map to the specified viewpoint; and
a projected video synthesis unit that creates a specified viewpoint video which is a video at the specified viewpoint, by synthesizing a video created by projecting the decoded reference viewpoint video and a video created by projecting the decoded residual video to the specified viewpoint, using the specified viewpoint depth map, and,
in the projected video synthesis unit:

a reference viewpoint video projection unit that detects a pixel to become an occlusion hole which constitutes a pixel area in which the pixel is not projectable, when the decoded reference viewpoint video is projected to the specified viewpoint, using the specified viewpoint depth map, and, on the other hand, sets a pixel not to become the occlusion hole, as a pixel of the specified viewpoint video, when the decoded reference viewpoint video is projected to the specified viewpoint, using the specified viewpoint depth map; and
a residual video projection unit that sets the pixel to become the occlusion hole, as a pixel of the specified viewpoint video, by projecting the decoded residual video to the specified viewpoint using the specified viewpoint depth map.

16. A stereoscopic video encoding device encoding a multi-view video and a depth map which is a map showing information on a depth value for each pixel, the depth value representing a parallax between different viewpoints of the multi-view video, the stereoscopic video encoding device comprising:

a reference viewpoint video encoding unit that encodes a reference viewpoint video which is a video at a reference viewpoint of the multi-view video and outputs the encoded reference viewpoint video as a reference viewpoint video bit stream;
a depth map synthesis unit that creates a synthesized depth map which is a depth map at a prescribed viewpoint, by projecting both a reference viewpoint depth map which is a depth map at the reference viewpoint and auxiliary viewpoint depth maps which are depth maps at auxiliary viewpoints which are viewpoint of the multi-view video away from the reference viewpoint, to a prescribed viewpoint, and synthesizing the projected depth maps;
a depth map encoding unit that encodes the synthesized depth map and outputs the encoded synthesized depth

69

map as a depth map bit stream;

a depth map decoding unit that creates a decoded synthesized depth map by decoding the encoded synthesized depth map;

a projected video prediction unit that creates a framed residual video created by predicting, from the reference viewpoint, videos at viewpoints other than the reference viewpoint using the decoded synthesized depth map so as to obtain predicted residuals as residual videos, and framing the predicted residuals into the framed residual video; and

a residual video encoding unit that encodes the framed residual video and outputs the encoded residual video as a residual video bit stream.

17. The stereoscopic video encoding device according to claim 16,
wherein the depth map synthesis unit creates a single synthesized depth map at a common viewpoint by projecting the reference viewpoint depth map and a plurality of the auxiliary viewpoint depth maps to the common viewpoint, the stereoscopic video encoding device further comprising a residual video framing unit that creates a framed residual video by reducing and joining a plurality of the residual videos created from the reference viewpoint video and a plurality of the auxiliary viewpoint videos, and framing the reduced and joined residual videos into a single framed image, and
wherein the residual video encoding unit encodes the framed residual video and outputs the encoded framed residual video as the residual video bit stream.

18. The stereoscopic video encoding device according to claim 16 or 17,
wherein the projected video prediction unit creates a residual video by segmenting, from the auxiliary viewpoint video, a pixel to become an occlusion hole which constitutes a pixel area in which the pixel is not projectable when the reference viewpoint video is projected to a viewpoint other than the reference viewpoint, using the decoded intermediate viewpoint depth map.

19. The stereoscopic video encoding device according to claim 16 or 17,
wherein the projected video prediction unit creates a residual video by calculating a difference, for each pixel, between a video created by projecting the reference viewpoint video to the auxiliary viewpoint, and the auxiliary viewpoint video, using the decoded synthesized depth map.

20. The stereoscopic video encoding device according to claim 16,
wherein the reference viewpoint video bit stream, the depth map bit stream, and the residual video bit stream each have a header containing first identification information for identifying a prescribed start code and being a single viewpoint video, in this order,
the stereoscopic video encoding device further comprising a bit stream multiplexing unit that multiplexes auxiliary information containing information indicating respective positions of the reference viewpoint and the auxiliary viewpoint, the reference viewpoint video bit stream, the depth map bit stream, and the residual video bit stream, and outputs the multiplexed information and bit streams as a multiplex bit stream,
wherein the bit stream multiplexing unit:

outputs the reference viewpoint video bit stream as it is without change;
outputs the depth map bit stream with inserted between the start code and the first identification information, second identification information for identifying itself as a data on a stereoscopic video, and third identification information for identifying itself as the depth map bit stream, in this order;
outputs the residual video bit stream with inserted between the start code and the first identification information, the second identification information, and fourth identification information for identifying itself as the residual video bit stream, in this order; and
outputs the auxiliary information with added thereto a header containing the start code, the second identification information, and fifth identification information for identifying itself as the auxiliary information, in this order.

21. A stereoscopic video decoding device recreating a multi-view video by decoding a bit stream in which the multi-view video and a depth map which is a map showing information on a depth value for each pixel have been encoded, the depth value representing a parallax between different viewpoints of the multi-view video, the stereoscopic video decoding device comprising:

a reference viewpoint video decoding unit that creates a decoded reference viewpoint video by decoding a reference viewpoint video bit stream in which a reference viewpoint video which is a video constituting the multi-view video at a reference viewpoint is encoded;

a depth map decoding unit that creates a decoded synthesized depth map by decoding a depth map bit stream in which a synthesized depth map is encoded, the synthesized depth map being a depth map at a specified viewpoint created by synthesizing a reference viewpoint depth map which is a depth map at the reference viewpoint and auxiliary viewpoint depth maps which are depth maps at auxiliary viewpoints which are viewpoints of the multi-view video away from the reference viewpoint;

a residual video decoding unit that creates a decoded residual video by decoding a residual video bit stream in which residual videos which are predicted residuals created by predicting, from the reference viewpoint, videos at viewpoints other than the reference viewpoint using the decoded synthesized depth map, and that separates and creates decoded residual videos;

a depth map projection unit that creates specified viewpoint depth maps which are depth maps at specified viewpoints which are viewpoints specified from outside as viewpoints of the multi-view video, by projecting the decoded synthesized depth map to the specified viewpoints; and

a projected video synthesis unit that creates specified viewpoint videos which are videos at the specified viewpoints, by synthesizing a video created by projecting the decoded reference viewpoint video and videos created by projecting the decoded residual video to the specified viewpoints, using the specified viewpoint depth map.

22. The stereoscopic video decoding device according to claim 21,

wherein the synthesized depth map is a single depth map at a common viewpoint created by projecting and synthesizing the reference viewpoint depth map and a plurality of the auxiliary viewpoint depth maps to the common viewpoint,

the stereoscopic video decoding device further comprising a residual video separation unit that creates a plurality of the decoded residual videos each having a size same as that of the reference viewpoint video, by separating a framed residual video which is a single framed image created by reducing and joining a plurality of the residual videos at respective auxiliary viewpoints,

wherein the residual video decoding unit creates a decoded framed residual video by decoding the residual video bit stream in which the framed residual video is encoded,

wherein the residual video separation unit creates a plurality of the decoded residual videos each having a size same as that of the reference viewpoint video by separating a plurality of the reduced residual videos from the decoded framed residual video, and

wherein the projected video synthesis unit creates a specified viewpoint video which is a video at the specified viewpoint, by synthesizing the decoded reference viewpoint video and any one of a plurality of the decoded residual videos, using the specified viewpoint depth map.

23. The stereoscopic video decoding device according to claim 21 or 22,

wherein the residual video bit stream is created by, when the reference viewpoint video is projected to a viewpoint away from the reference viewpoint, segmenting, from the auxiliary viewpoint video, a pixel to become an occlusion hole which constitutes a pixel area in which the pixel is not projectable, and

wherein the projected video synthesis unit comprises:

a reference viewpoint video projection unit that detects a pixel to become an occlusion hole which constitutes a pixel area in which the pixel is not projectable when the decoded reference viewpoint video is projected to the specified viewpoint, using the specified viewpoint depth map, and, on the other hand, sets a pixel not to become the occlusion hole, as a pixel of the specified viewpoint video when the decoded reference viewpoint video is projected to the specified viewpoint, using the specified viewpoint depth map; and

a residual video projection unit that sets the pixel to become the occlusion hole, as a pixel of the specified viewpoint video, by projecting the decoded residual video to the specified viewpoint using the specified viewpoint depth map.

24. The stereoscopic video decoding device according to claim 21 or 22,

wherein the residual video bit stream is created by encoding a residual video which is created by calculating a difference, for each pixel, between a video created by projecting the reference viewpoint video to the auxiliary viewpoint, and the auxiliary viewpoint video, using the decoded synthesized depth map, and

wherein the projected video synthesis unit comprises a residual addition unit that creates the specified viewpoint video by adding, for each pixel, a video created by projecting the decoded reference viewpoint video to the specified viewpoint using the specified viewpoint depth map, to a video created by projecting the decoded residual video to the specified viewpoint using the specified viewpoint depth map.

**25.** The stereoscopic video decoding device according to claim 21,

wherein the reference viewpoint video bit stream has a header containing first identification information for identifying a prescribed start code and being a single viewpoint video, in this order,

wherein the depth map bit stream has a header containing second identification information for identifying itself as a data on a stereoscopic video and third identification information for identifying itself as the depth map bit stream, in this order, between the start code and the first identification information;

wherein the residual video bit stream has a header containing the second identification information and fourth identification information for identifying itself as the residual video bit stream, in this order, between the start code and the first identification information; and

wherein the auxiliary information has a header containing the start code, the second identification information, and fifth identification information for identifying itself as the auxiliary information, in this order,

the stereoscopic video decoding device further comprising a bit stream separation unit that separates a multiplex bit stream in which the reference viewpoint video bit stream, the depth map bit stream, the residual video bit stream, and a bit stream containing auxiliary information which contains information on respective positions of the reference viewpoint and the auxiliary viewpoint are multiplexed, into the reference viewpoint video bit stream, the depth map bit stream, and the residual video bit stream, and the auxiliary information, respectively, and

wherein the bit stream separation unit comprises:

a reference viewpoint video bit stream separation unit that separates, from the multiplex bit stream, a bit stream having the first identification information immediately after the start code as the reference viewpoint video bit stream, and outputs the separated reference viewpoint video bit stream to the reference viewpoint video decoding unit;

a depth map bit stream separation unit that separates, from the multiplex bit stream, a bit stream having the second identification information and the third identification information in this order, immediately after the start code, as the depth map bit stream, and outputs the separated bit stream with deleted therefrom the separated bit stream, the second identification information and the third identification information, to the depth map decoding unit;

a residual video bit stream separation unit that separates, from the multiplex bit stream, a bit stream having the second identification information and the fourth identification information in this order immediately after the start code, and outputs the separated bit stream with deleted therefrom the separated bit stream, the second identification information and the fourth identification information, to the residual video decoding unit; and

an auxiliary information separation unit that separates, from the multiplex bit stream, a bit stream having the second identification information and the fifth identification information in this order immediately after the start code, as the auxiliary information bit stream, and outputs the separated bit stream with deleted therefrom the separated bit stream, the second identification information and the fifth identification information as the auxiliary information, to the projected video synthesis unit.

**26.** A stereoscopic video encoding method encoding a multi-view video and a depth map which is a map showing information on a depth value for each pixel, the depth value representing a parallax between different viewpoints of the multi-view video, the stereoscopic video encoding method comprising:

a reference viewpoint video encoding processing step of encoding a reference viewpoint video which is a video at a reference viewpoint of the multi-view video and outputting the encoded reference viewpoint video as a reference viewpoint video bit stream;

a depth map synthesis processing step of projecting both a reference viewpoint depth map which is a depth map at the reference viewpoint and each of a plurality of auxiliary viewpoint depth maps which are depth maps at auxiliary viewpoints which are viewpoints of the multi-view video away from the reference viewpoint, to a prescribed viewpoint, synthesizing the projected reference viewpoint depth map and the projected auxiliary viewpoint depth maps, and creating a synthesized depth map which is a depth map at the specified viewpoint;

a depth map encoding processing step of encoding the synthesized depth map and outputting the encoded synthesized depth map as a depth map bit stream;

a depth map decoding processing step of decoding the encoded synthesized depth map and creating a decoded synthesized depth map;

a projected video prediction processing step of predicting, from the reference viewpoint, videos at viewpoints other than the reference viewpoint using the decoded synthesized depth map, and framing the predicted residuals as residual videos so as to create a framed residual video; and

a residual video encoding processing step of encoding the residual video and outputting the encoded residual video as a residual video bit stream.

**27.** The stereoscopic video encoding method according to claim 26,
wherein the reference viewpoint video bit stream, the depth map bit stream, and the residual video bit stream each have a header containing first identification information for identifying a prescribed start code and being a single viewpoint video, in this order,
the stereoscopic video encoding method further comprising a bit stream multiplexing processing step of multiplexing auxiliary information containing information on respective positions of the reference viewpoint and the auxiliary viewpoint, the reference viewpoint video bit stream, the depth map bit stream, and the residual video bit stream, and outputting the multiplexed information and bit streams as a multiplex bit stream,
wherein, the bit stream multiplexing processing step in outputting the multiplexed information and bit streams comprising the steps of:

outputting the reference viewpoint video bit stream as it is without change;
outputting the depth map bit stream with inserted between the start code and the first identification information, second identification information for identifying itself as a data on a stereoscopic video and third identification information for identifying itself as the depth map bit stream, in this order;
outputting the residual video bit stream with inserted between the start code and the first identification information, the second identification information and fourth identification information for identifying itself as the residual video bit stream, in this order; and
outputting the auxiliary information with adding thereto a header containing the start code, the second identification information, and fifth identification information for identifying itself as the auxiliary information, in this order.

**28.** A stereoscopic video decoding method recreating a multi-view video by decoding a bit stream in which the multi-view video and a depth map which is a map showing information on a depth value for each pixel have been encoded, the depth value representing a parallax between different viewpoints of the multi-view video, the stereoscopic video decoding method comprising:

a reference viewpoint video decoding processing step of decoding a reference viewpoint video bit stream in which a reference viewpoint video which is a video constituting the multi-view video at a reference viewpoint is encoded, and creating a decoded reference viewpoint video;
a depth map decoding processing step of decoding a depth map bit stream in which a synthesized depth map is encoded, the synthesized depth map being a depth map at a specified viewpoint created by synthesizing a reference viewpoint depth map which is a depth map at the reference viewpoint and auxiliary viewpoint depth maps which are depth maps at auxiliary viewpoints which are viewpoints of the multi-view video away from the reference viewpoint, and creating a decoded synthesized depth map;
a residual video decoding processing step of decoding a residual video bit stream in which residual videos which are predicted residuals created by predicting, from the reference viewpoint, videos at viewpoints other than the reference viewpoint, using the decoded synthesized depth map, and, separating and creating decoded residual videos;
a depth map projection processing step of projecting the decoded synthesized depth map to specified viewpoints which are viewpoints specified from outside as viewpoints of the multi-view video, and creating specified viewpoint depth maps which are depth maps at the specified viewpoints; and
a projected video synthesis processing step of synthesizing videos created by projecting the decoded reference viewpoint video and videos created by projecting the decoded residual videos to the specified viewpoints, using the specified viewpoint depth maps, and creating specified viewpoint videos which are videos at the specified viewpoints.

**29.** The stereoscopic video decoding method according to claim 28,
wherein the reference viewpoint video bit stream has a header containing first identification information for identifying a prescribed start code and being a single viewpoint video, in this order,
wherein the depth map bit stream has a header containing second identification information for identifying itself as a data on a stereoscopic video and third identification information for identifying itself as the depth map bit stream, in this order, between the start code and the first identification information;
wherein the residual video bit stream has a header containing the second identification information, and fourth identification information for identifying itself as the residual video bit stream, in this order, between the start code and the first identification information;
wherein the auxiliary information has a header containing the start code, the second identification information, and fifth identification information for identifying itself as the auxiliary information, in this order,
the stereoscopic video decoding method further comprising a bit stream separation processing step of separating a multiplex bit stream in which the reference viewpoint video bit stream, the depth map bit stream, the residual video bit stream, and a bit stream containing auxiliary information which contains information on respective positions of the reference viewpoint and the auxiliary viewpoint are multiplexed into the reference viewpoint video bit stream, the depth map bit stream, and the residual video bit stream, and the auxiliary information, respectively, wherein the bit stream separation processing step further comprises the steps of:

separating, from the multiplex bit stream, a bit stream having the first identification information immediately after the start code as the reference viewpoint video bit stream, and using the separated reference viewpoint video bit stream in the reference viewpoint video decoding processing step;

separating, from the multiplex bit stream, a bit stream having the second identification information and the third identification information in this order, immediately after the start code as the depth map bit stream, and using the separated bit stream with deleted therefrom the second identification information and the third identification information, in the depth map decoding processing step;

separating, from the multiplex bit stream, a bit stream having the second identification information and the fourth identification information in this order immediately after the start code as the residual video bit stream, and using the separated bit stream with deleted therefrom the second identification information and the fourth identification information from the separated bit stream, in the residual video decoding processing step; and

separating, from the multiplex bit stream, a bit stream having the second identification information and the fifth identification information in this order, immediately after the start code as the auxiliary information bit stream, and using the separated bit stream with deleted therefrom the separated bit stream, the second identification information and the fifth identification information as the auxiliary information, in the projected video synthesis processing step.

30. A stereoscopic video encoding program for causing a computer serving as, so as to encode a multi-view video and a depth map which is a map showing information on a depth value for each pixel, the depth value representing a parallax between different viewpoints of the multi-view video:

a reference viewpoint video encoding unit that encodes a reference viewpoint video which is a video at a reference viewpoint of the multi-view video and outputs the encoded reference viewpoint video as a reference viewpoint video bit stream;

a depth map synthesis unit that creates a synthesized depth map which is a depth map at a prescribed viewpoint, by projecting each of a reference viewpoint depth map which is a depth map at the reference viewpoint and auxiliary viewpoint depth maps which are depth maps at auxiliary viewpoints which are viewpoints of the multi-view video away from the reference viewpoint, to the prescribed viewpoint, and synthesizing the projected depth maps;

a depth map encoding unit that encodes the synthesized depth map and outputs the encoded intermediate viewpoint depth map as a depth map bit stream;

a depth map decoding unit that creates a decoded synthesized depth map by decoding the encoded synthesized depth map;

a projected video prediction unit that creates a framed residual video created by predicting, from the reference viewpoint, videos at viewpoints other than the reference viewpoint using the decoded synthesized depth map so as to obtain predicted residuals as residual videos, and framing the predicted residuals into the framed residual video; and

a residual video encoding unit that encodes the residual video and outputs the encoded residual video as a residual video bit stream.

31. The stereoscopic video encoding program according to claim 30, wherein the reference viewpoint video bit stream, the depth map bit stream, and the residual video bit stream each have a header containing first identification information for identifying a prescribed start code and being a single viewpoint video, in this order, the stereoscopic video encoding program for further causing the computer serving as a bit stream multiplexing unit that multiplexes auxiliary information which containing information on respective positions of the reference viewpoint and the auxiliary viewpoint, the reference viewpoint video bit stream, the depth map bit stream, and the residual video bit stream, and outputs the multiplexed information and bit streams as a multiplex bit stream, and wherein the bit stream multiplexing unit:

outputs the reference viewpoint video bit stream as it is without change;

outputs the depth map bit stream with inserted between the start code and the first identification information, second identification information for identifying itself as a data on a stereoscopic video, and third identification information for identifying itself as the depth map bit stream, in this order;

outputs the residual video bit stream with inserted between the start code and the first identification information, the second identification information and fourth identification information for identifying itself as the residual video bit stream, in this order; and

outputs the auxiliary information with added thereto a header containing the start code, the second identification information, and fifth identification information for identifying itself as the auxiliary information, in this order.

32. A stereoscopic video decoding program for causing a computer serving as, so as to recreate a multi-view video by decoding a bit stream in which the multi-view video and a depth map which is a map showing information on a depth value for each pixel have been encoded, the depth value representing a parallax between different viewpoints of the multi-view video:

a reference viewpoint video decoding unit that creates a decoded reference viewpoint video by decoding a reference viewpoint video bit stream in which a reference viewpoint video which is a video constituting the multi-view video at a reference viewpoint is encoded;

a depth map decoding unit that creates a decoded synthesized depth map by decoding a depth map bit stream in which a synthesized depth map is encoded, the synthesized depth map being a depth map at a specified viewpoint created by synthesizing a reference viewpoint depth map which is a depth map at the reference viewpoint and auxiliary viewpoint depth maps which are depth maps at auxiliary viewpoints which are viewpoints of the multi-view video away from the reference viewpoint;

a residual video decoding unit that creates decoded residual videos by decoding a residual video bit stream in which residual videos which are predicted residuals created by predicting, from the reference viewpoint, videos at viewpoints other than the reference viewpoint using the decoded synthesized depth map, and that separates and creates decoded residual videos;

a depth map projection unit that creates specified viewpoint depth maps which are depth maps at specified viewpoints which are viewpoints specified from outside as viewpoints of the multi-view video, by projecting the decoded synthesized depth map to the specified viewpoints; and

a projected video synthesis unit that creates specified viewpoint videos which are videos at the specified viewpoints, by synthesizing videos created by projecting the decoded reference viewpoint video and videos created by projecting the decoded residual videos to the specified viewpoints, using the specified viewpoint depth maps.

33. The stereoscopic video decoding program according to claim 32,

wherein the reference viewpoint video bit stream has a header containing first identification information for identifying a prescribed start code and being a single viewpoint video, in this order,

wherein the depth map bit stream has a header containing second identification information for identifying itself as a data on a stereoscopic video and third identification information for identifying itself as the depth map bit stream, in this order, between the start code and the first identification information;

wherein the residual video bit stream has a header containing the second identification information, and fourth identification information for identifying itself as the residual video bit stream, in this order, between the start code and the first identification information; and

wherein the auxiliary information has a header containing the start code, the second identification information, and fifth identification information for identifying itself as the auxiliary information, in this order,

the stereoscopic video decoding program for further causing the computer serving as a bit stream separation unit that separates a multiplex bit stream in which the reference viewpoint video bit stream, the depth map bit stream, the residual video bit stream, and a bit stream containing auxiliary information which contains information indicating respective positions of the reference viewpoint and the auxiliary viewpoint are multiplexed, into the reference viewpoint video bit stream, the depth map bit stream, and the residual video bit stream, and the auxiliary information, respectively, and

wherein the bit stream separation unit comprises:

a reference viewpoint video bit stream separation unit that separates, from the multiplex bit stream, a bit stream having the first identification information immediately after the start code as the reference viewpoint video bit stream, and outputs the separated reference viewpoint video bit stream to the reference viewpoint video decoding unit;

a depth map bit stream separation unit that separates, from the multiplex bit stream, a bit stream having the second identification information and the third identification information in this order, immediately after the start code, as the depth map bit stream, and outputs the separated bit stream with deleted therefrom the second identification information and the third identification information, to the depth map decoding unit;
a residual video bit stream separation unit that separates, from the multiplex bit stream, a bit stream having the second identification information and the fourth identification information in this order immediately after the start code, and outputs the separated bit stream with deleted therefrom the second identification information and the fourth identification information, to the residual video decoding unit; and
an auxiliary information separation unit that separates, from the multiplex bit stream, a bit stream having the second identification information and the fifth identification information in this order immediately after the start code, as the auxiliary information bit stream, and outputs the separated bit stream with deleted therefrom the second identification information and the fifth identification information as the auxiliary information, to the projected video synthesis unit.

# FIG.1

FIG.2

EP 2 797 327 A1

# FIG.3A

# FIG.3B

# FIG.4

Left
viewpoint
depth map

Left
synthesized
depth map

Reference
viewpoint
depth map

Ld

Md

Cd

Encoded
depth map

Depth map
bit stream

md

Decoded left
synthesized
depth map

M'd

Left viewpoint
projected
depth map

L'd

Left residual
video

Encoded
residual
video

Residual video
bit stream

lv

Lv

Reference
viewpoint video

Left viewpoint
video

−

L

Left viewpoint
projected video

Lc

C

OH

Encoded
reference
video

Reference
viewpoint video
bit stream

c

Lh

Hole mask

## FIG.5A

## FIG.5B

# FIG.6

Object (background)

Object (foreground)

$\sim$ M'd , L'd , Pd

Pixel of
interest

Right
neighboring
pixel

$\sim$ Lh

Hole mask

FIG.7

EP 2 797 327 A1

FIG.8

Left specified viewpoint video → P

25

252

252c — Hole filling processing unit

252b — Residual video pixel copying unit
$P_1$

252a — Specified viewpoint video projection unit (Residual video)
$P^{Lv}$

251

$P^c$

251e — Hole mask expansion unit
$P_2h$

251d — Median filter
$P_2{}^c$ , $P_1h$

251c — Reference viewpoint video pixel copying unit
$P_1{}^c$

251b — Specified viewpoint video projection unit (Reference video)

251a — Hole pixel detection unit
$P_1h$

$P_h$

$P^c$

Reference viewpoint video — C'

Left specified viewpoint depth map — Pd

Left residual video — L'v

FIG.9

Reference viewpoint video

Reference viewpoint video bit stream → Encoded reference viewpoint video (c) → C' → Reference viewpoint video

Decoded left synthesized depth map

Left specified viewpoint depth map

Depth map bit stream → Encoded depth map (md) → M'd → Pd → Occlusion hole non-detection area → P → Left specified viewpoint video

Left residual video

Residual video bit stream → Encoded residual video (lv) → L'v

EP 2 797 327 A1

# FIG.10

START

| Reference viewpoint video encoding processing | S11 |

| Depth map synthesis processing | S12 |

| Depth map encoding processing | S13 |

| Depth map decoding processing | S14 |

| Projected video prediction processing | S15 |

| Residual video encoding processing | S16 |

END

# FIG.11

START

| Reference viewpoint video decoding processing | S21 |

| Depth map decoding processing | S22 |

| Depth map projection processing | S23 |

| Residual video decoding processing | S24 |

| Projection video synthesis processing | S25 |

END

# FIG.12

Reference viewpoint video  C

Left viewpoint video  L

Pt

Left specified viewpoint  F′d

Right specified viewpoint  Qt

Right viewpoint video  R

Left viewpoint depth map  Ld

Reference viewpoint depth map  Cd

Right viewpoint depth map  Rd

1A

Reference viewpoint video encoding unit  c  →  Reference viewpoint video bit stream

11

Separation unit  18a  →  M₂′d  →  Expansion unit  18b  →  M′d

N₂′d  →  Expansion unit  18c  →  N′d

Depth map separation unit  18

Left projected video prediction unit  →  Lv

Right projected video prediction unit  →  Rv

15L  15R  15A

Reduction unit  19a  →  L₂v  →  Joining unit  19c  →  Fv

Reduction unit  19b  →  R₂v

Residual video framing unit  19

Residual video encoding unit  16A  →  fv  →  Residual video bit stream

14A  Depth map decoding unit

Left depth map synthesis unit  12L  →  Md

Right depth map synthesis unit  12R  →  Nd

12A

Reduction unit  17a  →  M₂d  →  Joining unit  17c  →  Fd

Reduction unit  17b  →  N₂d

Depth map framing unit  17

Depth map encoding unit  13A  →  fd  →  Depth map bit stream

EP 2 797 327 A1

# FIG.13

FIG.14

# FIG.15

EP 2 797 327 A1

# FIG.16

START

Reference viewpoint video encoding processing $\sim$ S31

Depth map synthesis processing $\sim$ S32

Depth map framing processing $\sim$ S33

Depth map encoding processing $\sim$ S34

Depth map decoding processing $\sim$ S35

Depth map separation processing $\sim$ S36

Projected video prediction processing $\sim$ S37

Residual video framing processing $\sim$ S38

Residual video encoding processing $\sim$ S39

END

# FIG.17

```
        START

Reference viewpoint video decoding        S51
            processing

  Depth map decoding processing           S52

  Depth map separation processing         S53

  Depth map projection processing         S54

  Residual video decoding processing      S55

  Residual video separation processing    S56

  Projected video synthesis processing    S57

          END
```

EP 2 797 327 A1

# FIG.18A

Left synthesized depth map — Md

Right synthesized depth map — Nd

Left reduced synthesized depth map — $M_2d$

Framed depth map — Fd

Right reduced synthesized depth map — $N_2d$

Encoded depth map — fd

Depth map bit stream

# FIG.18B

Encoded residual video — fv

Residual video bit stream

Left reduced residual video — $L_2v$

Framed residual video — Fv

Right reduced residual video — $R_2v$

Left residual video — Lv

Right residual video — Rv

95

FIG.19

# FIG.20

# FIG.21A

# FIG.21B

$15C_L$

153

C'

Left viewpoint
projection unit

$L'_C$

154

Residual
calculation unit

Lv

L

FIG.22

# FIG.23

Depth map bit stream → Encoded depth map $g_2d$ → Decoded reduced synthesized depth map $G_2'd$ → Decoded synthesized depth map $G'd$ → Left specified viewpoint depth map $Pd$

Residual video bit stream → Encoded residual video $fv$ → Framed residual video (decoding) $F'v$ → Left reduced residual video $L_2'v$ → Left residual video $L'v$ → Left specified viewpoint video $P$

Reference viewpoint video bit stream → Encoded reference video $c$ → Reference viewpoint video $C'$ → Reference viewpoint video

Right reduced residual video $R_2'v$ → Right residual video $R'v$ → Right specified viewpoint video $Q$

Right specified viewpoint projected depth map $Qd$

EP 2 797 327 A1

FIG.24A

# FIG.24B

# FIG.25

START

Reference viewpoint video encoding processing — S71

Depth map synthesis processing — S72

Depth map encoding processing — S73

Depth map restoration processing — S74

Projected video prediction processing — S75

Residual video framing processing — S76

Residual video encoding processing — S77

END

# FIG.26

```
                    ┌──────────────┐
                    │    START     │
                    └──────┬───────┘
                           │
                           ▼
        ┌──────────────────────────────────────┐
        │  Reference viewpoint video decoding   │  ╮ S91
        │             processing                │  ╯
        └──────────────────┬───────────────────┘
                           │
                           ▼
        ┌──────────────────────────────────────┐
        │     Depth map restoring processing    │  ╮ S92
        │                                       │  ╯
        └──────────────────┬───────────────────┘
                           │
                           ▼
        ┌──────────────────────────────────────┐
        │     Depth map projection processing   │  ╮ S93
        │                                       │  ╯
        └──────────────────┬───────────────────┘
                           │
                           ▼
        ┌──────────────────────────────────────┐
        │   Residual video decoding processing  │  ╮ S94
        │                                       │  ╯
        └──────────────────┬───────────────────┘
                           │
                           ▼
        ┌──────────────────────────────────────┐
        │  Residual video separation processing │  ╮ S95
        │                                       │  ╯
        └──────────────────┬───────────────────┘
                           │
                           ▼
        ┌──────────────────────────────────────┐
        │   Projected video synthesis processing│  ╮ S96
        │                                       │  ╯
        └──────────────────┬───────────────────┘
                           │
                           ▼
                    ┌──────────────┐
                    │     END      │
                    └──────────────┘
```

# FIG.27

# FIG.28

Auxiliary
information    h

502
Auxiliary
information
header addition
unit

501

A1

Reference
viewpoint video
bit stream    c

A2

B    Multiplex
bit
stream

Depth map bit
stream    $g_2d$

503
Depth header
addition unit

A3

Residual video
bit stream    fv

504
Residual header
addition unit

A4

50

**FIG.29A**

70

| Start code | Single viewpoint video header | Bit stream body |
|---|---|---|
| 701 | 702 | 703 |

**FIG.29B**

71

| Start code | Single viewpoint video header | Bit stream body |
|---|---|---|
| 701 | 702 | 703 |

**FIG.29C**

72

| Start code | Stereoscopic video header | Depth map flag | Single viewpoint video header | Bit stream body |
|---|---|---|---|---|
| 701 | 704 | 705 | 702 | 703 |

**FIG.29D**

73

| Start code | Stereoscopic video header | Residual flag | Single viewpoint video header | Bit stream body |
|---|---|---|---|---|
| 701 | 704 | 706 | 702 | 703 |

**FIG.29E**

74

| Start code | Stereoscopic video header | Auxiliary information flag | Auxiliary information body |
|---|---|---|---|
| 701 | 704 | 707 | 708 |

# FIG.30

| Parameter | Value and Explanation |
|---|---|
| Mode | 0: 2 view 1 depth, 1: 3 view 2 depth, 2: 3 view 1 depth, etc. |
| Shortest distance | Closest object distance (100 cm, etc.) |
| Farthest distance | Farthest object distance (1000 cm, etc.) |
| Focal length | Focal length of camera (equivalent to 8000 pixels, etc.) |
| Left viewpoint coordinate value | X coordinate value of left camera (−10 cm, etc.) |
| Reference viewpoint coordinate value | X coordinate value of center camera as reference viewpoint (0 cm, etc.) |
| Right viewpoint coordinate value | X coordinate value of right camera (+10 cm, etc.) |

FIG.31

EP 2 797 327 A1

# FIG.32

Multiplex
bit stream

601

Reference
viewpoint video
bit stream
separation unit

c

Reference
viewpoint video
bit stream

602

Depth map bit
stream
separation unit

$g_2d$

Depth map
bit stream

603

Residual video
bit stream
separation unit

fv

Residual video
bit stream

604

Auxiliary
information
separation unit

h

Auxiliary
information

60

# FIG.33

```
┌─────────────────────┐
│        START        │
└─────────────────────┘
           │
           ▼
┌─────────────────────────────────────┐
│ Reference viewpoint video encoding   │   S111
│ processing                           │
└─────────────────────────────────────┘
           │
           ▼
┌─────────────────────────────────────┐
│ Depth map synthesis processing       │   S112
└─────────────────────────────────────┘
           │
           ▼
┌─────────────────────────────────────┐
│ Depth map encoding processing        │   S113
└─────────────────────────────────────┘
           │
           ▼
┌─────────────────────────────────────┐
│ Depth map restoration processing     │   S114
└─────────────────────────────────────┘
           │
           ▼
┌─────────────────────────────────────┐
│ Projected video prediction processing│   S115
└─────────────────────────────────────┘
           │
           ▼
┌─────────────────────────────────────┐
│ Residual video encoding processing   │   S116
└─────────────────────────────────────┘
           │
           ▼
┌─────────────────────────────────────┐
│ Bit stream multiplexing processing   │   S117
└─────────────────────────────────────┘
           │
           ▼
┌─────────────────────┐
│         END         │
└─────────────────────┘
```

# FIG.34

```
                    START

                      │
                      ▼
        Bit stream separation processing          S121

                      │
                      ▼
    Reference viewpoint video decoding processing  S122

                      │
                      ▼
        Depth map restoration processing           S123

                      │
                      ▼
        Depth map projection processing            S124

                      │
                      ▼
        Residual video restoration processing      S125

                      │
                      ▼
        Projected video synthesis processing       S126

                      │
                      ▼
                     END
```

# FIG.35

**INTERNATIONAL SEARCH REPORT**

| International application No. |
|---|
| PCT/JP2012/076045 |

**A. CLASSIFICATION OF SUBJECT MATTER**
*H04N13/00*(2006.01)i, *H04N7/32*(2006.01)i

According to International Patent Classification (IPC) or to both national classification and IPC

**B. FIELDS SEARCHED**

Minimum documentation searched (classification system followed by classification symbols)
H04N13/00, H04N7/32

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-191396 A (Matsushita Electric Industrial Co., Ltd.), 21 July 1998 (21.07.1998), paragraphs [0009] to [0031]; fig. 1 to 4 & US 6163337 A | 1-33 |
| A | US 2011/0122230 A1 (THOMSON LICENSING), 26 May 2011 (26.05.2011), paragraphs [0045] to [0067]; fig. 1 & JP 2011-528882 A    & EP 2301256 A & KR 10-2011-0039537 A   & CN 102106151 A | 1-33 |
| A | JP 2008-263528 A (Nagoya University), 30 October 2008 (30.10.2008), paragraphs [0016] to [0048]; fig. 7 to 21 (Family: none) | 1-33 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18 October, 2012 (18.10.12) | 13 November, 2012 (13.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2012/076045 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | JP 2009-212664 A  (Nippon Telegraph and Telephone Corp.), 17 September 2009 (17.09.2009), paragraphs [0007], [0027] to [0057]; fig. 1 to 4 (Family: none) | 1-33 |
| A | JP 2010-534878 A  (Koninklijke Philips Electronics N.V.), 11 November 2010 (11.11.2010), paragraphs [0050] to [0067]; fig. 5, 6 & US 2010/0194856 A1      & EP 2174511 A & KR 10-2010-0051675 A   & CN 101822067 A | 1-33 |

Form PCT/ISA/210 (continuation of second sheet) (July 2009)

**EP 2 797 327 A1**

### Patent documents cited in the description

- JP 2010157821 A